# EUROPEAN PATENT APPLICATION

(11) **EP 4 421 372 A1**
(43) Date of publication of application: **28.08.2024**
(21) Application number: 24159520.6
(22) Date of filing: 23.02.2024
(51) Int. Cl.: F16M 11/04, H04M 1/04, F16M 11/10, F16M 11/38, F16M 13/00, F16M 13/02

(54) **MULTI-USE MOUNT**

(30) Priority: 24.02.2023 US 202363486883 P; 12.10.2023 US 202363589824 P; 15.02.2024 US 202418442712
(71) Applicant: Kenu Inc., San Francisco, CA 94103 (US)
(72) Inventor: Yao, David E., San Francisco, 94103 (US); Minn, Kenneth Y., San Francisco, 94103 (US)
(74) Representative: Dehns

(57) **Abstract**

Multi-use mount (102) adapted to hold a portable electronic device (202), in a plurality of different positions, comprising a main body (112) configured to be selectively attached to the portable electronic device to thereby attach the multi-use mount to the portable electronic device, a neck (162) pivotably connected to the main body, and a base (132) pivotably connected to the neck. The multi-use mount is configured to be positioned in the plurality of different positions by pivoting at least a portion of at least one of the main body, the neck, or the base, relative to at least a further portion of at least one of the main body, the neck, or the base. The plurality of different positions include at least a closed position and a standing easel position. The base can include one or more magnets (155).

## Description

### PRIORITY CLAIM

This present application claims priority to claims priority to U.S. Non-Provisional Patent Application No. 18/442,712, filed February 15, 2024, U.S. Provisional Patent Application No. 63/589,824, filed October 12, 2023, and U.S. Provisional Patent Application No. 63/486,883, filed February 24, 2023.

### FIELD OF TECHNOLOGY

Embodiments of the present technology generally relate to apparatuses for mounting and holding portable electronic devices, such as smartphones, small music and/or video recorders and small music and/or video players, but not limited thereto.

### BACKGROUND

Smartphones and other portable electronic devices have become so ubiquitous that numerous different types of mounts have been developed and sold to make it easier for people to always keep their portable electronic devices viewable and accessible. For example, because people often rely on their smartphones for turn-by-turn driving directions while in their vehicles, car phone mounts have been developed and sold. For another example, because people often rely on their smartphones for watching movies, browsing the Internet, and emailing while traveling on airplanes, mounts and stands have been developed and sold for securing smartphones to pockets in airplane seatbacks and/or to folding trays. For still other examples, rings and sockets are often attached to the backsides of smartphones to assist people with holding or gripping their smartphones in their hands. Additionally, desk stands are available to hold smartphones on tabletops or other horizontal surfaces. Further, mounts with flexible legs that can wrap around poles to enable smartphones to be attached to poles, and the like, to hold the smartphones still when taking photographs and videos. Individuals often end up purchasing numerous different types of mounts to serve various different purposes, which can be expensive, and also requires that the individuals remember to bring the appropriate types of mounts with them when traveling.

### SUMMARY

Certain embodiments of the present technology are directed to multi-use mounts adapted to hold a portable electronic device, such as a smartphone, in a plurality of different positions. In accordance with certain embodiments, a multi-use mount comprises a main body configured to be selectively attached to the portable electronic device to thereby attach the multi-use mount to the portable electronic device, a neck pivotably connected to the main body, and a base pivotably connected to the neck. The multi-use mount is configured to be positioned in the plurality of different positions by pivoting at least a portion of at least one of the main body, the neck, or the base, relative to at least a further portion of at least one of the main body, the neck, or the base. The plurality of different positions include at least a closed position and a standing easel position. In accordance with certain embodiments, the base includes one or more magnets configured to enable the multi-use mount, and the portable electronic device attached thereto, to be selectively magnetically attached to a ferromagnetic metal surface or a magnetic surface. When the multi-use mount is in the closed position at least a portion of the base is flush against at least a portion of the main body. When the multi-use mount is in the standing easel position the main body is supported by the neck above the base.

In accordance with certain embodiments, the plurality of different positions also include and a vent louver attachment position. When the multi-use mount is in the vent louver attachment position at least a portion of the base extends generally perpendicularly relative to the main body and is configured to be attached to a horizontal louver of a vent of a vehicle.

In accordance with certain embodiments, the multi-use mount further comprises first and second hooks protruding from the base, and a recess in the base between where the first hook protrudes and the second hook protrudes. The first and the second hooks are configured to selectively hook onto a horizontal louver of a vent of a vehicle to thereby mount the multi-use mount, and the portable electronic device attached hereto, to the horizontal louver of the vent of the vehicle when the multi-use mount is in the vent louver attachment position. The recess is configured to enable the first and second hooks to be placed on either side of, and thereby straddle, a vertical component of the vent of the vehicle, when the first and second hooks are hooked onto the horizontal louver of the vent of the vehicle.

In accordance with certain embodiments, the multi-use mount further comprises first and second cavities in the main body that are configured to accept the first and second hooks when the multi-use mount is in the closed position.

In accordance with certain embodiments, the base is pivotably connected to the neck by a base-to-neck hinge located at an innermost end of the recess in the base. In accordance with alternative embodiments, the base is pivotably connected to the neck by a base-to-neck hinge located at an outer peripheral end of the base.

In accordance with certain embodiments, the main body includes a magnetic portion configured to selectively magnetically attach the main body to a magnetic portion of the portable electronic device, or to a magnetic portion of a case for the portable electronic device. In certain such embodiments, the magnetic portion of the main body comprises a magnetic ring.

In accordance with certain embodiments, when the multi-use mount is in the closed position a peripheral footprint of the main body has same length and width dimensions as a peripheral footprint of the base. In certain such embodiments, the base includes a trough that is configured to accept at least a portion of the neck when the multi-use mount is in the closed position, and at least a majority of the neck is sandwiched between the main body and the base when the multi-use mount is in the closed position.

In accordance with certain embodiments, the neck includes a first neck portion pivotably connected to a second neck portion, and the base includes a first base portion pivotally connected to a second base portion.

In accordance with certain embodiments, a thickness of the multi-use mount is less than 10 millimeters when the multi-use mount is in the closed position. In accordance with certain embodiments, the thickness of the multi-use mount is less than 6 millimeters when the multi-use mount is in the closed position.

In accordance with certain embodiments, the neck is pivotably connected to the main body by a ball joint that enables to main body to be rotated relative to the neck with three degrees of freedom.

In accordance with certain embodiments, the plurality of different positions further include at least a compact-disc (CD) slot attachment position, a selfie stick position, a pole attachment position, a finger loop grip position, an airplane tray attachment position, and an airplane pocket attachment position.

In accordance with certain embodiments, the main body includes a wireless charger that is configured to charge a portable electronic device that is at least one of held by or attached to the multi-use mount.

In accordance with certain embodiments, a multi-use mount, which is adapted to hold a portable electronic device in a plurality of different positions, comprises a main body configured to be selectively attached to the portable electronic device to thereby attach the multi-use mount to the portable electronic device, a neck pivotably connected to the main body, the neck including a first neck portion pivotably connected to a second neck portion by an intra-neck hinge. The multi-use mount also includes a base pivotably connected to the neck. The multi-use mount is configured to be positioned in at least a closed position and a standing easel position. In certain embodiments, the multi-use mount is also capable of being configured in, a vent louver attachment position and a CD slot attachment position. In certain embodiments, the multi-use mount is also capable of being configured in a pole attachment position, a finger loop grip position, an airplane tray attachment position, and an airplane pocket attachment position.

In accordance with certain embodiments, the neck is pivotably connected to the main body by a neck-to-main body ball joint.

In accordance with certain embodiments, the main body includes a magnetic portion configured to selectively magnetically attach the main body to a magnetic portion of the portable electronic device, or to a magnetic portion of a case for the portable electronic device.

In accordance with certain embodiments, a thickness of the multi-use mount is less than 10 millimeters when the multi-use mount is in the closed position. In accordance with certain embodiments, a thickness of the multi-use mount is less than 6 millimeters when the multi-use mount is in the closed position.

In accordance with certain embodiments, the main body includes a wireless charger that is configured to charge a portable electronic device that is at least one of held by or attached to the multi-use mount. In certain such embodiments, a thickness of the multi-use mount is less than 12 millimeters when the multi-use mount is in the closed position.

Certain embodiments of the present technology are directed to a system, comprising a multi-use mount and a wireless charging adaptor. The multi-use mount includes a main body, a neck, and a base. The main body is configured to be selectively attached to a portable electronic device to thereby attach the multi-use mount to the portable electronic device. The neck is pivotably connected to the main body. The base is pivotably connected to the neck. The wireless charging adaptor is configured to be selectively attached to the multi-use mount such that the wireless charging adaptor is sandwiched between the main body of the multi-use mount and a portable electronic device that is to be held by the multi-use mount and charged by the wireless charging adaptor. The multi-use mount is capable of being configured in at least a closed position and a standing easel position, when the wireless charging adaptor is attached to the multi-use mount, as well as when the wireless charging adaptor is detached from the multi-use mount. In certain embodiments, the multi-use mount is also capable of being configured in a vent louver attachment position and a CD slot attachment position, when the wireless charging adaptor is attached to the multi-use mount, as well as when the wireless charging adaptor is detached from the multi-use mount. In certain embodiments, the multi-use mount is also capable of being configured in a pole attachment position, a finger loop grip position, an airplane tray attachment position and an airplane pocket attachment position, when the wireless charging adaptor is attached to the multi-use mount, as well as when the wireless charging adaptor is detached from the multi-use mount.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Embodiments of the present technology may best be understood by referring to the following description and accompanying drawings, in which common reference characters on the drawings denote the same or similar elements throughout the various views and embodiments.
FIGS. 1A and 1B are respectively front and rear perspective views of a multi-use mount, according to an embodiment of the present technology, when the multi-use mount is in a completely unfolded and substantially flat position. FIGS. 1C, 1D, 1E, 1F and 1G are respectively front, back, side, top and bottom views of the multi-use mount in the completely unfolded and substantially flat position.

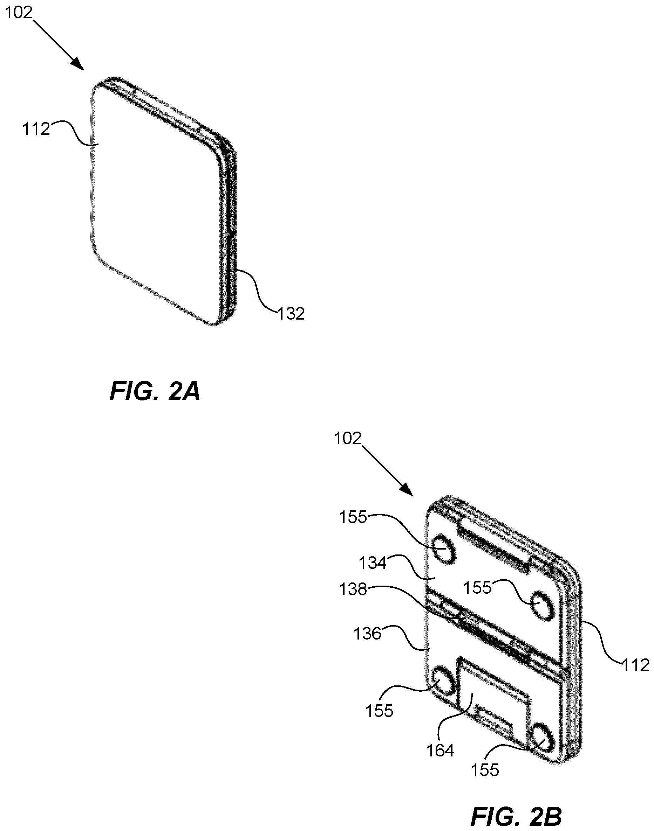

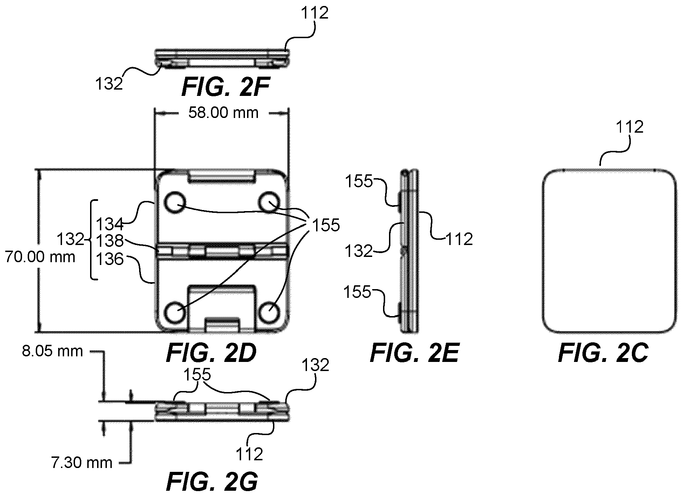

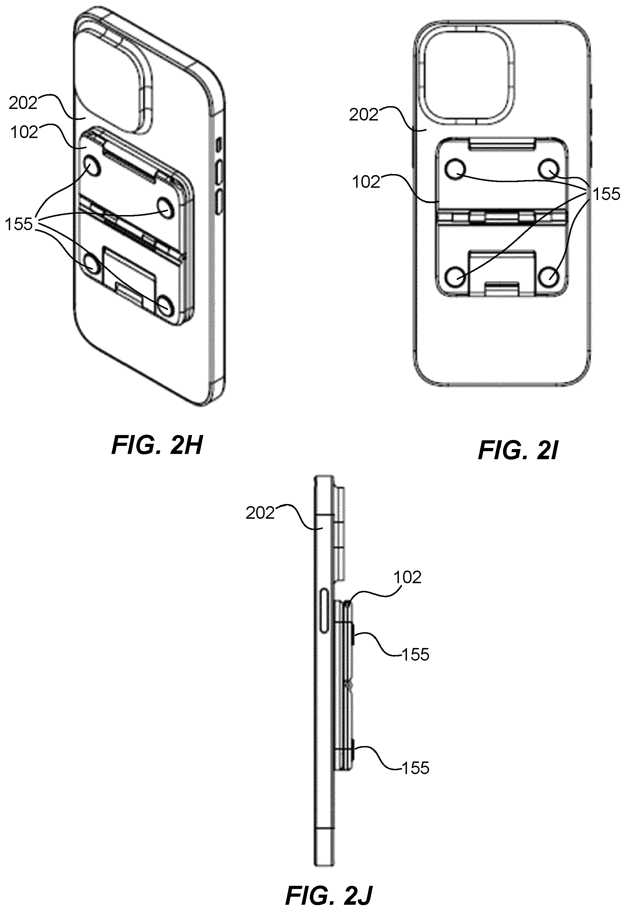

FIGS. 2A and 2B are respectively front and rear perspective views of the multi-use mount in a completely folded position, which can also be referred to as a closed position. FIGS. 2C, 2D, 2E, 2F and 2G are respectively front, back, side, top and bottom views of the multi-use mount in the completely folded (aka closed) position. FIG. 2H is a rear perspective view of the multi-use mount in the completely folded (aka closed) position and magnetically attached to the rear (aka backside) of a smartphone. FIGS. 2I and 2J are respectively rear and side views of the multi-use mount in the completely folded (aka closed) position and magnetically attached to the rear of a smartphone.
FIGS. 3A and 3B are respectively front and rear perspective views of the multi-use mount in a standing easel position. FIGS. 3C, 3D, 3E, 3F and 3G are respectively front, back, side, top and bottom views of the multi-use mount in the standing easel position. FIGS. 3H, 3I, 3J and 3K are respectively front perspective, rear perspective, front and side views of the multi-use mount in the standing easel position holding a smartphone in its portrait orientation.
FIGS. 4A and 4B are two different rear perspective views of the multi-use mount in a vent louver attachment position. FIGS. 4C, 4D, 4E, 4F and 4G are respectively front, back, side, top and bottom views of the multi-use mount in the vent louver attachment position.

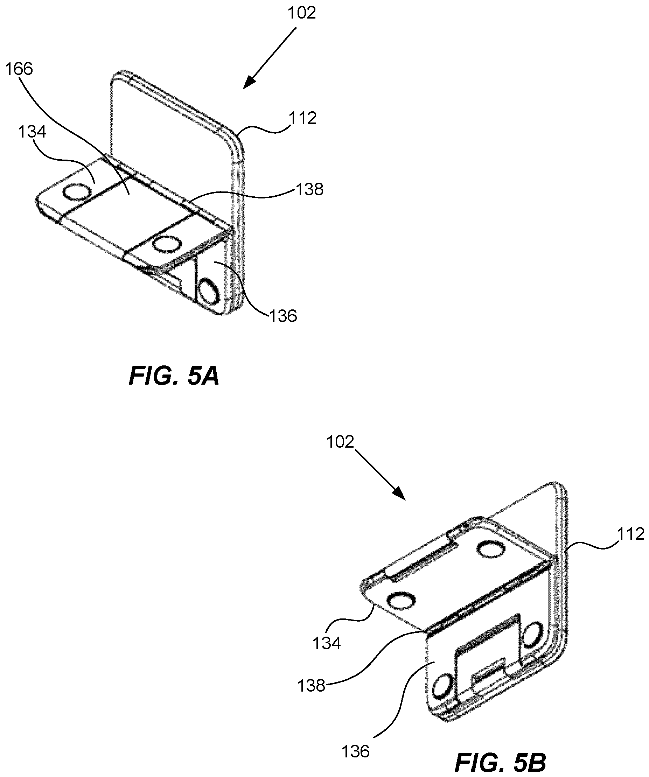

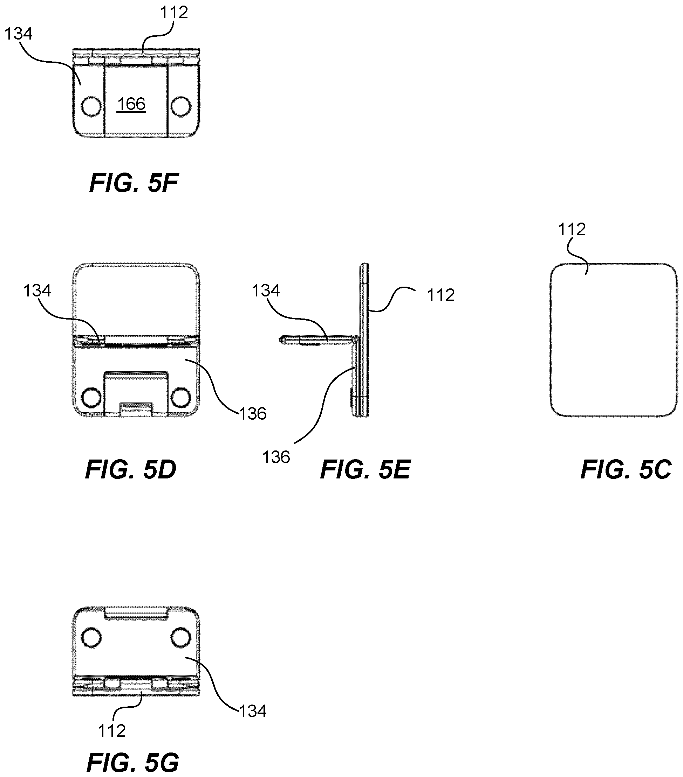

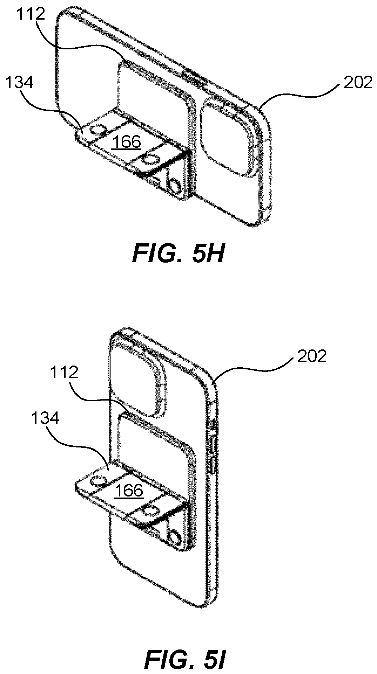

FIGS. 5A and 5B are two different rear perspective views of the multi-use mount in a compact-disc (CD) slot attachment position. FIGS. 5C, 5D, 5E, 5F and 5G are respectively front, back, side, top and bottom views of the multi-use mount in the CD slot attachment position. FIG. 5H is a rear perspective view of the multi-use mount, in the CD slot attachment position, while the multi-use mount is magnetically attached to the rear of a smartphone that is in its landscape orientation. FIG. 5I is a rear perspective view of the multi-use mount, in the CD slot attachment position, while the multi-use mount is magnetically attached to a rear of a smartphone that is in its portrait orientation.
FIGS. 6A and 6B are two different rear perspective views of the multi-use mount in a small diameter pole attachment position. FIGS. 6C, 6D, 6E, 6F and 6G are respectively front, back, side, top and bottom views of the multi-use mount in the small diameter pole attachment position.
FIGS. 7A and 7B are two different rear perspective views of the multi-use mount in a large diameter pole attachment position. FIGS. 7C, 7D, 7E, 7F and 7G are respectively front, back, side, top and bottom views of the multi-use mount in the large diameter pole attachment position.
FIGS. 8A and 8B are two different rear perspective views of the multi-use mount in a finger loop grip position. FIGS. 8C, 8D, 8E, 8F and 8G are respectively front, back, side, top and bottom views of the multi-use mount in the finger loop grip position.
FIGS. 9A and 9B are two different rear perspective views of the multi-use mount in a upright airplane tray attachment position. FIGS. 9C, 9D, 9E, 9F and 9G are respectively front, back, side, top and bottom views of the multi-use mount in the upright airplane tray attachment position.

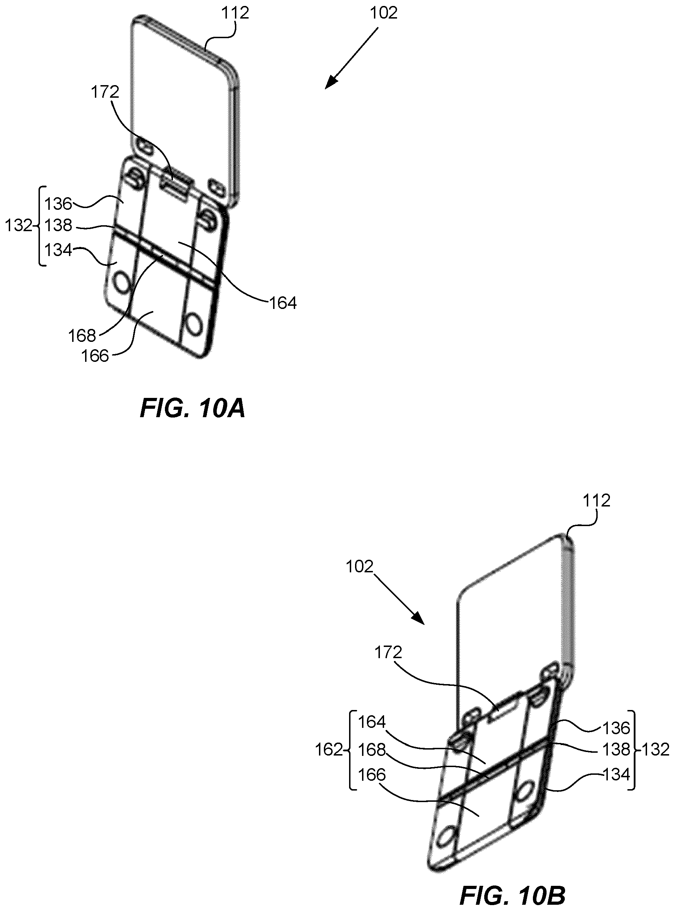

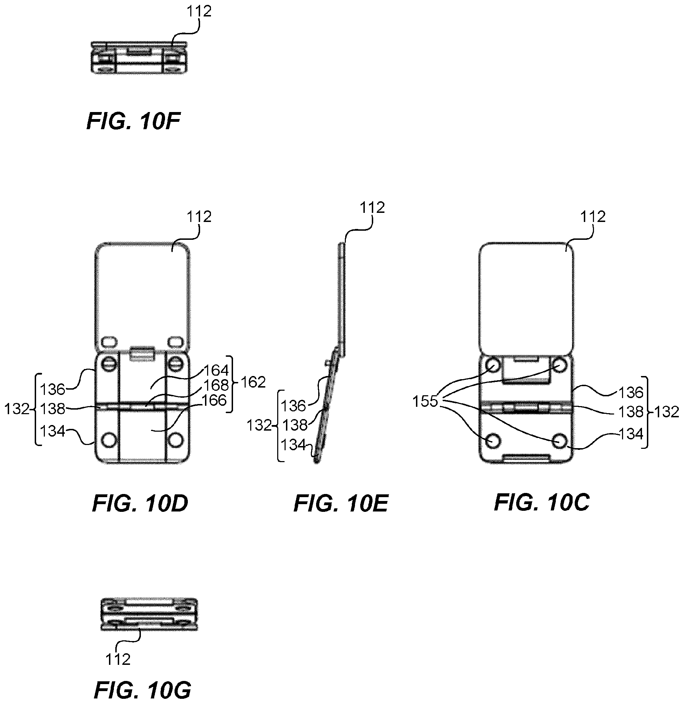

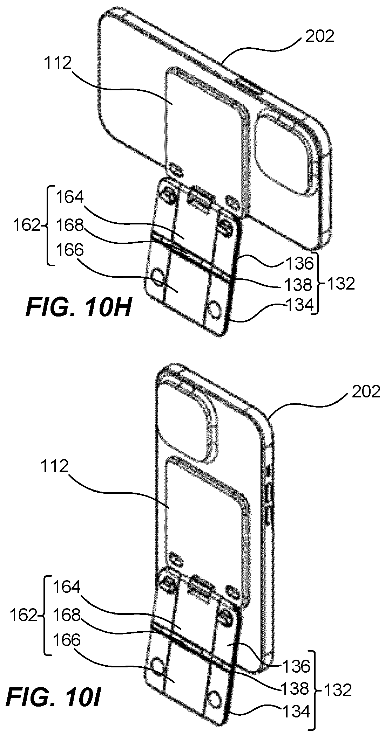

FIGS. 10A and 10B are two different rear perspective views of the multi-use mount in a first airplane pocket attachment position. FIGS. 10C, 10D, 10E, 10F and 10G are respectively front, back, side, top and bottom views of the multi-use mount in the first airplane pocket attachment position. FIG. 10H shows the multi-use mount in the upright airplane tray attachment position, with the mount magnetically attached to the backside of a landscape oriented smartphone. FIG. 101 shows the multi-use mount in the upright airplane tray attachment position, with the mount magnetically attached to the backside of a portrait oriented smartphone.
FIGS. 11A and 11B are two different rear perspective views of the multi-use mount in a second airplane pocket attachment position. FIGS. 11C, 11D, 11E, 11F and 11G are respectively front, back, side, top and bottom views of the multi-use mount in the second airplane pocket attachment position.
FIGS. 12A and 12B are respectively front and rear perspective exploded views of the multi-use mount, according to an embodiment of the present technology.
FIGS. 13A-13D illustrate ranges of motion of various hinges of the multi-use mount, according to an embodiment of the present technology.
FIGS. 14A-14C illustrates alternative features, according to an embodiment of the present technology, for helping maintain the multi-use mount in a close position.
FIGS. 15A-15F illustrates further alternative features, according to an embodiment of the present technology, for helping maintain the multi-use mount in a close position.
FIGS. 16A and 16B are respectively front and rear perspective views of the multi-use mount, in accordance with an alternative embodiment, in a standing easel position.
FIGS. 17A and 17B are respectively front and rear perspective views of the multi-use mount shown in FIGS. 16A and 16B in a completely folded position, which can also be referred to as a closed position.
FIGS. 18A and 18B are respectively front and rear perspective exploded views of the multi-use mount of the embodiment shown in FIGS. 16A, 16B, 17A and 17B.

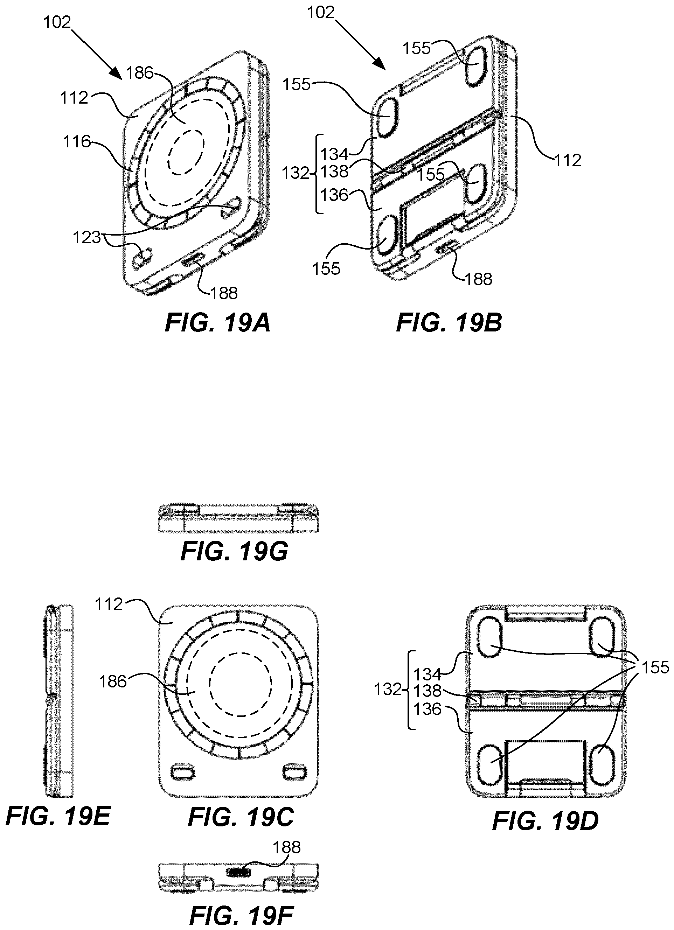

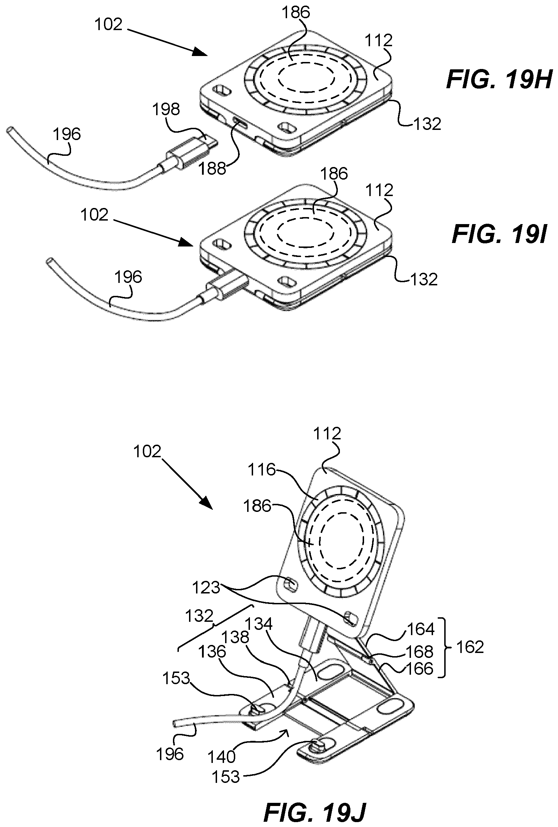

FIGS. 19A and 19B are respectively front and rear perspective views of a wireless charging multi-use mount, according to an embodiment of the present technology, in a completely folded position, which can also be referred to as a closed position. FIGS. 19C, 19D, 19E, 19F and 19G are respectively front, back, side, top and bottom views of the wireless charging multi-use mount, in the completely folded (aka closed) position. FIG. 19H is a perspective view of the wireless charging multi-use mount with a male end of a connector cable being moved towards a female connector plug of the wireless charging multi-use mount, and FIG. 191 shows the wireless charging multi-use mount after the male end of the connector cable has been inserted into the female connector plug of the mount. FIG. 19J is a front perspective view of the wireless charging multi-use mount in the standing easel position with the male end of the connector cable inserted into the female connector plug of the mount.

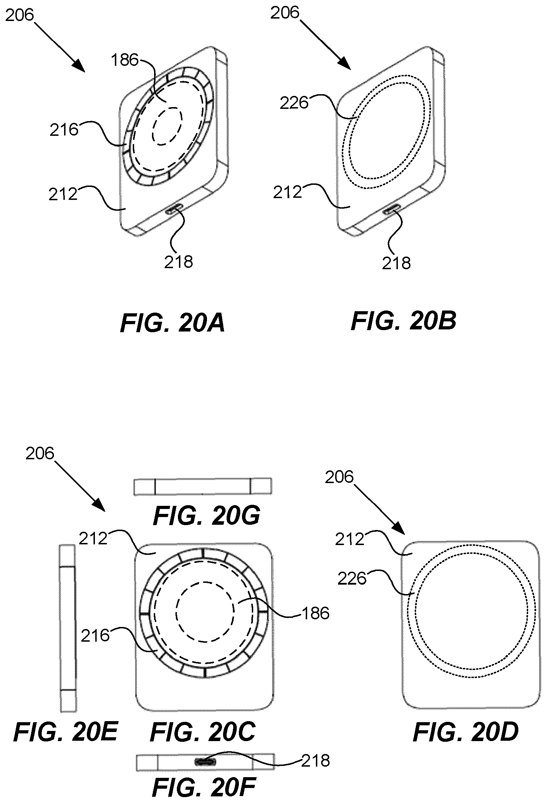

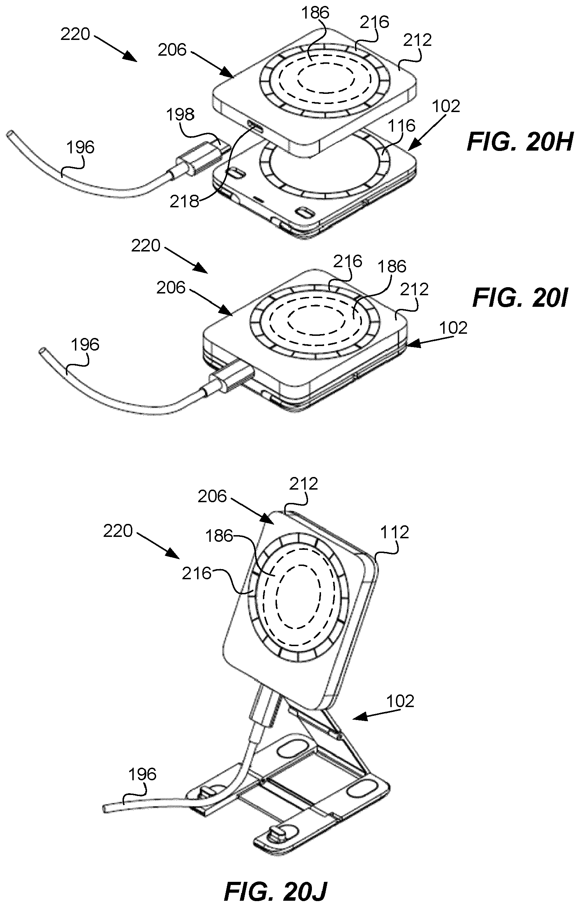

FIGS. 20A and 20B are respectively front and rear perspective views of a wireless charging adaptor for use with a multi-use mount, according to an embodiment of the present technology. FIGS. 20C, 20D, 20E, 20F and 20G are respectively front, back, side, top and bottom views of the wireless charging adaptor. FIG. 20H is a perspective view of the wireless charging adaptor with a male end of a connector cable being moved towards a female connector plug of the mount, and with the wireless charging adaptor positioned above a multi-use mount of an embodiment, and FIG. 20I shows the wireless charging adaptor after the male end of the connector cable has been inserted into the female connector plug of the wireless charging adaptor and after the wireless charging adaptor has been attached to the multi-use mount. FIG. 20J is a front perspective view of the wireless charging adaptor attached to the multi-use mount in a standing easel position with the male end of the connector cable inserted into the female connector plug of the wireless charging adaptor.
FIG. 21 is a front perspective view of a multi-use mount, according to another embodiment of the present technology, when the multi-use mount is in a completely unfolded and substantially flat position.
FIGS. 22A and 22B are, respectively, a rear perspective view and a side view of the multi-use mount in an alternative vent louver attachment position.
FIGS. 23A and 23B are, respectively, a rear perspective view and a side view of the multi-use mount in an alternative CD slot attachment position.
FIG. 24 is a front perspective view of the multi-use mount, according to an embodiment of the present technology, when the multi-use mount is in a completely unfolded and substantially flat position, where the joint between the main body and the neck is a ball joint.
FIGS. 25A and 25B are, respectively, a rear perspective view and a side view of the mount introduced in FIG. 24, while the mount is in a completely folded position, which can also be referred to as a closed position.
FIGS. 26A and 26B are, respectively, rear perspective view and a side view of the mount introduced in FIG. 24, while the mount is in a standing easel position, similar to the position shown in FIGS. 3A-3K.
FIGS. 27A and 27B are, respectively, a rear perspective view and a side view of the mount introduced in FIG. 24, while the mount is in a vent louver attachment position, similar to the position shown in FIGS. 4A-4G.
FIGS. 28A and 28B are, respectively, a rear perspective view and a side view of the mount introduced in FIG. 24, while the mount is in an alternative vent louver attachment position, similar to the position shown in FIGS. 22A-22B.
FIGS. 29A and 29B are, respectively, a rear perspective view and a side view of the mount introduced in FIG. 24, while the mount 102 is in a CD slot attachment position, similar to the position shown in FIGS. 5A-5I.
FIGS. 30A and 30B are, respectively, a rear perspective view and a side view of the mount introduced in FIG. 24, while the mount is in an alternative CD slot attachment position, similar to the position shown in FIGS. 23A-23B.
FIGS. 31A and 31B are, respectively, a rear perspective view and a side view of the mount introduced in FIG. 24, wherein portions of the mount are pivotally articulated to form a small triangular loop that can be wrapped around a pole, a fence, or a person's finger.
FIGS. 32A and 32B are, respectively, a rear perspective view and a side view of the mount introduced in FIG. 24 in a large diameter pole attachment position, similar to the position shown in FIGS. 7A-7E.
FIGS. 33A and 33B are, respectively, a rear perspective view and a side view of the mount introduced in FIG. 24 in a finger loop grip position, similar to the position shown in FIGS. 8A-8G.
FIGS. 34A and 34B are, respectively, a rear perspective view and a side view of the mount introduced in FIG. 24 in an upright airplane tray attachment position, similar to the position shown in FIGS. 11A-11G.
FIG. 35 is a front perspective view of the multi-use mount, according to still another embodiment of the present technology, when the multi-use mount is in a completely unfolded and substantially flat position.
FIGS. 36A and 36B are, respectively, a rear perspective view and a side view of the mount introduced in FIG. 35, while the mount is in a completely folded position, which can also be referred to as a closed position.
FIGS. 37A and 37B are, respectively, a rear perspective view and a side view of the mount introduced in FIG. 35, while the mount is in a standing easel position.
FIGS. 38A and 38B are, respectively, a rear perspective view and a side view of the mount introduced in FIG. 35, while the mount is in a vent louver attachment position.
FIGS. 39A and 39B are, respectively, a rear perspective view and a side view of the mount introduced in FIG. 35, while the mount is in an alternative vent louver attachment position.
FIGS. 40A and 40B are, respectively, a rear perspective view and a side view of the mount introduced in FIG. 35, while the mount is in a CD slot attachment position.
FIGS. 41A and 41B are, respectively, a rear perspective view and a side view of the mount introduced in FIG. 35, while the mount is in an alternative CD slot attachment position.
FIGS. 42A and 42B are, respectively, a rear perspective view and a side view of the mount introduced in FIG. 35, while the mount is in a finger loop grip position.
FIGS. 43A and 43B are, respectively, a rear perspective view and a side view of the mount introduced in FIG. 35, while the mount is in an alternative finger loop attachment position.
FIGS. 44A and 44B are, respectively, a rear perspective view and a side view of the mount introduced in FIG. 35 in a large diameter pole attachment position.
FIGS. 45A and 45B are, respectively, a rear perspective view and a side view of the mount introduced in FIG. 35 in a side grip position.
FIGS. 46A and 46B are, respectively, a rear perspective view and a side view of the mount introduced in FIG. 35 in a upright airplane tray attachment position.
FIGS. 47A and 47B are, respectively, a rear perspective view and a side view of the mount introduced in FIG. 24 in an alternative upright airplane tray attachment position.
FIG. 48 is a front perspective view of the multi-use mount, according to still another embodiment of the present technology, when the multi-use mount is in a completely unfolded and substantially flat position.
FIGS. 49A and 49B are, respectively, a rear perspective view and a side view of the mount introduced in FIG. 48, while the mount is in the completely folded position, which can also be referred to as the closed position.
FIGS. 50A and 50B are, respectively, a rear perspective view and a side view of the mount introduced in FIG. 48, while the mount is in a standing easel position.
FIGS. 51A and 51B are, respectively, a rear perspective view and a side view of the mount introduced in FIG. 48, while the mount is in a vent louver attachment position.
FIGS. 52A and 52B are, respectively, a rear perspective view and a side view of the mount introduced in FIG. 48, while the mount is in a CD slot attachment position.
FIGS. 53A and 53B are, respectively, a rear perspective view and a side view of the mount introduced in FIG. 48, while the mount is in a finger loop grip position.
FIGS. 54A and 54B are, respectively, a rear perspective view and a side view of the mount introduced in FIG. 48 in a large diameter pole attachment position.
FIGS. 55A and 55B are, respectively, a rear perspective view and a side view of the mount introduced in FIG. 48 in a side grip position.
FIGS. 56A and 56B are, respectively, a rear perspective view and a side view of the mount introduced in FIG. 48 in a upright airplane tray attachment position.
FIG. 57 is a front perspective view of the multi-use mount, according to still another embodiment of the present technology, when the multi-use mount is in a completely unfolded and substantially flat position.
FIGS. 58A and 58B are, respectively, a rear perspective view and a side view of the mount introduced in FIG. 57, while the mount is in the completely folded position, which can also be referred to as the closed position.
FIGS. 59A and 59B are, respectively, a rear perspective view and a side view of the mount introduced in FIG. 57, while the mount is in a standing easel position.
FIGS. 60A and 60B are, respectively, a rear perspective view and a side view of the mount introduced in FIG. 57, while the mount is in a vent louver attachment position.
FIGS. 61A and 61B are, respectively, a rear perspective view and a side view of the mount introduced in FIG. 57, while the mount is in a CD slot attachment position.
FIGS. 62A and 62B are, respectively, a rear perspective view and a side view of the mount introduced in FIG. 57, while the mount 102 is in a finger loop grip position.
FIGS. 63A and 63B are, respectively, a rear perspective view and a side view of the mount introduced in FIG. 57 in a large diameter pole attachment position.
FIGS. 64A and 64B are, respectively, a rear perspective view and a side view of the mount introduced in FIG. 57 in a upright airplane tray attachment position, which is also an airplane pocket attachment position.

### DETAILED DESCRIPTION

As noted above, smartphones and other portable electronic devices have become so ubiquitous that numerous different types of mounts have been developed and sold to make it easier for people to always keep their portable electronic devices viewable and accessible. This often leads to individuals purchasing numerous different types of mounts to serve various different purposes, which can be expensive, and also requires that the individuals remember to bring multiple appropriate different types of mounts with them when traveling. Embodiments of the present technology, as will be appreciated from the below description, overcome many of these problems by providing a multi-use mount that reduces and preferably eliminates the need for individuals to purchase numerous different types of mounts, and that reduces and preferably eliminates the need for individuals to remember to bring multiple appropriate different types of mounts with them when traveling.

Embodiments of the present technology are directed to a multi-use mount 102 that can be used to hold and mount a portable electronic device (such as, but not limited to, a smartphone) in various different manners and in various different positions for various different purposes. For example, the multi-use mount 102 can be used to as a stand to hold a smartphone in both a portrait orientation and a landscape orientation on a tabletop or other horizontal surface. The multi-use mount 102 can also be used to mount a smartphone in both a portrait orientation and a landscape orientation to vents of a vehicle, mount a smartphone in both a portrait orientation and a landscape orientation to a slot of a compact disc (CD) player of a vehicle, and mount a smartphone in both a portrait orientation and a landscape orientation to a dashboard of a vehicle. The multi-use mount 102 can additionally be used to secure a smartphone in both a portrait orientation and a landscape orientation to a folded-up tray on the backside of a seat on an airplane, as well as to a magazine or pamphlet pocket on the backside of a seat on an airplane. The multi-use mount 102 can also be used to secure a smartphone in both a portrait orientation and a landscape orientation in a person's hand. Additionally, the multi-use mount 102 can also be used to secure a smartphone in both a portrait orientation and a landscape orientation to a pole, fence, and/or the like. Further, the multi-use mount 102 can also be used to secure a smartphone in both a portrait orientation and a landscape orientation to a ferromagnetic metal surface, such as a door or side of a refrigerator, or a metal pole or metal fence, but not limited thereto. The multi-use mount 102 can also be used as a selfie stick (e.g., when in a completely unfolded and substantially flat position) to assist a user with capturing selfie type pictures or videos. The multi-use mount 102 is also referred to herein more succinctly as the mount 102. For the sake of simplicity, for much of the remaining description below, it is assumed that the portable electronic device with which the mount 102 is used is a smartphone. However, as just noted above, the mount 102 may also be used with other types of portable electronic devices, such as, but not limited to, relatively small music and/or video players and relatively small music and/or video recorders.

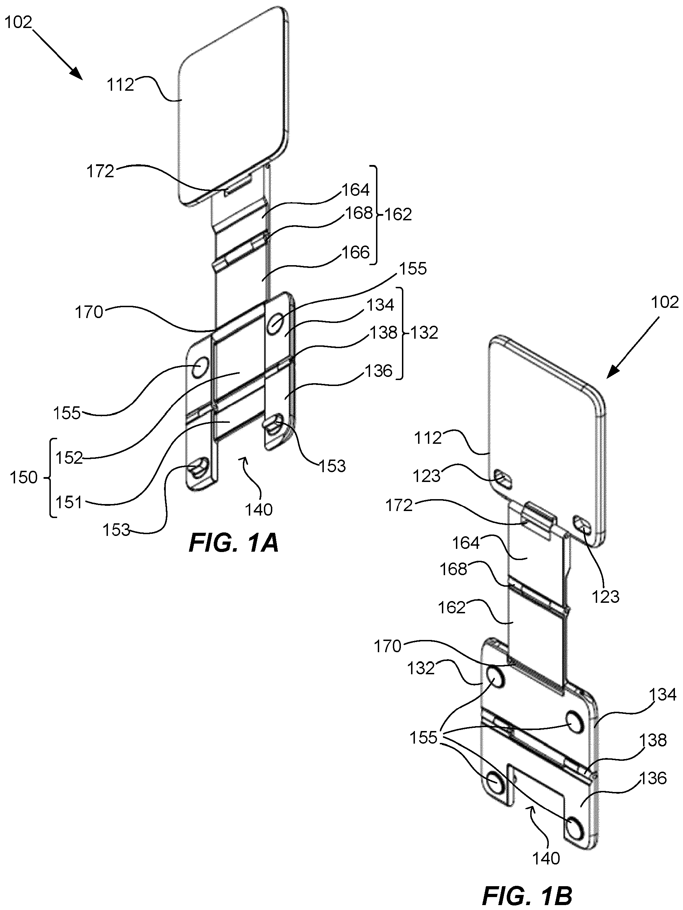

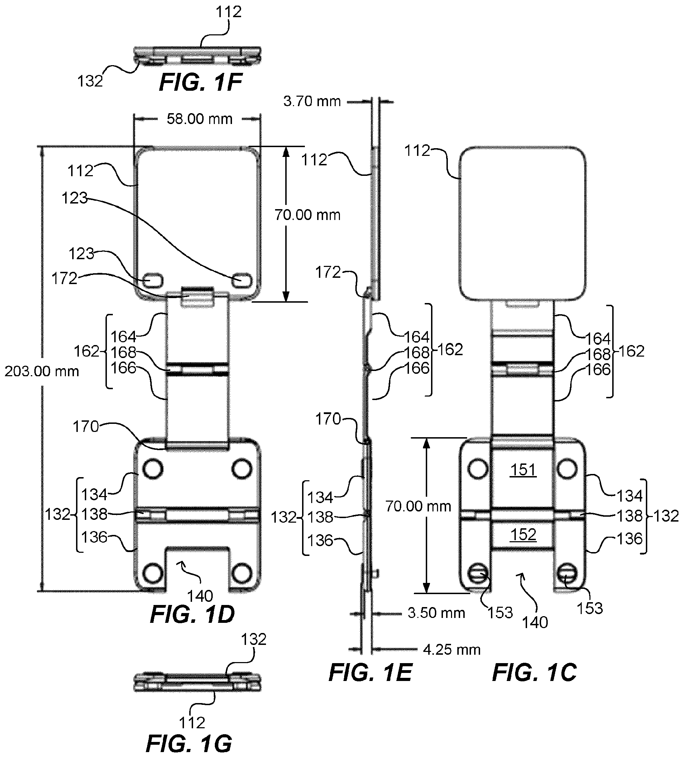

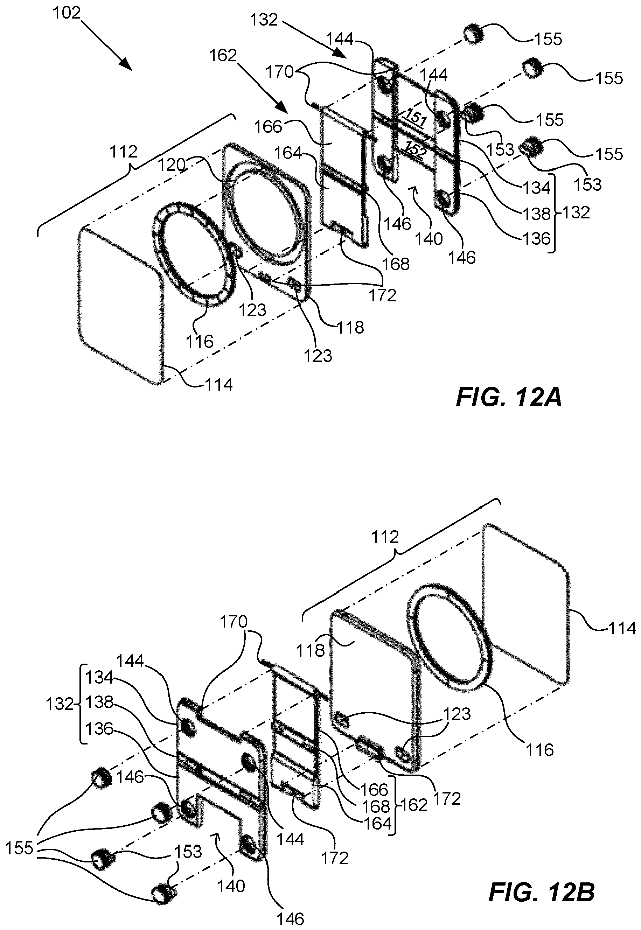

The mount 102 includes a main body 112, a base 132, and a neck 162 that connects the main body 112 to the base 132. FIGS. 1A and 1B are respectively front and rear perspective views of the mount 102 in a completely unfolded and substantially flat position where the main body 112, the neck 162 and the base 132 are generally in a same plane. FIGS. 1C, 1D, 1E, 1F and 1G are respectively front, back, side, top and bottom views of the mount 102 in the completely unfolded and substantially flat position. As will be described in additional details below, the main body 112 is selectively attachable to and detachable from a portable electronic device, such as, but not limited to, a smartphone. As will be described in additional details below, the neck 162 and the base 132 can be pivotably articulated in various different manners relative to one another to provide for various different mounting and holding configurations, making the mount 102 an all-in-one type of mount. As will be described in additional details below, e.g., with reference to the exploded views of the mount 102 in FIGS. 12A and 12B, the main body includes a magnetic ring 116 (or some other shaped magnet or array of magnets) that enables the main body 112 of the mount 102 to be magnetically coupled to a smartphone that includes a built in MagSafe magnet, has a MagSafe adaptor, has some other magnet (e.g., a magnetic ring or plate) attached to a backside of the smartphone, or to a smartphone being held by a phone case that has a MagSafe magnet (or some other shaped magnet or array of magnets) built into the phone case or attached to the phone case, or adhered to a backside of a smartphone. The magnetic ring 116 (or some other shaped magnet or array of magnets) can also be magnetically coupled (aka magnetically attached) to a ferromagnetic metal plate or ferromagnetic metal ring in or on a case for a smartphone or other portable electronic device, or otherwise attached (e.g. adhered) to the backside of a smartphone or other portable electronic device. While the mount 102 is in the completely unfolded and substantially flat position, e.g., as shown in FIGS. 1A and 1B, the mount 102 can used as a selfie-stick to assist a user with capturing selfie type pictures or videos while a smartphone is magnetically attached to the main body 112.

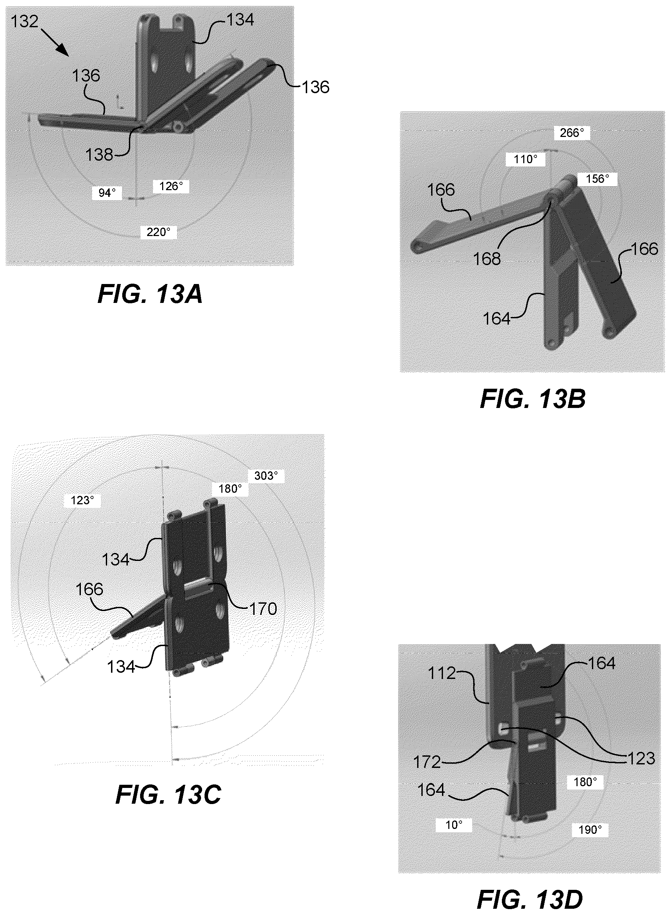

As can be appreciated from various FIGS., including FIGS. 1A and 12A, the base 132 includes a first base portion 134 and a second base portion 136 which are pivotally articulatable about a hinge 138. In such embodiments, the base 132 can be referred to more specifically as an articulatable base. The hinge 138 can also be referred to herein more specifically as an intra-base hinge 138, since it is used to pivotably connect the first and second base portions 134, 136 to one another. The intra-base hinge 138 is designed to allow the first base portion 134 and the second base portion 136 to be pivoted relative to one another such that they can be positioned at any angle between (and inclusive of) about 94 degrees in a first rotational direction and about 126 degrees in a second rotational direction relative to one another, as shown in FIG. 13A. When the first base portion 134 and the second base portion 136 are pivoted to be aligned with one another, such that the base 132 is planar (aka flat), they are considered to be at zero degrees relative to one another. Accordingly, the total range of motion allowed by the intra-base hinge 138 is about 200 degrees.

In certain embodiments the neck 162 includes a first neck portion 164 and a second neck portion 166 which are pivotally articulatable about a hinge 168. In such embodiments, the neck 162 can be referred to more specifically as an articulatable neck 162. The hinge 168 can also be referred to herein more specifically as an intra-neck hinge 168, since it is used to pivotably connect the first and second neck portions 164, 166 to one another. The intra-neck hinge 168 is designed to allow the first neck portion 164 and the second neck portion 166 to be pivoted relative to one another such that they can be positioned at any angle between (and inclusive of) about 110 degrees in a first rotational direction and about 156 in a second rotational direction relative to one another, as shown in FIG. 13B. Accordingly, the total range of motion allowed by the intra-neck hinge 168 is about 266 degrees. When the first neck portion 164 and the second neck portion 166 are pivoted to be aligned with one another, such that the neck 162 is planar (aka flat), they are considered to be at zero degrees relative to one another.

The base 132 is pivotably connected to one end of the neck 162 by a hinge 170, which can also be referred to herein more specifically as a base-to-neck hinge 170, or a neck-to-base hinge 170. More specifically, a second end of the second neck portion 166 (which is opposite a first end of the second neck portion 166 at which is located the intra-neck hinge 168) is pivotably connected to a first end of the first base portion 134 (which is opposite a second end of the first base portion 134 at which is located the intra-base hinge 138). The base-to-neck hinge 170 (aka the neck-to-base hinge 170) is designed to allow the first base portion 134 and the second neck portion 166 to be pivoted relative to one another such that they can be positioned at any angle between (and inclusive of) about 123 degrees in a first rotational direction and about 180 degrees in a second rotational direction relative to one another, as shown in FIG. 13C. Accordingly, the total range of motion allowed by the hinge 170 is about 303 degrees. In this embodiment, and some of the other embodiments, the hinge 170 is located at an end of the base 132 opposite to where a recess 140 (discussed below) in the base 132 is located.

The main body 112 is pivotably connected to the other end of the neck 162 by a hinge 172, which can also be referred to herein more specifically as a main body-to-neck hinge 172, or a neck-to-main body hinge 172. More specifically, a first end of the first neck portion 164 (which is opposite a second end of the first neck portion 164 at which is located the intra-neck hinge 168) is pivotably connected to a second end of the main body 112. The main body-to-neck hinge 172 (aka the neck-to-main body hinge 172) is designed to allow the main body 112 to be pivoted relative to the first neck portion 164 at any angle between (and inclusive of) about 10 degrees in a first rotational direction and about 180 degrees in a second rotational direction, as shown in FIG. 13D. Accordingly, the total range of motion allowed by the hinge 172 is about 190 degrees.

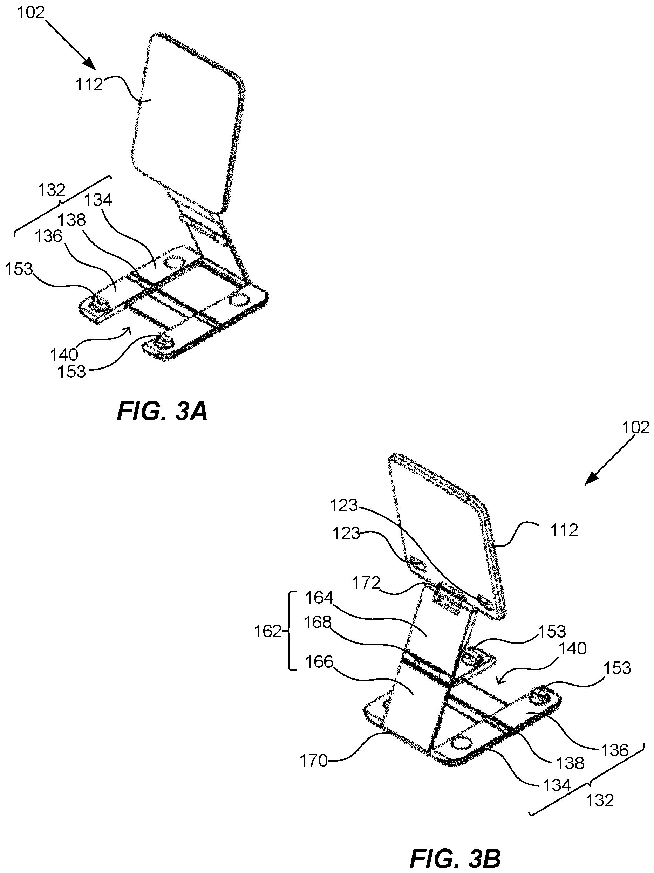

In accordance with certain embodiments, the hinges 138, 168, 170 and 172 are friction hinges that each includes a pair of pins and bushings and provide enough resistance to support a portable device (e.g., smartphone) in the various configurations and positions of multi-use mount 102. Each hinge 138, 168, 170 and 172 can include plastic bushings, which are interference fit to holes in the various components. Such plastic bushings can be made, for example, of polypropylene, or nylon, but are not limited thereto. Each hinge 138, 168, 170 and 172 can also include steel dowel pin that acts as an axle of the hinge. Knurling on part of the pins will anchor them in the static side of each hinge. The neck-to-base hinge 170 is configured to have the greatest resistance of the hinges, since it experiences the most leverage working against it when the multi-use mount 102 is in a standing easel position, shown in and described below with reference to FIGS. 3A-3K. In accordance with certain embodiments, the neck-to-base hinge 170 is configured to have a torque within the range of about 300 to 400 newton millimeters (Nmm), and the other hinges 138, 168 and 172 are configured to have a torque of about 200 Nmm. Other variations are also possible and within the scope of the embodiments described herein. One way to configure the neck-to-base hinge 170 to have a greater torque than the other hinges 138, 168 and 172 is to include longer bushings in the neck-to-base hinge 170 than in the other hinges.

FIGS. 2A and 2B are respectively front and rear perspective views of the mount 102 in the completely folded position, which can also be referred to as a closed position, where a footprint of the main body 112 and a footprint of the base 132 are aligned with one another, and the neck 162 is sandwiched between the main body 112 and the base 132, causing the neck 162 to be substantially hidden. FIGS. 2C, 2D, 2E, 2F and 2G are respectively front, back, side, top and bottom views of the mount 102 in the completely folded (aka closed) position. FIG. 2H is a rear perspective view of the mount 102 in the completely folded (aka closed) position and magnetically attached to the rear of a smartphone. FIGS. 2I and 2J are respectively rear and side view of the mount 102 in the completely folded (aka closed) position and magnetically attached to the rear of a portable electronic device 202 (which in this example is a smartphone). As can be appreciated from FIGS. 2A-2J, the multi-use mount 102 has a rectangular shape with rounded corners when the mount 102 is in the closed position. As can be appreciated from FIGS. 1D and 1G, as well as other FIGS., a peripheral footprint of the main body 112 has same length and width dimensions as a peripheral footprint of the base 132 when the base 132 is flat and the first and second base portions 134 and 136 are in a same plane. In alternative embodiments, not shown, the peripheral footprint of the main body 112 need not be the same as the peripheral footprint of the base 132 when the base is flat and the first and second base portions 134 and 136 are in the same plane. As can be appreciated from FIG. 2B, a majority of the neck 162 is sandwiched between the main body 112 and the base 132, and is not visible, when the multi-use mount 102 is in the closed (aka completely folded) position.

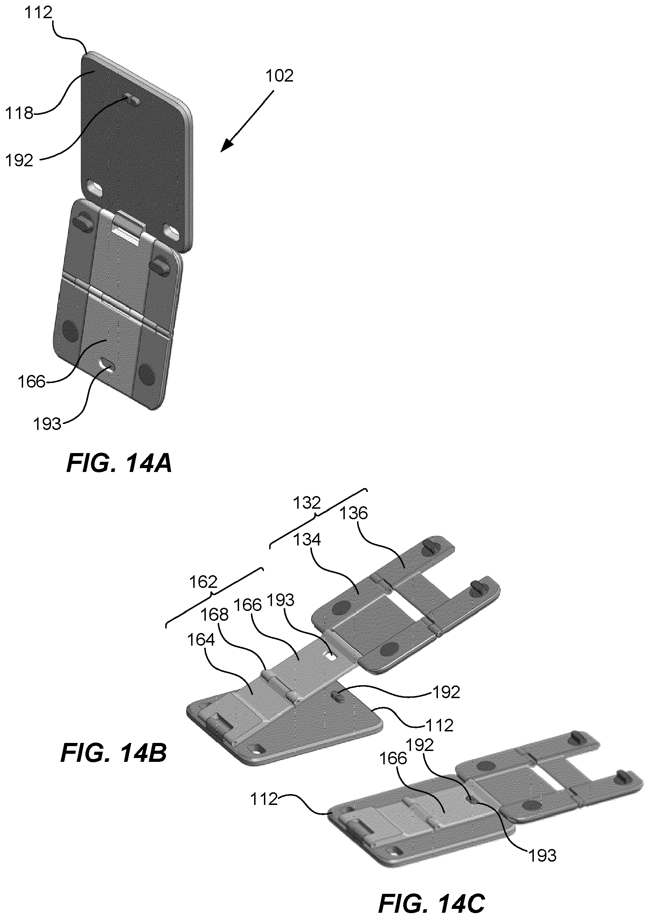

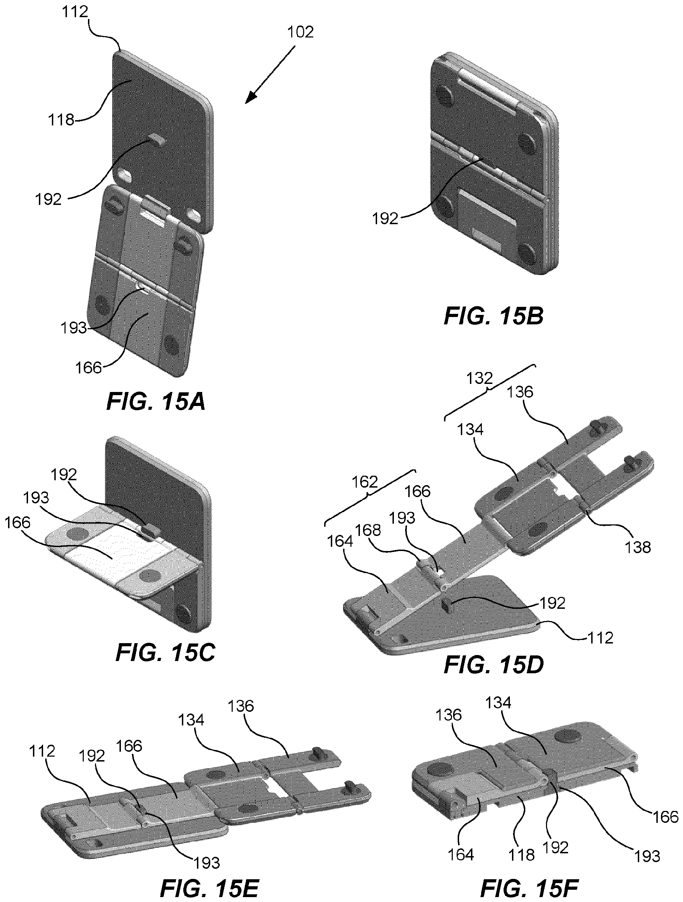

As shown, e.g., in FIGS. 2B, 2D and 12A, the base 132 includes four magnets 155, each of which is located near one of the rounded corners of the base 132. One pair of the magnets 155 is located in the first base portion 134, and the other pair of the magnets 155 are located in the second base portion 136. The magnets 155 are each shown as having a circular shape. However, it is possible that the magnets 155 may have other shapes, such as, but not limited to, square, rectangular, oval, triangular, etc. It is also possible that the magnetics 155 can have different sizes than shown in the FIGS., i.e., can be smaller or larger than shown in the FIGS. The four magnets 155 in the base 132 enable the entire mount 102 to be magnetically attached to a ferromagnetic metal surface, such as, a vertical surface (e.g., a door or side) of a refrigerator, or to a magnetic plate attached to a vehicle dashboard, and/or the like. As will be described in additional details below, the magnets 155 also enable the mount 102 to be magnetically attached to a ferromagnetic metal pole. Further, in accordance with certain embodiments, the pair of magnets 155 that are included in the first base portion 134 are aligned with, and have some level of magnetic attraction to, the magnetic ring 116 (see FIGS. 12A and 12B) within the main body 112, and this helps the base 132 to fold closed more tightly to the main body 112. The magnets 155 may also help maintain the mount 102 in the closed position (aka completely folded position) by being attracted to the magnetic ring 116 within the main body 112. The magnets 155 can be neodymium magnets, which are made from neodymium-iron-boron (NIB), or alternatively can be samarium-cobalt (SmCo) magnets, but are not limited thereto. Alternatively, or additionally, the cavities 123 in the main body 112 include detent features, and a frictional interface between the hooks 153 (on the second base portion 136) and the detent features included in the cavities 123 help maintain the multi-use mount in the closed position. Alternatively, or additionally, other extent and detent features, which are not associated with the cavities 123 and the hooks 153, can be used to help maintain the multi-use mount in the closed position, as shown in and explained below with reference to FIGS. 14A-14C and FIGS. 15A-15F. While the base 132 is shown as including four magnets 155, in alternative embodiments the base 132 can include less or more than four magnets 155, and as noted above, the magnets can have different shapes and sizes than shown in the FIGS. More generally, the base 132 includes one or more magnets configured to enable the multi-use mount to be selectively magnetically attached to a ferromagnetic metal surface or a magnetic surface. Examples of a ferromagnetic metal surface (to which the one or more magnets 155 in the base 132 can be selectively magnetically attached) is a door or side of a refrigerator, a magnetic plate attached to a vehicle dashboard, magnetic plate attached to a wall or computer monitor, a metal pole, a metal fence, and/or the like.

Dimensions of the various components of the mount 102, according to an embodiment of the present technology, are shown in FIGS. 1D, 1E, 2D and 2G of the drawings. Such dimensions are shown in millimeters (mm). As shown in FIGS. 1D and 2D, the width of each of the main body 112 and the base 132 is 58.00 mm, and the height of each of the main body 112 and the base 132 is 70.00 mm. As shown in FIG. 1E, the thickness of the main body 112 is 3.70 mm, and the thickness of portions of the base 132 (that are devoid of a magnet 155) is 3.50 mm. The thickness of the portions of the base 132 that include a magnet 155 (but are devoid of a hook 153) is 4.25 mm. As shown in FIG. 2G, when the mount 102 is in the closed (aka completely folded) position, the thickness of portions of closed mount 102 that are devoid of a magnet 155 is 7.30 mm, and the thickness of portions of the closed mount 102 that include a magnet 155 is 8.05 mm. Accordingly, it should be appreciated that the magnets 155 protrude 0.75 mm from a bottom surface of the base 132. In alternative embodiments, the mount 102 and the various components can have alternative dimensions. Nevertheless, it is preferable that the thickness of the mount 102 when in the closed position is less than 10 mm, i.e., less than 1 centimeter (cm). This enables a smartphone with the mount 102 attached thereto in the closed position to be easily slid into a pocket or purse of a user, or into another small space, without requiring the user to remove the mount 102 from the smartphone. Accordingly, the mount 102 can be easily carried with the smartphone (e.g., 202) to which the mount 102 is attached.

As can be seen in FIGS. 1A, 1C and 12A, as well as other FIGS., an upper surface of the base 132 includes a trough 150, which includes a first trough portion 151 in the first base portion 134 and a second trough portion 152 in the second base portion 136. The depth of the trough 150 is substantially the same as a thickness of the portions of the neck 162 that rest within the trough 150 when the mount 102 is in the closed (aka completely folded) position, thereby minimizing a thickness of the mount 102 when in the closed position. The neck 162, or at least a portion thereof, may also rest within the trough 150, or at least a portion thereof, when the mount 102 is in various other positions, besides the closed position, which will be appreciated from the FIGS. discussed below.

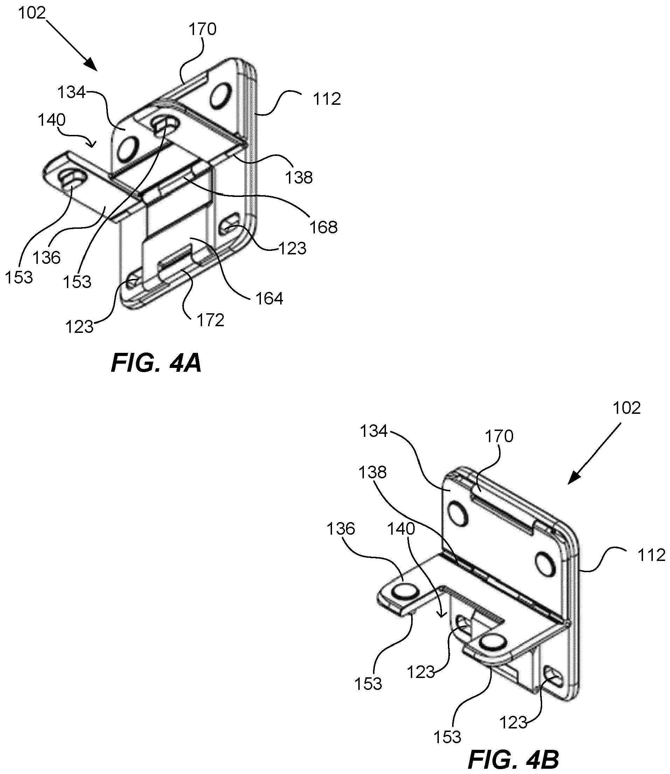

As can be seen in FIGS. 1A, 1C and 12A, as well as other FIGS., an upper surface of the second base portion 136 includes a pair of hooks 153 that protrude (e.g., upward) therefrom, and between which is located a recess 140. As will be described in additional details below, with reference to FIGS. 4A-4G, the hooks 153 are used to attach the mount 102 to a horizontal louver of a vent of a vehicle, to thereby mount a smartphone to the louver of the vent. The recess 140 enables the hooks 153 to be placed on either side of (and thereby straddle) a vertical component of the vent, which vertical component is perpendicular to the horizontal louver to which the hooks 153 attach. As shown in FIGS. 1B, 1D, 3B, and 12A, a backside of the main body 112 includes a pair of cavities 123 near two of its rounded corners, which cavities 123 are sized and aligned to accept the hooks 153 when the mount 102 is in the closed (aka fully folded position), as well as when the mount 102 is in a CD slot attachment position, discuss below with reference to FIGS. 5A-5I. In certain embodiments, the cavities 123 include detent features that frictionally interface with the hooks 153 to help maintain the mount 102 in the closed position (aka completely folded position). In certain embodiments, the cavities 123 extend complete through main body 112, in which case the cavities 123 can be referred to as through cavities or openings in the main body 112.

As will be appreciated from the following discussion, the intra-base hinge 138 of the base 132, the intra-neck hinge 168 of the articulatable neck 162, the base-to-neck hinge 170, and the main body-to-neck hinge 172 enable the multi-use mount 102 to be positioned in numerous different manners to enable the mount 102 to be used for various different purposes.

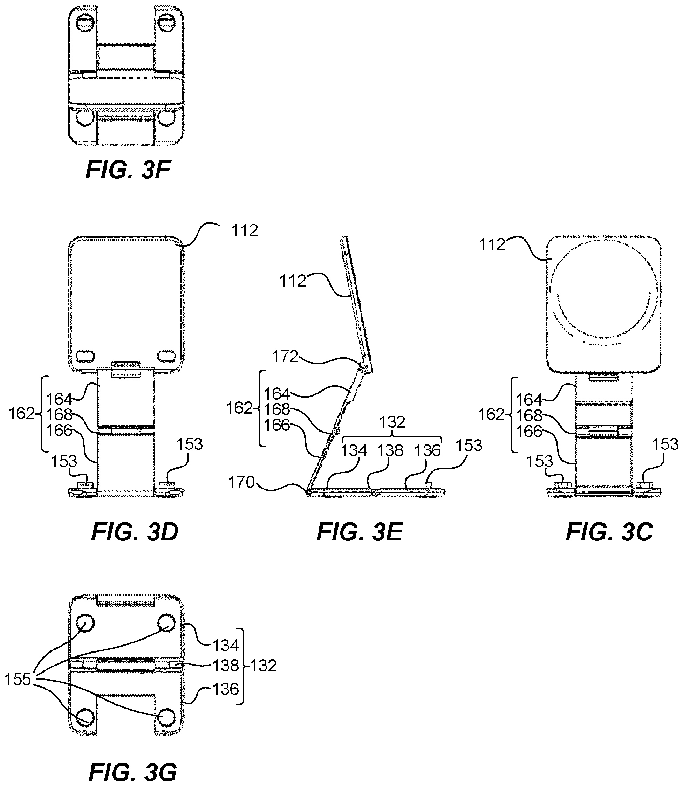

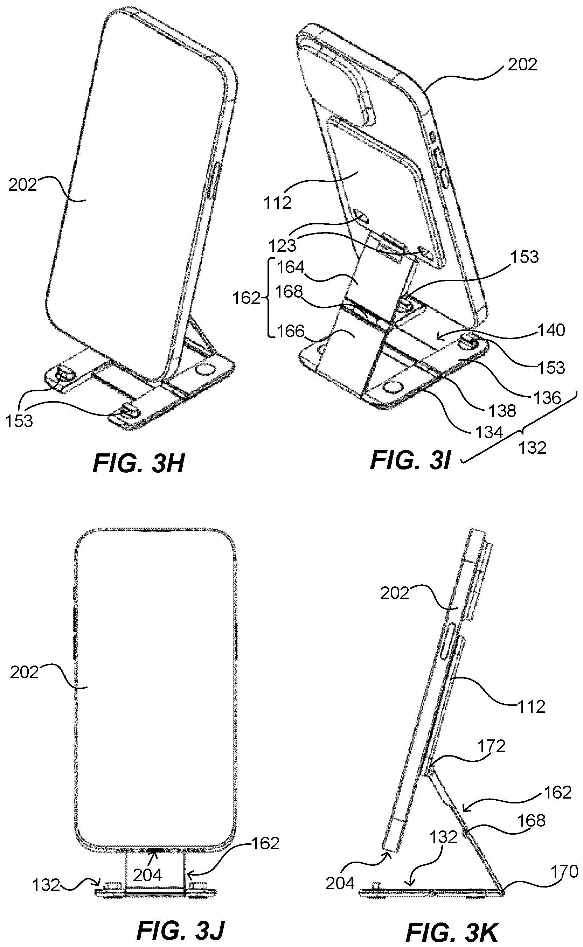

FIGS. 3A and 3B are respectively front and rear perspective views of the mount 102 in a standing easel position, where the base 132 is in a horizontal flat position, the neck 162 is in an angled flat position, and the main body 112 is supported by the neck 162 above the base 132. While the mount 102 is in the standing easel position shown in FIGS. 3A and 3B, the neck 162 is at an acute angle relative to the base 132, the main body 112 is at an obtuse angle relative to the neck 162, and the main body 112 is at an acute angle relative to the base 132. FIGS. 3C, 3D, 3E, 3F and 3G are respectively front, back, side, top and bottom views of the mount 102 in the standing easel position. FIGS. 3H, 3I, 3J and 3K are respectively front perspective, rear perspective, front and side views of the mount 102 in the standing easel position holding a portable electronic device 202 (which in this example is a smartphone) in its portrait orientation. As can be appreciated from FIGS. 3H-3K, when the mount 102 in the standing easel position, a portable electronic device 202 (which in this example is a smartphone) can be held a distance above the surface (e.g., tabletop) on which the base 132 is being supported (aka resting), thereby providing access to one or more ports 204 (e.g., a Lightning^{™} port, USB port, audio port, and/or the like) located along the lower peripheral edge of the smartphone. It is also possible to pivot one or more of the various hinges such that the lower peripheral edge of the smartphone (that includes one or more ports) rests directly on an upper portion of the base 132, or on a same surface (e.g., tabletop) on which the base 132 is being supported.

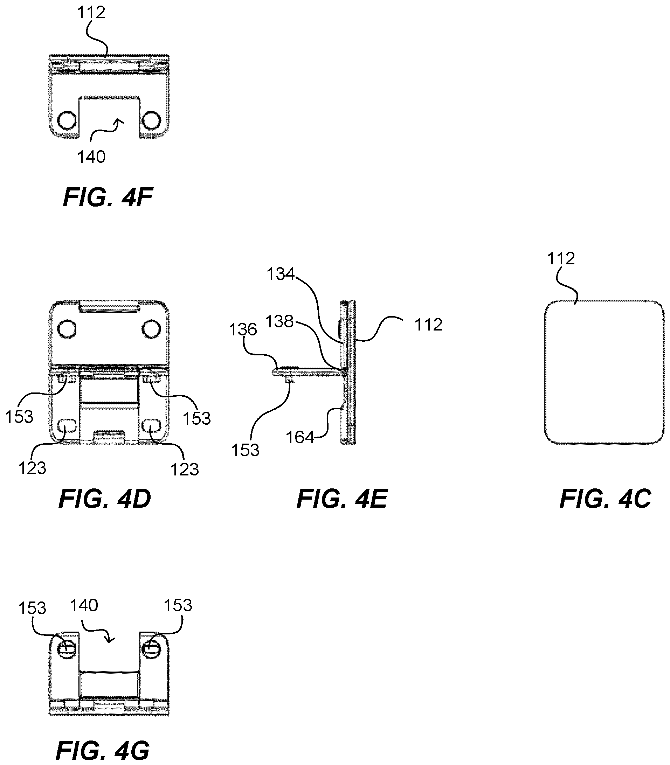

FIGS. 4A and 4B are two different rear perspective views of the mount 102 in a vent louver attachment position (aka, a vent mount position), during which the second base portion 136 extends perpendicularly away from a backside of the main body 112, and the hooks 153 extend downward from the second base portion 136 generally parallel to the main body 112. FIGS. 4C, 4D, 4E, 4F and 4G are respectively front, back, side, top and bottom views of the mount 102 in the vent louver attachment position. As noted above, the hooks 153 are used to attach the mount 102 to a horizontal louver of a vent of a vehicle, to thereby mount a smartphone to the louver of the vent. The recess 140 enables the hooks to 153 to be placed on either side of (and thereby straddle) a vertical component of the vent, which vertical component is perpendicular to the horizontal louver to which the hooks 153 attach. When the mount 102 is in the vent louver attachment position, the first and second neck portions 164, 166 are flat against and parallel to the backside of the main body 112, and the first base portion 134 is flat against and parallel to the backside of the main body 112, with the second neck portion 166 within the trough portion 151 of the first base portion 134 and sandwiched between the backside of the main body 112 and the first base portion 134. That is why the second neck portion 166 is not visible in FIGS. 4A - 4G.

FIGS. 5A and 5B are two different rear perspective views of the mount 102 in a CD slot attachment position (aka, a CD mount position), during which the first base portion 134 extends perpendicularly away from a backside of the main body 112 so that the first base portion 134 can be inserted into a CD slot of a stereo installed in a dashboard of a vehicle. FIGS. 5C, 5D, 5E, 5F and 5G are respectively front, back, side, top and bottom views of the mount 102 in the CD slot attachment position. FIG. 5H is a rear perspective view of the mount 102, in the CD slot attachment position, while the mount 102 is magnetically attached to a backside of a portable electronic device 202 (which in this example is a smartphone) that is in its landscape orientation. FIG. 5I is a rear perspective view of the mount 102, in the CD slot attachment position, while the mount 102 is magnetically attached to a backside of a portable electronic device 202 (which in this example is a smartphone) that is in a portrait orientation. When the mount 102 is in the CD slot attachment position, the first neck portion 164 rests within the trough portion 151, the recess 140 of the second base portion 136 is flat against and parallel to the main body 112, and the second neck portion 166 rests within the trough portion 152 of the first base portion 134 and is perpendicular to the main body 112. When the mount 102 is in the CD slot attachment position, it is also in a low easel stand position, where the mount 102 can be used to hold a smartphone in its landscape and portrait orientations at an angle on a tabletop. Additionally, when the mount 102 is in the CD slot attachment position, it is also in a position where the folded base 132 can be held between a pair of adjacent digits (aka fingers) of a person's hand, or between a thumb and finger.

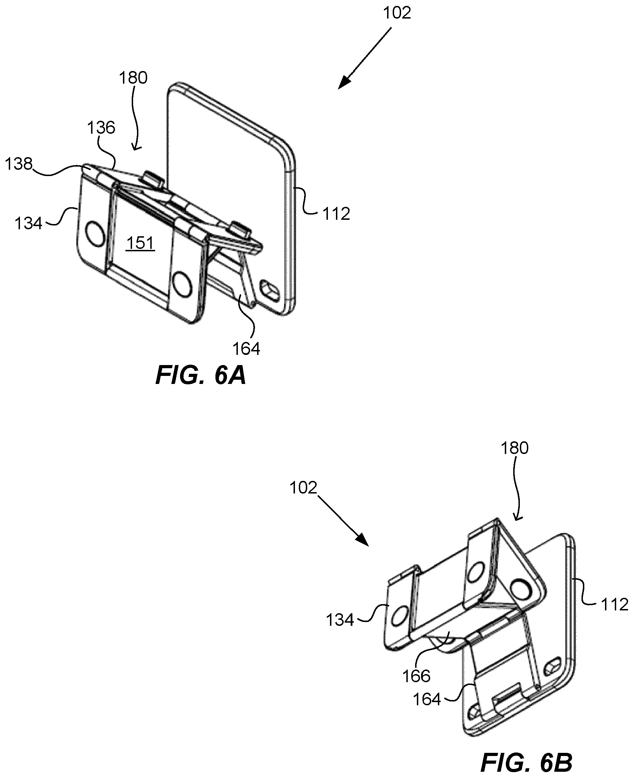

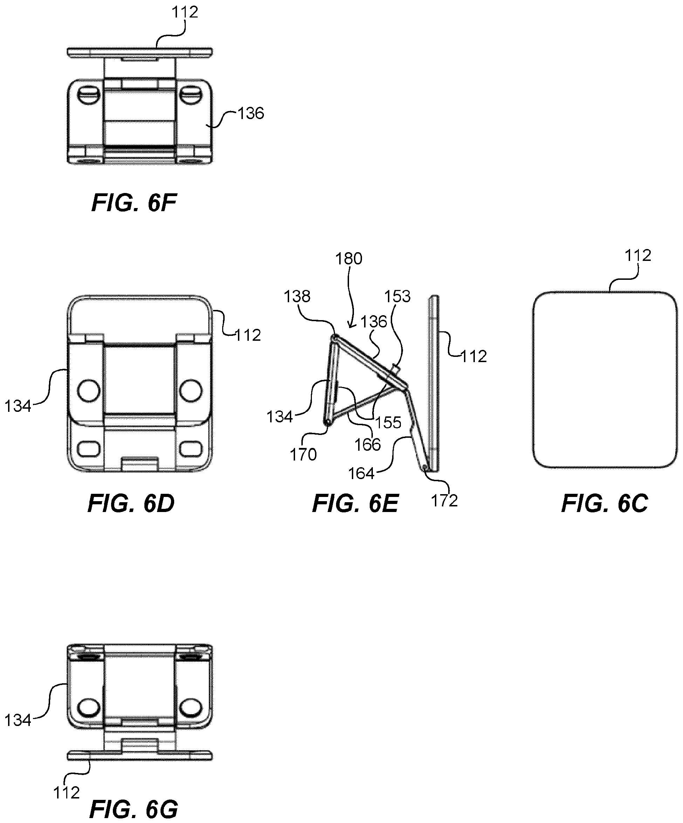

FIGS. 6A and 6B are two different rear perspective views of the mount 102 in a small diameter pole attachment position, when the base 132 and the neck 162 are pivotally articulated to form a small triangular loop 180. FIGS. 6C, 6D, 6E, 6F and 6G are respectively front, back, side, top and bottom views of the mount 102 in its small diameter pole attachment position. The small triangular loop 180, which can loop around a small diameter pole, is best shown in FIG. 6E. When the mount 102 in the small diameter pole attachment position, the second neck portion 166, the first base portion 134 and the second base portion 136 are articulated relative to one another to form an equilateral triangle, i.e., small triangular loop 180, and the first neck portion 164 connects the small triangular loop 180 to the main body, as best shown in FIG. 6E. The small triangular loop 180 can be wrapped around a pole, a fence, or a person's finger. The magnets 155 on the base 132 face the interior of the triangular loop 180, and thus, can be used to magnetically attach the mount 102 to a ferromagnetic metal pole about which the loop 180 is wrapped. When the mount 102 in the small diameter pole attachment position, shown in FIGS. 6A-6G, the mount 102 is also in a side grip position, because the small triangular loop 180 can be gripped by a user to enable the user to firmly hold their smartphone from its side in both portrait and landscape orientations to allow the user to capture stable pictures and videos.

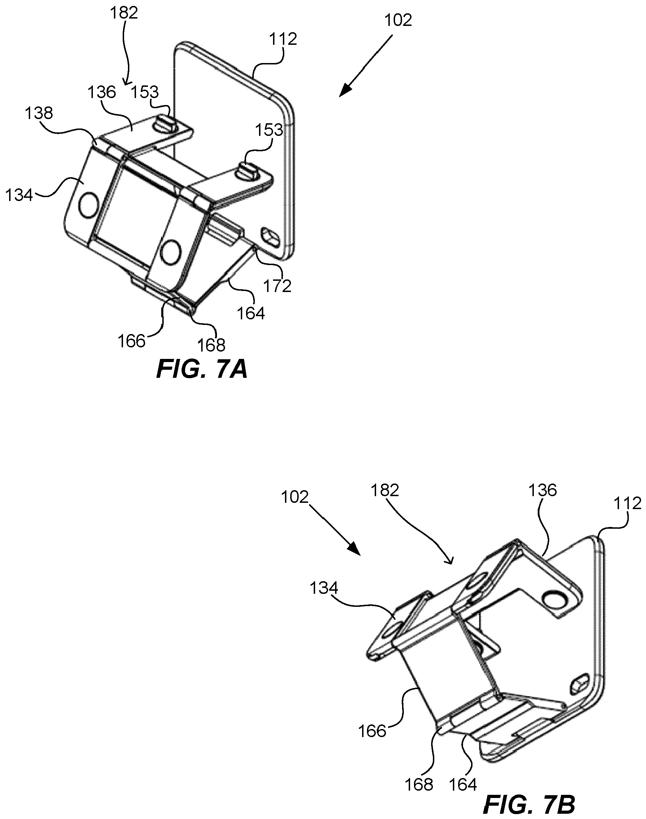

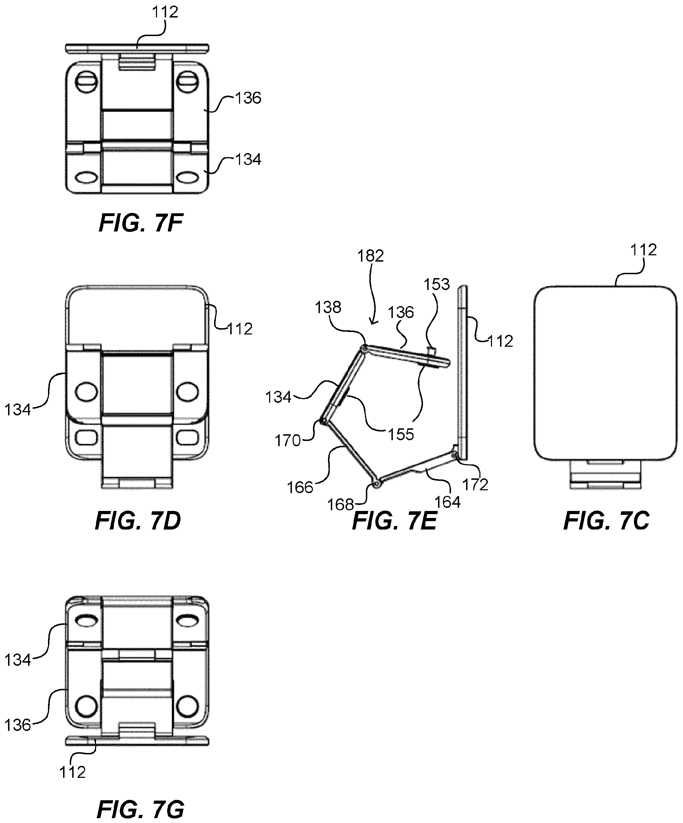

FIGS. 7A and 7B are two different rear perspective views of the mount 102 in a large diameter pole attachment position, when the base 132 and the neck 162 are pivotally articulated to form a pentagonal loop 182. FIGS. 7C, 7D, 7E, 7F and 7G are respectively front, back, side, top and bottom views of the mount 102 in the large diameter pole attachment position. The pentagonal loop 182, which can loop around a large diameter pole, is best shown in FIG. 7E. The magnets 155 on the base 132 face the interior of the pentagonal loop 182, and thus, can be used to magnetically attach the mount 102 to a ferromagnetic metal pole about which the loop 182 is wrapped. When the mount 102 is in the large diameter pole attachment position, each of the hinges 138, 170, 168 and 172 is used to position adjacent components of the mount 102 at about 108 degrees relative to one another. That is, the hinge 168 positions the first and second neck portions 164, 166 at about 108 degrees relative to one another, the hinge 138 positions the first and second base portions 134, 136 at about 108 degrees relative to one another, the hinge 170 positions the second neck portion 166 and the first base portion 134 at about 108 degrees relative to one another, and the hinge 172 positions the first neck portion 164 and the main body 112 at about 108 degrees relative to one another, as best shown in FIG. 7E.

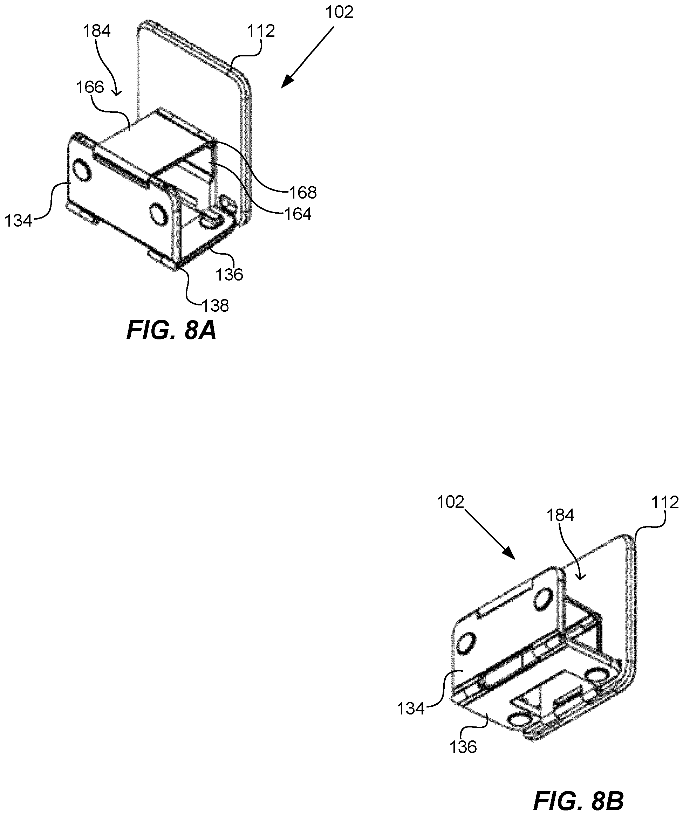

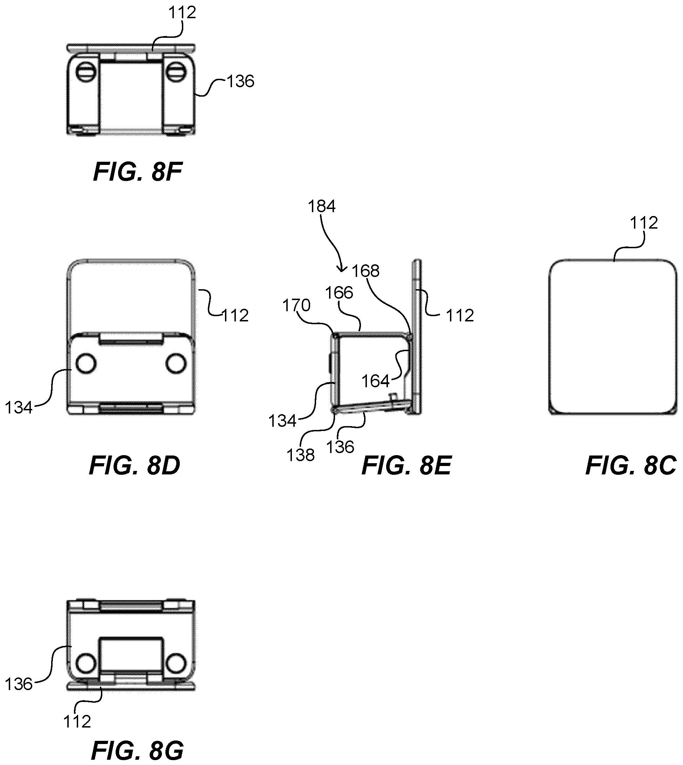

FIGS. 8A and 8B are two different rear perspective views of the mount 102 in a finger loop grip position, when the base 132 and the neck 162 are pivotally articulated to form a square loop 184. FIGS. 8C, 8D, 8E, 8F and 8G are respectively front, back, side, top and bottom views of the mount 102 in the finger loop grip position. The square loop 184, into which a user can place one or more fingers, is best shown in FIG. 8E. When the mount 102 in the finger loop grip position, the first neck portion 164 is flat against and parallel to the main body 112, the second neck portion is perpendicular to the first neck portion 164 and the main body 112, the first base portion 134 is perpendicular to each of the second base portion 136 and the second neck portion 166, the first base portion is parallel to each of the first neck portion 164 and the main body 112, as best shown in FIG. 8E.

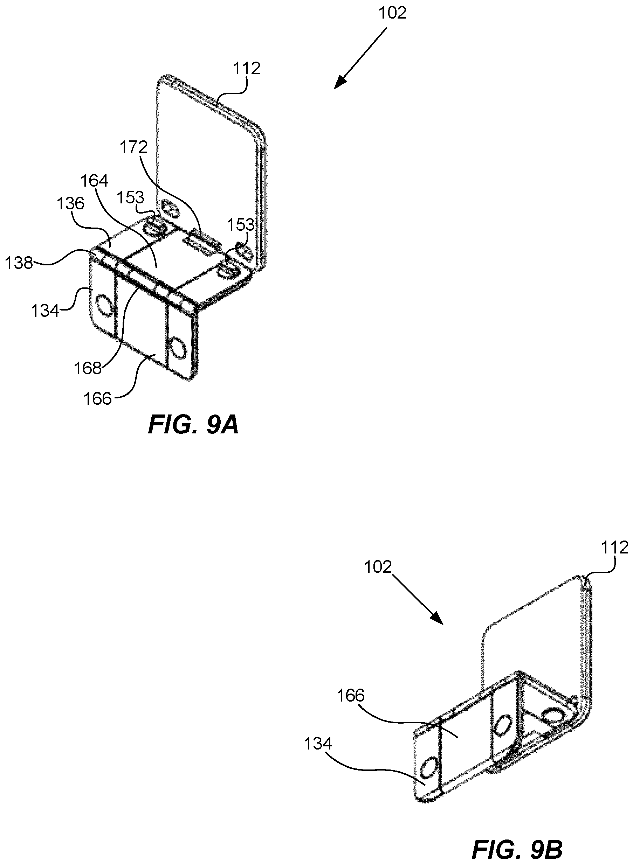

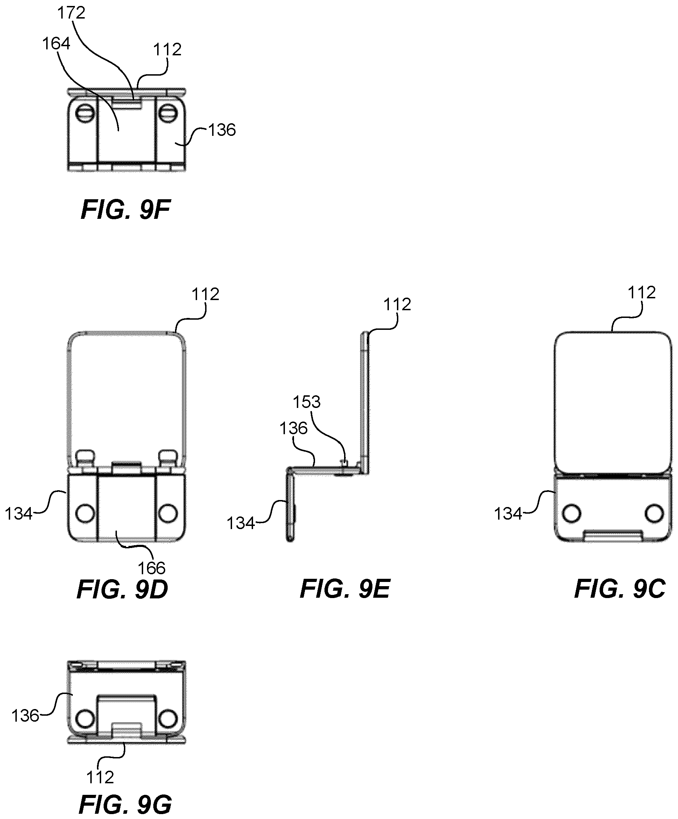

FIGS. 9A and 9B are two different rear perspective views of the mount 102 in a upright airplane tray attachment position, when the neck 162 rests within the trough 150 of the base 132, the second base portion 136 is perpendicular relative to the main body 112, and the first base portion 134 is perpendicular relative to the second base portion 136 and parallel to the main body 112. In this position, the first base portion 134 can be slipped behind a folded up tray that is located on the backside of an airplane seat, and the second base portion 136 supports the mount 102 above an edge of the folded up airplane tray. FIGS. 9C, 9D, 9E, 9F and 9G are respectively front, back, side, top and bottom views of the multi-use mount in the upright airplane tray attachment position.

FIGS. 10A and 10B are two different rear perspective views of the mount 102 in a first airplane pocket attachment position, when the neck 162 rests within the trough 150 of the base 132, the first and second base portions 134, 136 are in a same plane so that the base 132 is flat, and the base is at an obtuse angle of about 165 degrees relative to the main body 112. When in this configuration, the base 132 can be slipped into a magazine or pamphlet pocket located on the backside of an airplane seat. FIGS. 10C, 10D, 10E, 10F and 10G are respectively front, back, side, top and bottom views of the multi-use mount in the upright airplane tray attachment position. FIG. 10H shows the mount 102 in the upright airplane tray attachment position, with the mount 102 magnetically attached to the backside of a landscape oriented portable electronic device 202 (which in this example is a smartphone). When the mount 102 is in the upright airplane tray attachment position, the mount 102 can alternatively be magnetically attached to the backside of a portable electronic device 202 (which in this example is a smartphone) in its portrait orientation, as shown in FIG. 10I. When the mount 102 is in the first airplane pocket attachment position, it is also in a high easel leaning position, where the mount 102 can be used to hold a smartphone in its portrait orientation at an angle on a tabletop or other horizontal surface, as can be appreciated from FIG. 101.

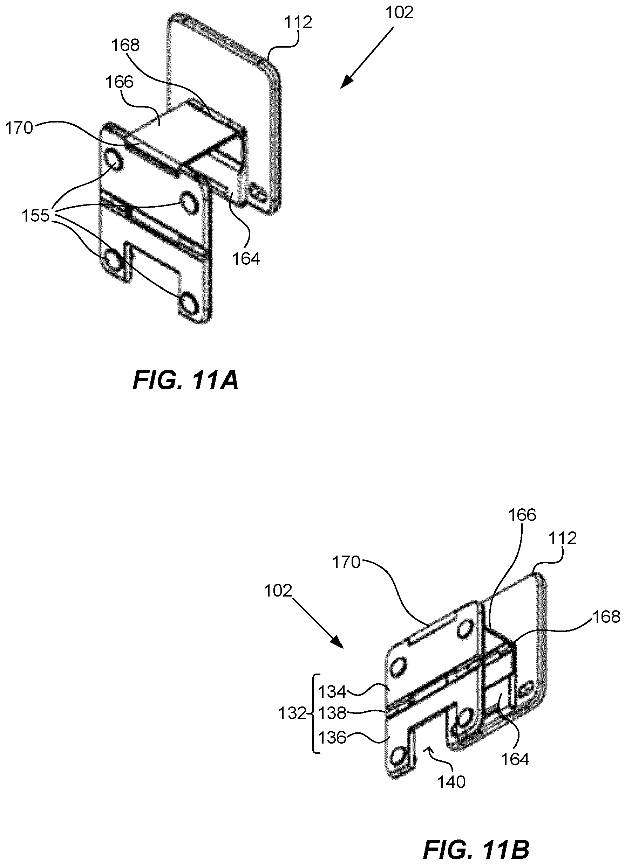

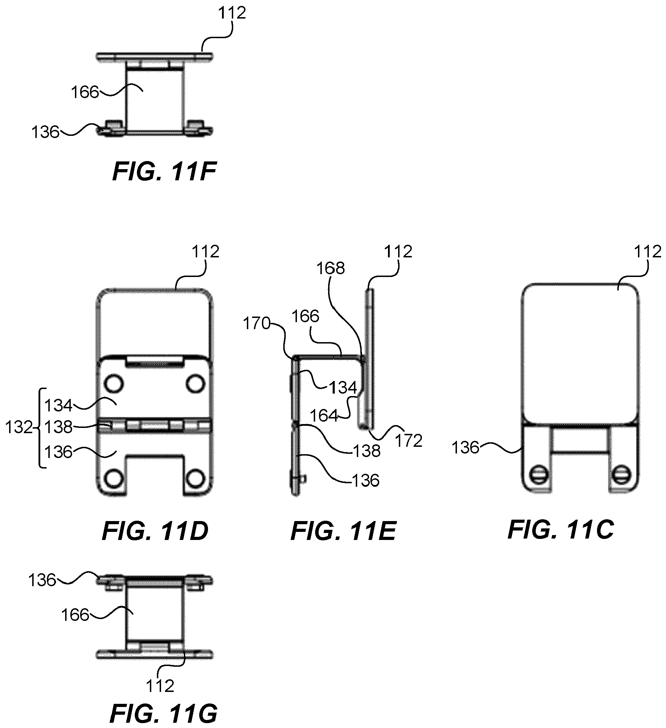

FIGS. 11A and 11B are two different rear perspective views of the mount 102 in a second airplane pocket attachment position, when the first neck portion 164 is flat against and parallel to the main body 112, the second neck portion 166 is perpendicular to the first neck portion 164, the first and second base portions 134, 136 are in a same plane so that the base 132 is flat, and the flat base 132 is perpendicular to the second neck portion 166 and parallel to the main body 112. FIGS. 11C, 11D, 11E, 11F and 11G are respectively front, back, side, top and bottom views of the mount 102 in the second airplane pocket attachment position. In this position, flat base 132 can be slipped into a magazine or pamphlet pocket that is on the backside of an airplane seat, and the second neck portion 166 supports the mount 102 above an upper edge of magazine or pamphlet pocket.

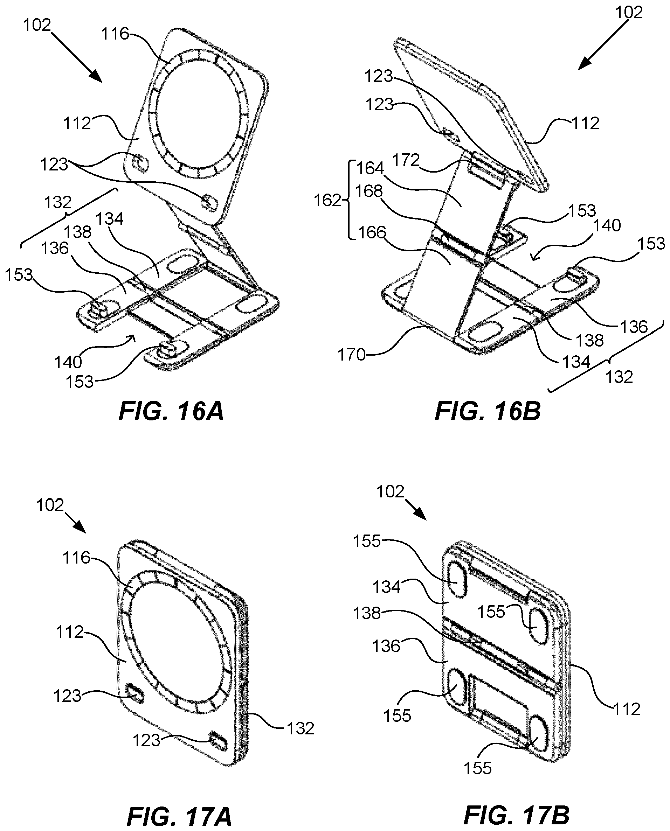

FIGS. 12A and 12B are respectively front and rear perspective exploded views of the mount 102, according to certain embodiments of the present technology. As shown in FIGS. 12A and 12B, the main body 112 includes a front plate 114 and a rear plate 118, between which is held a magnetic ring 116. As shown in FIG. 12A, the rear plate 118 includes a ring shaped groove 120 that is sized to receive and hold the magnetic ring 116 in place. In FIGS. 12A and 12B the magnetic ring 116 is shown as being made up of an array of sixteen smaller magnets arranged to form a contiguous 360 degree magnetic ring. In alternative embodiments, the contiguous 360 degree magnetic ring 116 can be replaced within an alternatively shaped magnet or array of magnets, such as, but not limited to, two or more magnetic arcs, that collectively do not provide a contiguous 360 degree magnetic ring. The front plate 114 conceals that magnetic ring 116 (or other shaped magnet or array of magnets) such that the magnetic ring 116 (or other shaped magnet or array of magnets) is not visible once the main body 112 is assembled. In alternative embodiments, the front plate 114 is eliminated, and the magnetic ring 116 (or other shaped magnet or array of magnets) can be seen when viewing the mount 102 from the front (e.g., as in the embodiment shown in FIGS. 16A and 17A). It is also possible that the front plate 114 is translucent, in which case the magnetic ring 116 (or other shaped magnet or array of magnets) can also be seen when viewing the mount 102 from the front (e.g., as in the embodiment shown in FIGS. 16A and 17A).

As shown in FIG. 12A, in accordance with certain embodiments, the hooks 153 are formed on the backsides of a pair of the magnets 155. The hooks 153 can be made of a metal, alloy or plastic material that is over-molding with a gripping material, such as a thermoplastic elastomer (TPE), rubber, silicon, polymeric material or other plastic, metal, alloy, fabric, composite material or other material capable of increasing the adhesion, grip or coefficient of friction between the outer surface of the hooks 153 and a louver of a vent of a vehicle. The first base portion 134 includes a pair of openings 144 into which a pair of the magnets 155 are press fit or otherwise inserted and/or adhered in place using detent structures and/or an adhesive. The second base portion 136 includes a pair of openings 146 into which the pair of magnets 155 having the hooks 153 formed on their backsides are press fit or otherwise inserted and/or adhered in place using detent structures and/or an adhesive. Other variations are also possible and within the scope of the embodiments described herein. For example, instead of the hooks 153 being formed on the backsides of a pair of the magnets 155, the hooks can alternatively extend from other portions of the second base portion 136, which need not be aligned with a pair of the magnets 155. In certain embodiments, the hooks 153 are integrally formed with the second base portion 136.

In accordance with certain embodiments, the rear plate 118 of the main body 112, the first and second base portions 134, 136 of the base 132, and the first and second neck portions 164, 166 of the neck 162, are made from a strong and light material, such as aluminum, and the front plate 114 of the main body 112 is made of an opaque or transparent elastomer. It would also be possible that the rear plate 118 of the main body 112, the first and second base portions 134, 136 of the base 132, and the first and second neck portions 164, 166 of the neck 162, are made from a stiff plastic or carbon material. It would also be possible to completely eliminate the front plate 114 of the main body 112, or to make the front plate 114 from a translucent material (e.g., a translucent elastomer), as was noted above.

In an alternative embodiment, rather than relying on a magnetic ring 116 (or other shaped magnet or array of magnets) to attach the main body 112 to the backside of a smartphone or smartphone case (or to some other portable electronic device, or a case), the main body 112 can be adhered to the backside of a smartphone or smartphone case (or to some other portable electronic device, or a case) using an adhesive. Other variations are also possible and within the scope of the embodiments described herein.

FIGS. 14A-14C show an alternative embodiment of the mount 102 where a protrusion 192 extends from a backside of the main body 112, and an opening 193 is located in the second neck portion 166, wherein the protrusion 192 is sized and aligned with the opening 193 to help maintain the mount 102 in a closed position (aka completely folded position). FIGS. 15A-15F show still another alternative embodiment of the mount 102 where the protrusion 192 extends from a different location on the backside of the main body 112, and the opening 193 is located at another location in the second neck portion 166, wherein the protrusion 192 is sized and aligned with the opening 193 to help maintain the mount 102 in the closed position (aka completely folded position). FIG. 15F is a cross-sectional view of the mount 102 in the closed position (aka completely folded position). The protrusion 192 can be made of a plastic such as polypropylene, nylon, acetal, etc. and can be assembled into a thru-hole in the rear plate 118 of the main body 112. The protrusion 192 can be held in place by a screw, snap hooks, an adhesive, and/or the like. Additionally, or alternatively, the protrusion 192 can include a flange at its base that could be sandwiched between the rear plate 118 and the front plate 114 of the main body 112, as can be appreciated from FIG. 15F. A distal end of the protrusion 192 can have a small bump overhang, so that the protrusion 192 and the opening 193 collectively provide a bump catch detent. Other variations are also possible and within the scope of the embodiments described herein. The cross-sectional view of FIG. 15F also shows how a majority of the neck 162 is sandwiched between the main body 112 and the base 132 when the mount 102 is in the closed position.

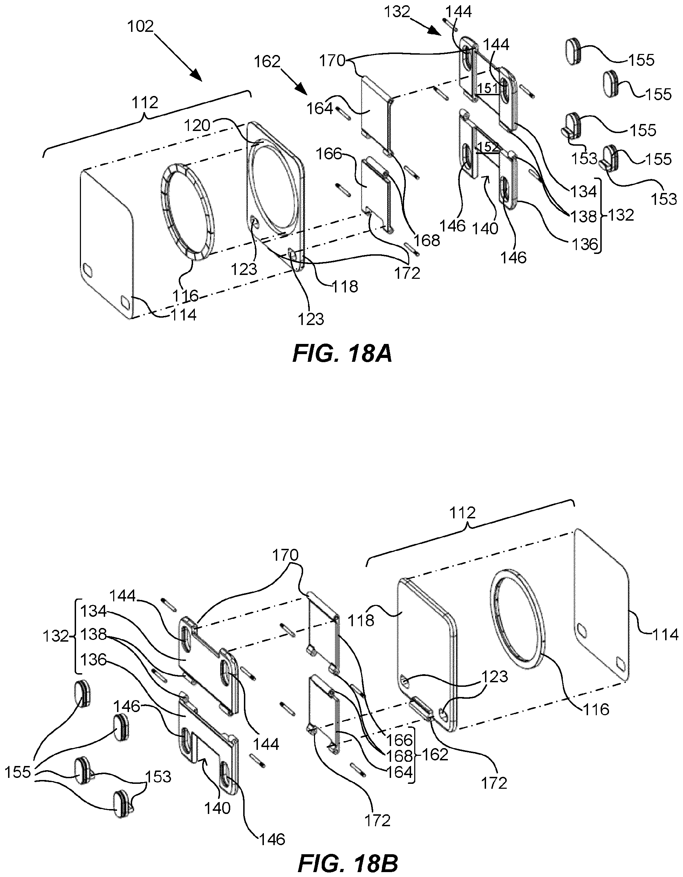

FIGS. 16A and 16B are respectively front and rear perspective views of the multi-use mount 102, in accordance with another alternative embodiment, in the standing easel position. In this alternative embodiment, the front plate 114 is eliminated (or alternatively made of a transparent elastomer), causing the magnetic ring 116 (or other shaped magnet or array of magnets) to be seen when viewing the mount 102 from the front. FIGS. 17A and 17B are respectively front and rear perspective views of the multi-use mount 102 shown in FIGS. 16A and 16B in a completely folded position, which can also be referred to as a closed position. FIGS. 18A and 18B are respectively front and rear perspective exploded views of the multi-use mount 102 of the embodiment shown in FIGS. 16A, 16B, 17A and 17B. While there are some minor differences between the alternative embodiment of FIGS. 16A-18B, compared to the embodiment described above with reference to FIGS. 1A-12B, the multi-use mount 102 functions in substantially the same manner in both embodiments despite some cosmetic differences. For example, while the magnets 155 in the embodiment of FIGS. 1A-12B were shown as having a circular shape, in the embodiment of FIGS. 16A-18B the magnets 155 are shown as having an oval shape. There are also some minor differences between the implementations of the various hinges 138, 168 and 170 in the embodiment of FIGS. 16A-18B compared to the implementations of the respective corresponding hinges 138, 168 and 170 in the embodiment of FIGS. 1A-12B. However, because the multi-use mount 102 functions in substantially the same manner in the different embodiments, the functionality of the alternative embodiment of the multi-use mount 102 of FIGS. 16A-18B can be fully appreciated from the above discussion of FIGS. 1A-12B. The unlabeled pins shown in FIGS. 18A and 18B are examples of the pins of the various friction hinges of the mount 102.

FIGS. 19A and 19B are respectively front and rear perspective views of a wireless charging version of a multi-use mount 102, according to an embodiment of the present technology, in a completely folded position, which can also be referred to as a closed position. The wireless charging version of the multi-use mount 102 is essentially a wireless charging version of the multi-use mount described above. FIGS. 19C, 19D, 19E, 19F and 19G are respectively front, back, side, top and bottom views of the wireless charging version of the multi-use mount 102, in the completely folded (aka closed) position. FIG. 19H is a perspective view of the wireless charging version of the multi-use mount 102 with a male end 198 of a connector cable 196 being moved towards a female connector plug 188 of the mount 102, and FIG. 191 shows the wireless charging version of the multi-use mount 102 after the male end 198 of the connector cable 196 has been inserted into the female connector plug 188 of the mount 102. FIG. 19J is a front perspective view of the wireless charging version of the multi-use mount 102 in a standing easel position with the male end 198 of the connector cable 196 inserted into the female connector plug 188 of the mount 102. The wireless charging multi-use mount 102 can be used in all of the various different manners and in all of the various different positions for all of the various different purposes that were described above with respect to the multi-use mount 102, while also providing for wireless charging of a portable electronic device (e.g., smartphone). The wireless charging version of the multi-use mount 102 can be referred to herein more succinctly as the multi-use mount 102, or even more succinctly as the mount 102.

The wireless charging version of the multi-use mount 102 is configured to wirelessly charge a portable electronic device, such as a smartphone, that is being held by the mount 102. In an embodiment, a wireless charger 186 (represented by a dashed elliptical region labeled 186 in FIGS. 19A, 19C, 19H, 191, and 19J) is integrated into a main body 112 of the mount 102, and can be encased within the main body 112 of the mount 102 such that it is not visible unless the main body 112 is disassembled. Other parts of the main body 112 are similar to those of the main body 112 already described above, and thus, need not be described again. In certain embodiments, the wireless charger 186 includes an induction coil that is configured to produce an alternating electromagnetic field (EMF) used to transfer energy via induction to another coil (of a portable electronic device, e.g., a smartphone) that is placed parallel and nearby. More generally, the wireless charger 186 is configured to charge and/or power a portable electronic device (e.g., smartphone) that is being held by the mount 102, so long as the wireless charger 186 is electrically connected to a power source via the connector cable 196. The power source can be, e.g., an electrical outlet in a building, automobile, airplane, portable power generator, or the like. The power source can alternatively be a battery that is integrated into, or external to, the multi-use mount 102. In certain embodiments, the wireless charger 186 is a Qi charger that follows a Qi standard developed by the Wireless Power Consortium, which may be the original Qi standard, or the updated Qi2 standard, or some future developed Qi standard. In other words, the charging modality of the wireless charger 186 can be implemented in accordance with the open Qi specification for wireless power transfer as set by the Wireless Power Consortium. In this regard, the mount 102 (or the wireless charging adaptor 206, discussed below) may also include a microcontroller that controls a power conversion unit and a communications and control unit that regulates the output of an electrical signal to an inductive charging coil based upon requests from a portable electronic device. Further, the portable electronic device that is intended to be charged is presumed to include a power pick-up unit with a secondary coil electrically connected to an onboard battery of the portable electronic device. The power pick-up unit may be connected to a communications and control unit that regulates the power transferred to the load. Because Qi charger implementations are well known in the art, additional details thereof are omitted. It will be appreciated that the inductive charging need not conform to the Qi standard, and any other wireless power transfer modality may be substituted without departing from the scope of the present disclosure. For the remainder of this description it assumed that the wireless charger 186 of the multi-use mount 102 (or of the wireless charging adaptor 206, discussed below) is a Qi charger. However, it is also within the scope of the embodiments described herein that an alternative type of wireless charger 186 can be integrated into (or attached to) the multi-use mount 102 of an embodiment of the present technology.

Where the wireless charger 186 is integrated into the main body 112, the thickness of the main body 112 may be increased by about 2.4 mm, e.g., from about 3.7 mm (in the embodiments where there is no wireless charger) to about 6.1 mm. Accordingly, the thickness of the wireless charging version of the multi-use mount 102 in the completely folded (aka closed) position, is also increased by about 2.4 mm (compared to the embodiments where there is no wireless charger), e.g., from about 7.30 mm (where the mount 102 is devoid of a magnet 155) to about 9.7 mm, and from about 8.05 mm (where the mount 102 includes a magnet 155) to about 10.45 mm. In alternative embodiments, the mount 102 and its various components can have alternative dimensions. Nevertheless, it is preferable that the thickness of the wireless charging version of the multi-use mount 102 when in the closed position is less than 12 mm (i.e., less than 1.2 cm).

In the embodiment shown, the connector cable 196 is electrically connectable to, and electrically disconnectable from, the wireless charging version of the multi-use mount 102. In an alternative embodiment, a connector cable is fixedly attached to and fixedly electrically connected to the wireless charging version of the multi-use mount 102, i.e., the connector cable is not removable.

Rather than integrating the wireless charger 186 into the mount itself, the wireless charger 186 can instead be included in a wireless charging adaptor 206 that is configured to be used with one of the embodiments of the multi-use mount 102 described above with reference to FIGS. 1A-18A, or with any of the additional embodiments described below. FIGS. 20A and 20B are respectively front and rear perspective views of such a wireless charging adaptor 206, according to an embodiment of the present technology. The wireless charging adaptor 206 includes an adaptor body 212, with a wireless charger 186 (represented by the dashed elliptical region labeled 186 in FIGS. 20A and 20C) integrated into the adaptor body 212. The wireless charger 186 is configured to charge a portable electronic device (e.g., smartphone) that is parallel with and resting against the wireless charging adaptor 206, so long as the wireless charger 186 of the wireless charging adaptor 206 is electrically connected to a power source via a connector cable 196. Example details of the wireless charger 186 are described above with reference to the mount 102 of FIGS. 19A-19J, and thus need not be repeated.

The wireless charging adaptor 206 can be used with any multi-use mount 102 described above with reference to FIGS. 1A-18B, to add a wireless charging capability to an embodiment of the multi-use mount 102 that does not include a wireless charger that is integrated into the mount 102. More specifically, the wireless charging adaptor 206 can be magnetically attached to any embodiment of the multi-use mount 102 described above with reference to FIGS. 1A-18B, and after which (or before which) a portable electronic device (e.g., smartphone) can be attached to the wireless charging adaptor 206, such that the wireless charging adaptor 206 is sandwiched between the main body 112 of the multi-use mount 102 and the portable electronic device (e.g., smartphone). The wireless charging adaptor 206 can alternatively and/or additionally be used on its own (i.e., without being attached to a multi-use mount 102) as a wireless charging device, e.g., a wireless charging puck.

The wireless charging adaptor 206 has a magnetic ring 216 (or some other shaped magnet or array of magnets) that enables it to be magnetically coupled to a smartphone that includes a built in MagSafe magnet, has a MagSafe adaptor, has some other magnet (e.g., a magnetic ring or plate) attached to a backside of the smartphone, or to a smartphone being held by a phone case that has a MagSafe magnet (or some other shaped magnet or array of magnets) built into the phone case or attached to the phone case, or adhered to a backside of a smartphone. The magnetic ring 216 (or some other shaped magnet or array of magnets) can also be magnetically coupled (aka magnetically attached) to a ferromagnetic metal plate or ferromagnetic metal ring in or on a case for a smartphone or other portable electronic device, or otherwise attached (e.g. adhered) to the backside of a smartphone or other portable electronic device. In certain embodiments, the magnetic ring 216 (or some other shaped magnet or array of magnets) is covered by a transparent elastomer. In other embodiments, the magnetic ring 216 (or some other shaped magnet or array of magnets) is covered by an opaque plate. In still other embodiments, there is no transparent or opaque material covering the magnetic ring 216 (or some other shaped magnet or array of magnets) of the adaptor body 212.

FIGS. 20C, 20D, 20E, 20F and 20G are respectively front, back, side, top and bottom views of the wireless charging adaptor 206. FIG. 20H is a perspective view of the wireless charging adaptor 206 with a male end 198 of a connector cable 196 being moved towards a female connector plug 218 of the wireless charging adaptor 206, and with the wireless charging adaptor 206 shown above and separate from the mount 102 in the completely folded (aka closed) position. FIG. 20I shows the wireless charging adaptor 206 after the male end of the connector cable 196 has been inserted into the female connector plug 218 of the wireless charging adaptor 206, and after the wireless charging adaptor 206 has been attached (e.g., magnetically attached) to the mount 102 in the completely folded (aka closed) position. The wireless charging adaptor 206 can be attached to the multi-use mount 102, while the mount 102 is in any of the various different positions described above with reference to FIGS. 1A-11G. Accordingly, the wireless charging adaptor 206 can be used to charge a portable electronic device (e.g., smartphone) when the adaptor 206 and the portable electronic device (e.g., smartphone) are both attached to the mount 102 in any of its positions. For example, FIG. 20J is a front perspective view of the wireless charging adaptor 206 attached to an embodiment of the multi-use mount 102 in the standing easel position with the male end 198 of the connector cable 196 inserted into the female connector plug 218 of the wireless charging adaptor 206. The wireless charging adaptor 206 and the multi-use mount 102 can be considered parts of a multi-use mount and charging system 220, which can also be referred to herein more succinctly as a system 220. The connector cable 196 can also be considered part of the system 220. While not shown in the FIGS., the proximal end of the connector cable 196 can have any one of various different types of plugs for connecting the connector cable to a power source. Examples of the types of power source to which the connector cable 196 can be attached were described above, and thus, need not be repeated.

As noted above, the wireless charging adaptor 206 can alternatively and/or additionally be used to charge a portable electronic device (e.g., smartphone) when the adaptor 206 is not attached to the multi-use mount 102.

In accordance with certain embodiments, a backside of the adaptor body 212 includes a ferromagnetic metal ring 226 (represented by the dotted ring labeled 226 in FIGS. 20B and 20D), or a ferromagnetic metal plate, or some other arrangement of one or more ferromagnetic metal parts, which enables the wireless charging adaptor 206 to be magnetically attached to the magnetic ring 116 of the multi-use mount 102. It would also be possible for the backside of the adaptor body 212 to be a plate made entirely of ferromagnetic metal. In still other embodiments, the adaptor body 212 can include one or more magnets (in addition to the magnetic ring 216) that are configured to be magnetically attached to the magnetic ring 116 of the multi-use mount 102. Such one or more magnets (in addition to the magnetic ring 216) can also be used to attach the wireless charging adaptor 206 to a ferromagnetic metal surface, such as a door or side of a refrigerator. In alternative embodiments, the adaptor body 212 can be adhered to the front side of the main body 112 of an embodiment of the mount 102 using an adhesive. Other variations are also possible and within the scope of the embodiments described herein.

As can be appreciated from FIGS. 20H-20J, the footprint or overall shape of the wireless charging adaptor 206 (and more specifically, its adaptor body 212) is the same as the footprint or overall shape of the main body 112, and the base 132, of the multi-use mount 102 to which the wireless charging adaptor 206 is adapted to be attached. Accordingly, where the width of each of the main body 112 and the base 132 is 58.00 mm, and the height of each of the main body 112 and the base 132 is 70.00 mm, then the width and height of the wireless charging adaptor 206 (and more specifically, its adaptor body 212) are respectively 58.00 mm and 70.00 mm. In certain embodiments, a thickness of the adaptor body 212 is in the range of about 5mm to about 10mm (e.g., about 6.6mm). Other dimensions are also possible and within the scope of the embodiments described herein.

In the embodiment shown, the connector cable 196 can be electrically connectable to, and electrically disconnectable from, the wireless charging adaptor 206. In an alternative embodiment, a connector cable 196 is fixedly attached to and fixedly electrically connected to the wireless charging adaptor 206.

In order for a portable electronic device to be capable of being charged using with the wireless charger 186 (of the mount 102 or the adaptor 206), the portable electronic device should include an inductive charging receiver that, when electromagnetically coupled with a corresponding coil of the wireless charger 186, transfers electrical energy to charge an onboard battery of the portable electronic device or to otherwise provides power thereto, as is known in the art.

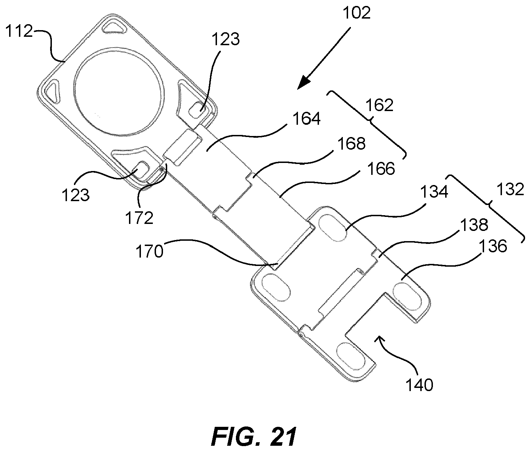

FIG. 21 is a front perspective view of the multi-use mount 102, according to another embodiment of the present technology, when the multi-use mount is in a completely unfolded and substantially flat position. FIG. 21 illustrates how certain portions of the main body 112, near its four corners, and generally in its center, can be made thinner to reduce the weight and the cost of materials of the mount 102. Such weight and cost of materials reduction aspects can be also be implemented in each of the other embodiments described herein.

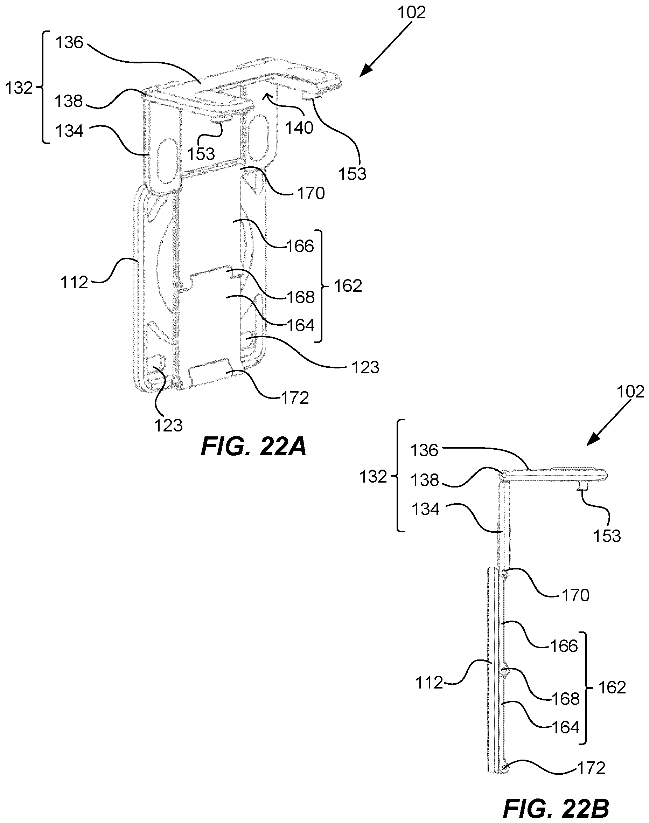

FIGS. 4A-4G, described above, were used to show how the multi-use mount 102 can be positioned in a vent louver attachment position. FIGS. 22A and 22B are, respectively, a rear perspective view and a side view of the mount 102 in an alternative vent louver attachment position, during which the neck 162 is parallel to and flush against the main body 112, the first base portion 134 is generally co-planer with the neck 162, the second base portion 136 extends generally perpendicularly from the first base portion 134, and the hooks 153 extend downward from the second base portion 136 generally parallel to the main body 112. The hooks 153 are also generally parallel to the first base portion 134, and generally parallel to the neck 162, when the mount 102 is in the vent louver attachment position shown in FIGS. 21A and 21B. In this configuration, the first base portion 134 is also generally perpendicular to the main body 112, and generally perpendicular to the neck 162. The hooks 153 are configured to be used to attach the mount 102 to a horizontal louver of a vent of a vehicle, to thereby mount a smartphone (or other type of portable electronic device) to the louver of the vent. The recess 140 enables the hooks to 153 to be placed on either side of (and thereby straddle) a vertical component of the vent, which vertical component is perpendicular to the horizontal louver to which the hooks 153 attach. When the mount 102 is in the vent louver attachment position shown in FIGS. 22A and 22B, a portable electronic device can be selectively attached to the main body 112 of the multi-use mount 102, either before or after the mount 102 is attached to a vent louver using the hooks 153. It is noted that the phrase "generally perpendicular," as used herein, means within +/- 10 degrees of being perpendicular. In other words, when a first component is generally perpendicular to a second component, they are within +/- 10 degrees of being oriented at 90 degrees relative to one another, i.e., they are oriented relative to one another at an angle within the range of 80 degrees to 100 degrees.

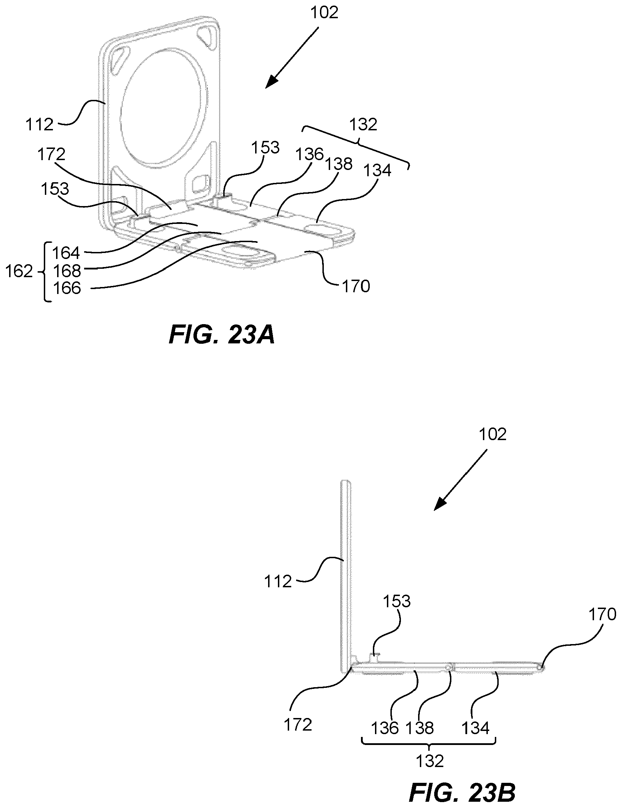

FIGS. 5A-5G, described above, were used to show how the multi-use mount 102 can be positioned in a CD slot attachment position. FIGS. 23A and 23B are, respectively, a rear perspective view and a side view of the mount 102 in an alternative CD slot attachment position, during which the first base portion 134 and the second base portion 136 of the base 132 are co-planar with one another, the first neck portion 164 and the second neck portion 166 of the neck 162 are co-planer with one another and resting within the trough 150 within the base 132, and the main body 112 is generally perpendicular to the base 132 and the neck 162. When the mount 102 is in the CD slot attachment position shown in FIGS. 23A and 23B, the base 132 (including the first and the second base portions 134 and 136) and the neck 162 (including the first and the second neck portions 164 and 166) both extend generally perpendicularly from an edge of the main body 112 so that a majority of the base 132 and a majority of the neck 162 can be inserted into a CD slot of a stereo installed in a dashboard of a vehicle. When the mount 102 is in the CD slot attachment position shown in FIGS. 23A and 23B, a portable electronic device can be selectively attached to the main body 112 of the multi-use mount 102, either before or after the mount 102 is inserted into a CD slot of a stereo installed in a dashboard of a vehicle. In FIGS. 23A and 23B, the main body 112 is shown as extending upward relative to the base 132 and the neck 162. However, it is noted that the entire mount 102 in the configuration of FIGS. 23A and 23B can be rotated 180 degrees so that the main body 112 instead extends downward relative to the base 132 and the neck 162, and the mount could still be used to attach a smartphone to a CD slot.

The various hinges described above, including the main body-to-neck hinge 172, the base-to-neck hinge 170, the intra-neck hinge 168, and the intra-base hinge 138, are hinge type mechanical joints that are configured to enable various components to pivot relative to one another. More specifically, the main body-to-neck hinge 172 is configured to enable the main body 112 and the neck 162 to pivot relative to one another; the base-to-neck hinge 170 is configured to enable the base 132 and the neck 162 to pivot relative to one another; the intra-neck hinge 168 is configured to enable the first neck portion 164 and the second neck portion 166 to pivot relative to one another; and the intra-base hinge 138 is configured to enable the first base portion 134 and the second base portion 136 to pivot relative to one another. In accordance with further embodiments of the present technology, one or more of the aforementioned hinge type joints can be replaced with another type of joint, such as a ball joint, in order to increase the number of degrees of freedom of the joint. More specifically, while a hinge type of joint has one degree of freedom, a ball joint has three degrees of freedom.

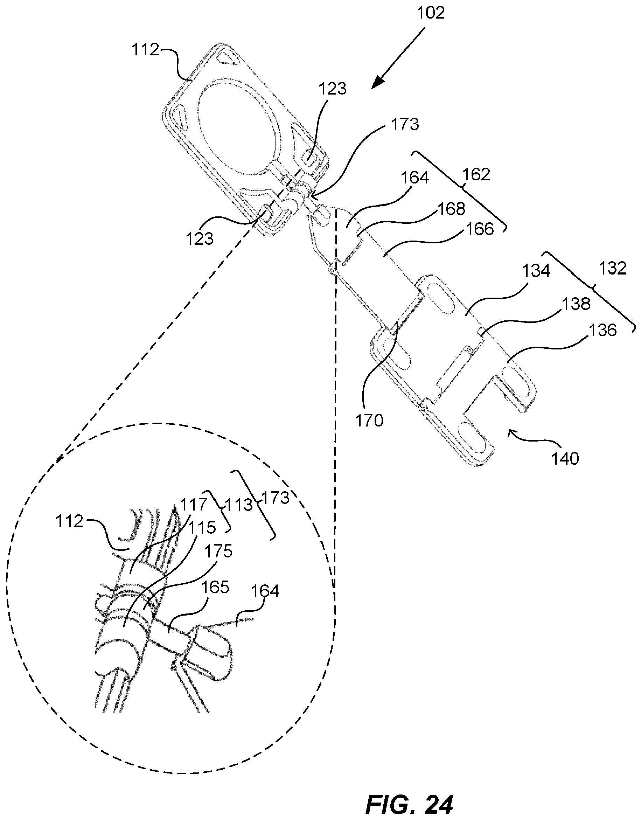

FIG. 24 is a front perspective view of the multi-use mount 102, according to another embodiment of the present technology, when the multi-use mount 102 is in a completely unfolded and substantially flat position. A comparison between FIG. 24 and FIG. 22 shows that in FIG. 24 the main body-to-neck hinge 172, which is a type of joint, is replaced with another type of joint, specifically a main body-to-neck ball joint 173. Beneficially, the main body-to-neck ball joint 173 enables the main body 112 (and a smartphone or other type of portable electronic device 202 attached thereto) to be rotated with three degrees of freedom, thereby increasing the different viewing angles and image capture angles that a smartphone or other type of portable electronic device 202 can be held at using the mount 102. A comparison between FIG. 24 and FIG. 22 also shows that in FIG. 24 the shape of an end of the first neck portion 164, adjacent to the main body-to-neck ball joint 173, has been changed to have a tapered shape in order to increase the range of motion of the main body 112, compared to if the end of the first neck portion 164 adjacent to the main body 112 still had a squared shape, as in FIG. 22.

In accordance with an embodiment, the ball joint 173 includes a spherical ball 175 that is pivotably coupled to the main body 112 within a socket 113 located at a lower end of the main body 112. The spherical ball 175 extends from a stud 165 of the first neck portion 164. The socket 113 includes a pair of socket sections 115, 117 that straddle the spherical ball 175. Other implementations of the ball joint 173 are also possible and within the scope of the embodiments described herein. It is noted that it would also be possible to replace another one of the hinge type joints with a ball joint. For example, alternatively, or additionally, the base-to-neck hinge 170 can be replaced within a ball joint, similar to the ball joint 173 described above, but not limited thereto.

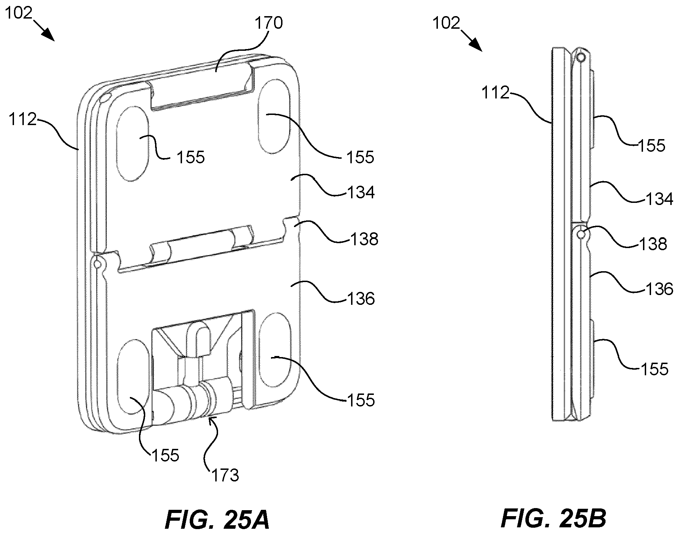

FIGS. 25A and 25B are, respectively, a rear perspective view and a side view of the mount 102 introduced in FIG. 24, while the mount 102 is in a completely folded position, which can also be referred to as a closed position, which position is similar to the position discussed above with reference to FIGS. 2A-2I.

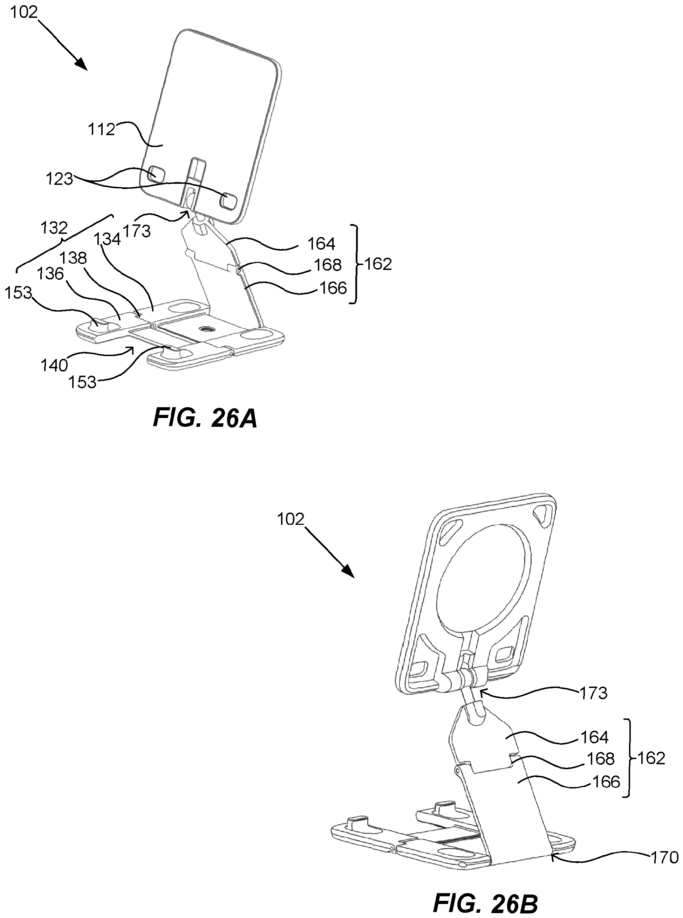

FIGS. 26A and 26B are, respectively, a front perspective view and a rear perspective view of the mount 102 introduced in FIG. 24, while the mount is in a standing easel position, similar to the position discussed above with reference to FIGS. 3A-3K.

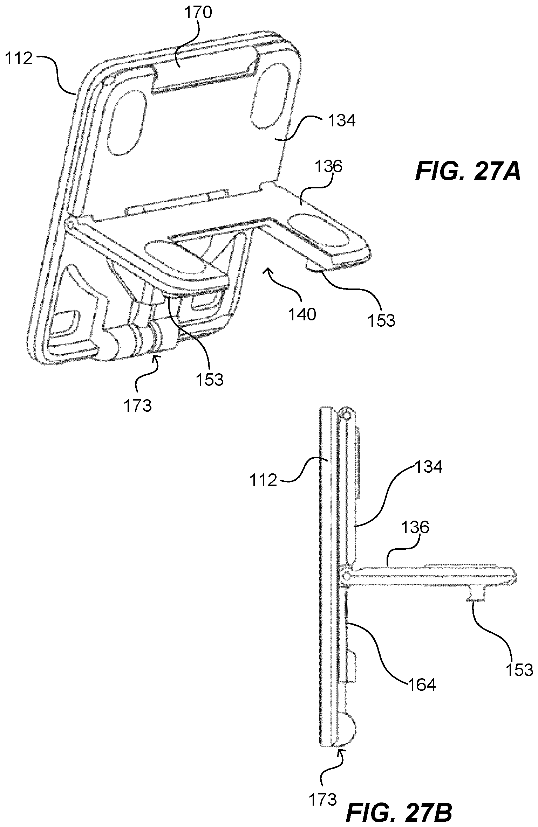

FIGS. 27A and 27B are, respectively, a rear perspective view and a side view of the mount 102 introduced in FIG. 24, while the mount 102 is in a vent louver attachment position, similar to the position discussed above with reference to FIGS. 4A-4G.

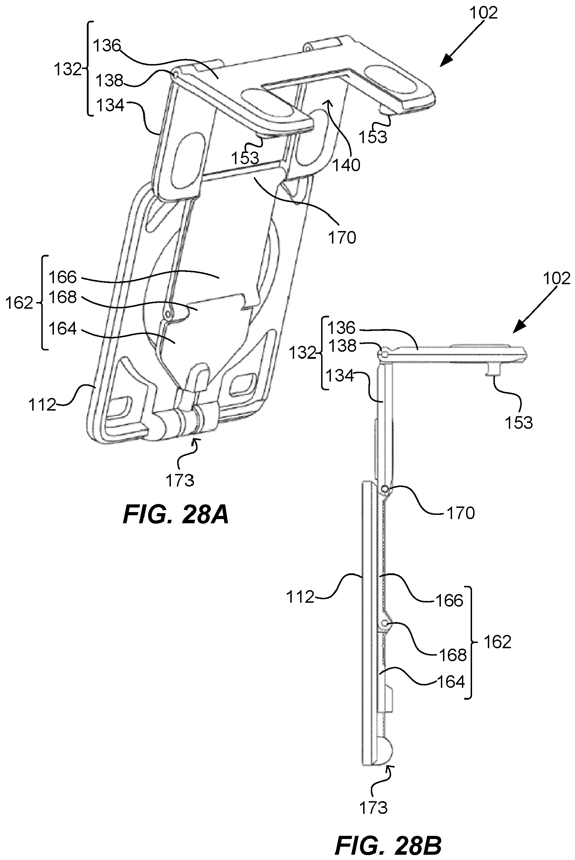

FIGS. 28A and 28B are, respectively, a rear perspective view and a side view of the mount 102 introduced in FIG. 24, while the mount 102 is in an alternative vent louver attachment position, similar to the position discussed above with reference to FIGS. 22A-22B.

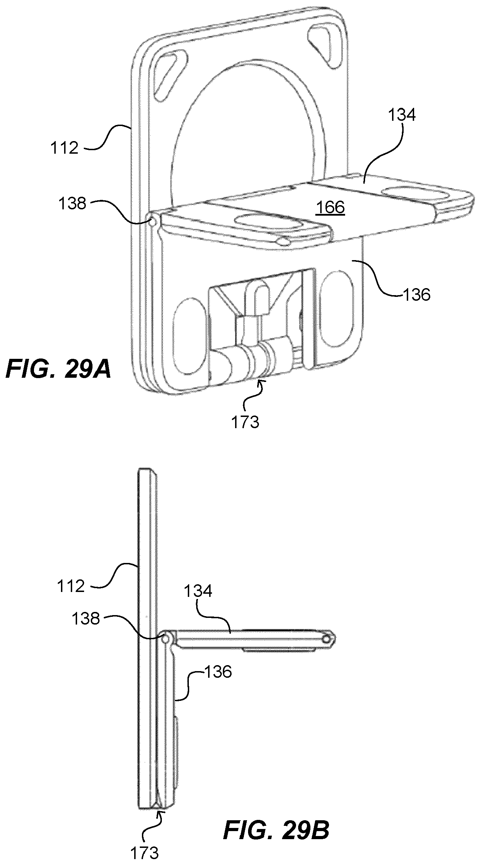

FIGS. 29A and 29B are, respectively, a rear perspective view and a side view of the mount 102 introduced in FIG. 24, while the mount 102 is in a CD slot attachment position, similar to the position discussed above with reference to FIGS. 5A-5I.

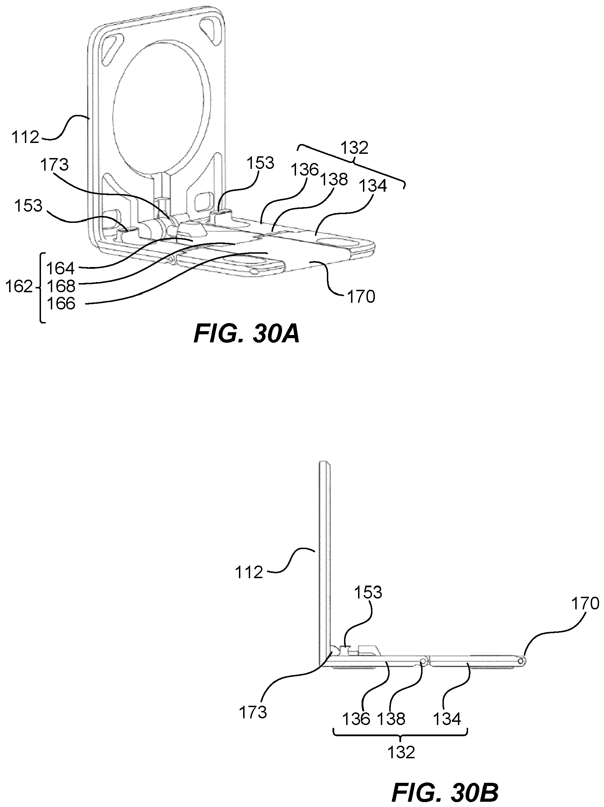

FIGS. 30A and 30B are, respectively, a rear perspective view and a side view of the mount 102 introduced in FIG. 24, while the mount 102 is in an alternative CD slot attachment position, similar to the position discussed above with reference to FIGS. 23A-23B.

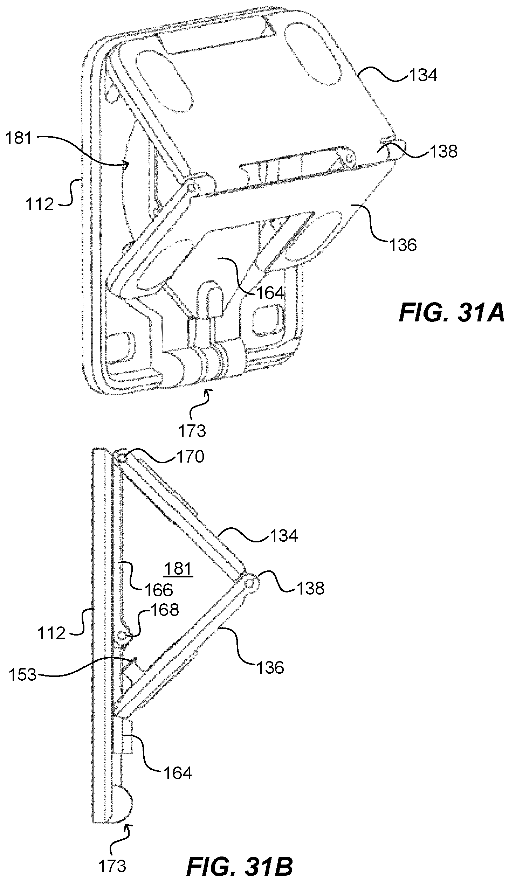

FIGS. 31A and 31B are, respectively, a rear perspective view and a side view of the mount 102 introduced in FIG. 24, while the mount 102 is in a small diameter pole attachment position, when the base 132 and the neck 162 are pivotally articulated to form a small triangular loop 181. The small triangular loop 181 can be wrapped around a pole, a fence, or a person's finger.

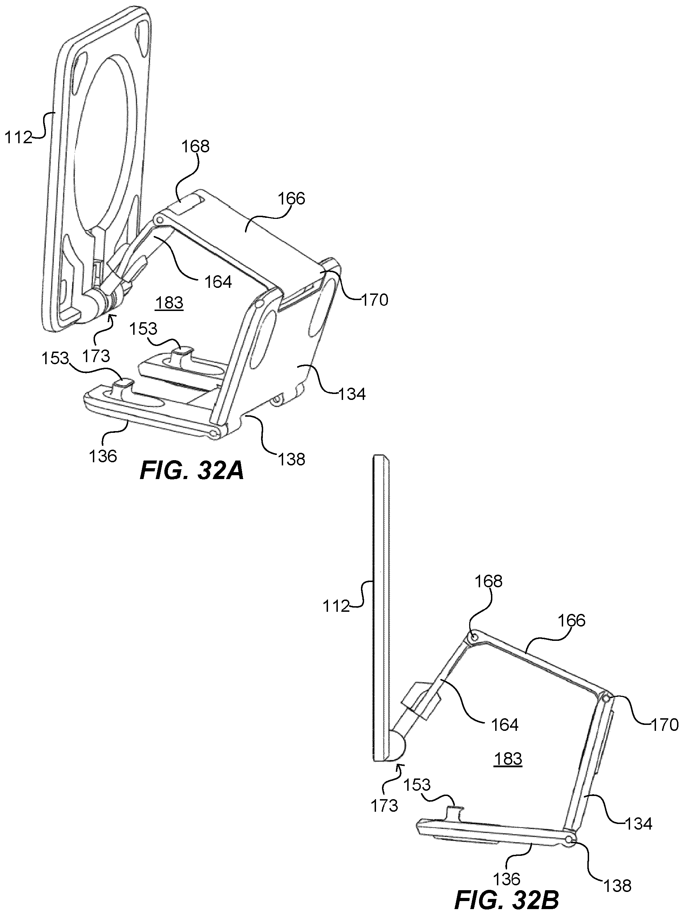

FIGS. 32A and 32B are, respectively, a rear perspective view and a side view of the mount 102 introduced in FIG. 24 in a large diameter pole attachment position, when the base 132 and the neck 162 are pivotally articulated to form a pentagonal loop 183, which can loop around a large diameter pole. The pentagonal loop 183 is similar to the pentagonal loop 182 introduced above with reference to FIGS. 7A-7E. However, in FIGS. 32A and 32B the hooks 153 are directed inward generally towards the inside of the loop 183. By contrast, in FIGS. 7A-7E the hooks 153 are directed outward away from the inside of the loop 182. It is noted that both types of pentagonal loops 182, 183 work in a similar manner, and that either type of the loop can be formed by appropriately articulating the portions of the neck 162 and the base 132.

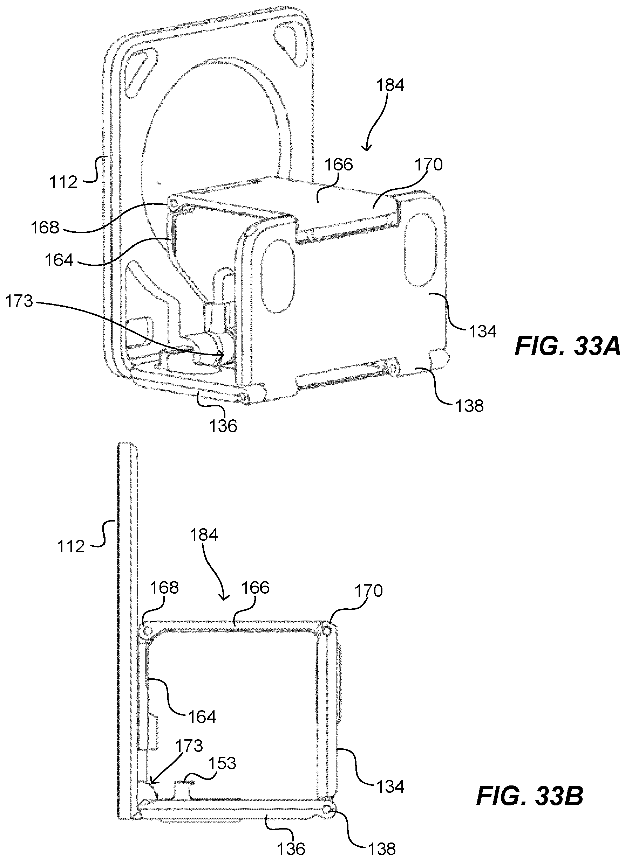

FIGS. 33A and 33B are, respectively, a rear perspective view and a side view of the mount 102 introduced in FIG. 24 in a finger loop grip position, when the base 132 and the neck 162 are pivotally articulated to form a square loop 184, similar to the position discussed above with reference to FIGS. 8A-8G.

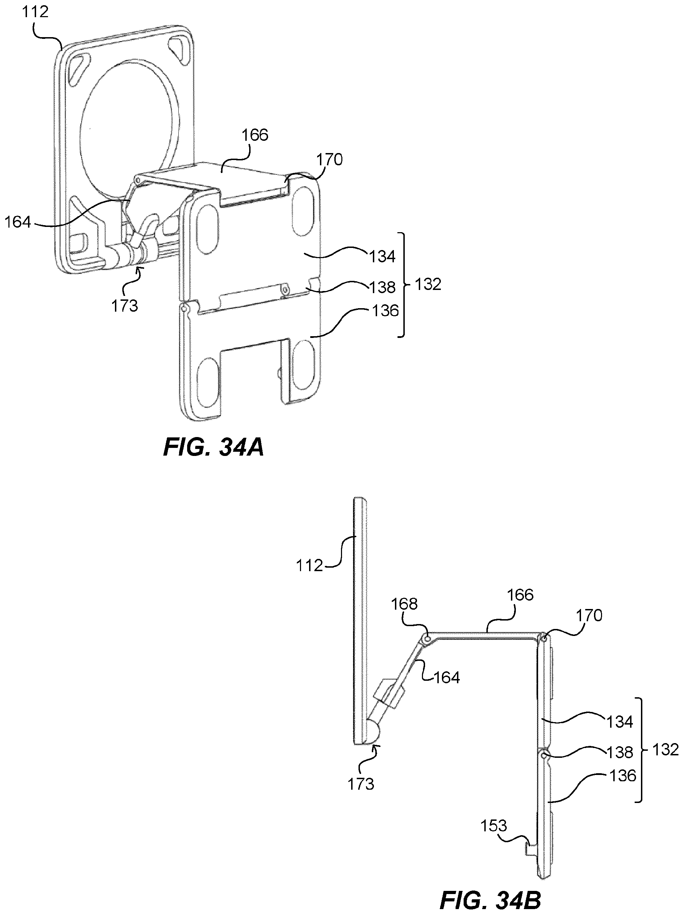

FIGS. 34A and 34B are, respectively, a rear perspective view and a side view of the mount 102 introduced in FIG. 24 in an upright airplane tray attachment position, similar to the position discussed above with reference to FIGS. 11A-11G.

While not specifically shown and described, the mount 102 introduced in FIG. 24 can be positioned in all of the other various positions described above with reference to the discussion of the other embodiments of the mount 102, e.g., discussed with reference to FIGS. 1A through 11G, but not limited thereto. Further, it is noted that the mount 102 introduced in FIG. 24 can be implemented as a wireless charging version of the multi-use mount, in a similar manner as was described above with reference to FIGS. 19A-19J, by integrating a wireless charger 186 into the main body of the mount.

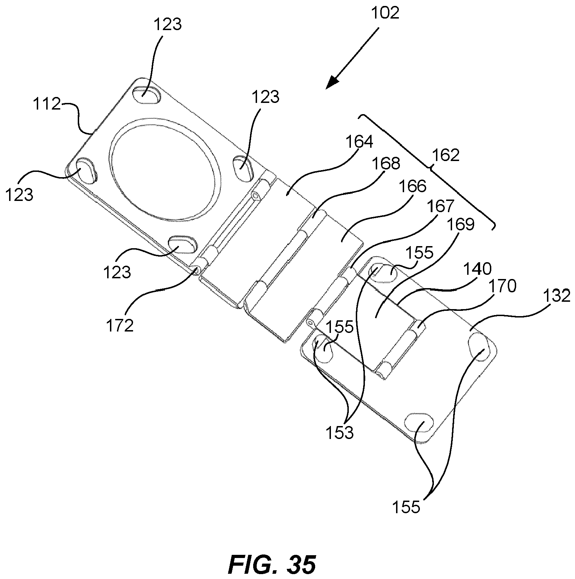

FIG. 35 is a front perspective view of the multi-use mount 102, according to still another embodiment of the present technology, when the multi-use mount is in a completely unfolded and substantially flat position. In this embodiment, the neck 162 includes three neck portions and two intra-neck hinges, the base 132 includes only one portion (rather than first and second base portions), and the neck-to-base hinge 170 is positioned near the middle of the base 132 (rather than at an end of the base opposite to where the recess 140 in the base is located). More specifically, the neck 162 includes a first neck portion 164, a second neck portion 166, and a third neck portion 169. The first neck portion 164 and the second neck portion 166 are pivotally articulatable about a first intra-neck hinge 168. The second neck portion 166 and the third neck portion 169 are pivotally articulatable about a second intra-neck hinge 167. Further, while in the completely unfolded position, the third neck portion 169 is positioned within a recess 140 within the base 132.

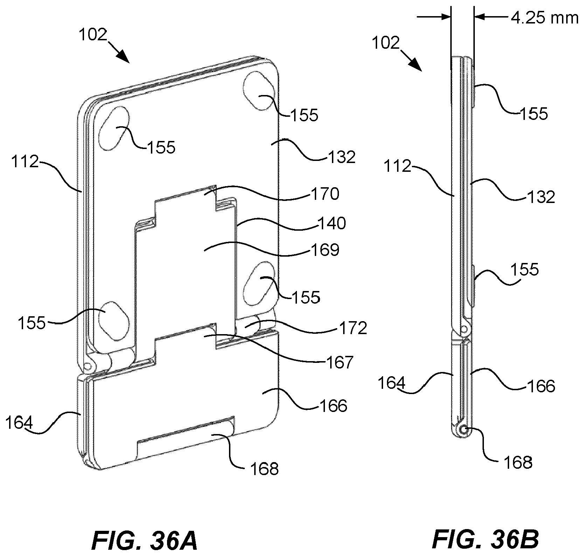

FIGS. 36A and 36B are, respectively, a rear perspective view and a side view of the mount 102 introduced in FIG. 35, while the mount 102 is in a completely folded position, which can also be referred to as a closed position. While the mount 102 in this embodiment is in the closed position, the first neck portion 164 is coplanar with the main body 112, and the second neck portion 166 and the third neck portion 169 are coplanar with one another and coplanar with the base 132, which reduces the thickness of the mount 102 in the closed position by more than 50% compared to the above described embodiments of the mount. More specifically, the thickness of the mount 102 introduced in FIG. 35 is less than 6 mm, e.g., about 4.25 mm, as shown in FIG. 36B. The reduction in the thickness of the mount 102 introduced in FIG. 35 in the closed position, compared to the previously described embodiments of the mount (which was about 8.05 mm, as shown in FIG. 2G), is due in part to the elimination of the trough 150 having a depth substantially the same as a thickness of the portions of the neck 162 that rest within the trough 150 when the mount 102 is in the closed (aka completely folded) position. By eliminating the trough 150, the thickness of the base 132 is able to be significantly reduced.

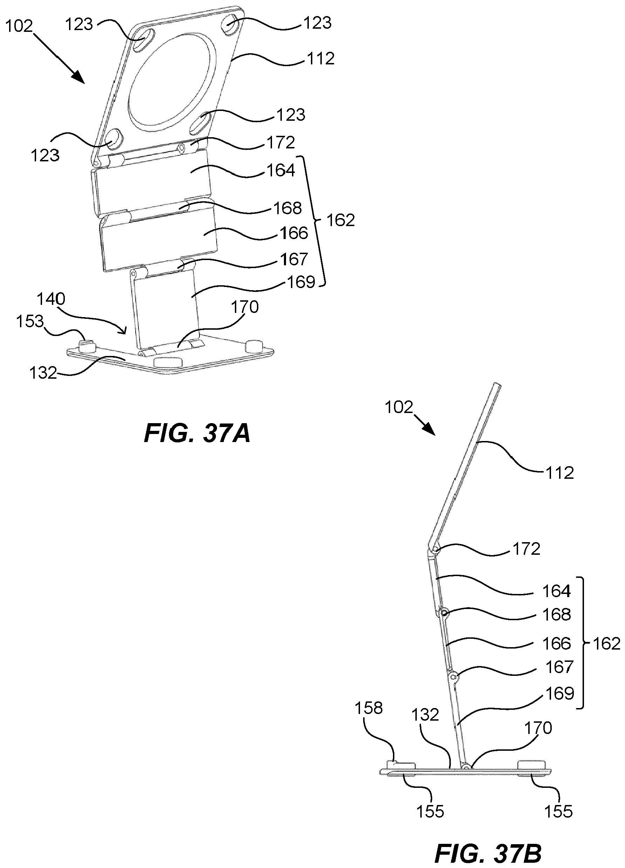

FIGS. 37A and 37B are, respectively, a rear perspective view and a side view of the mount 102 introduced in FIG. 35, while the mount is in a standing easel position. As can be appreciated from FIGS. 37A and 37B, in this embodiment the neck 162 extends upward from a central portion of the base 132, adjacent to the innermost end of the recess 140, rather than at an end of the base 132 opposite to where the recess 140 in the base is located, as was the case in previously described embodiments. This is because, as noted above, the neck-to-base hinge 170 is positioned near the middle of the base 132, adjacent to the innermost end of the recess 140, rather than at one of the outermost ends of the base 132 opposite to where the recess in the base is located.

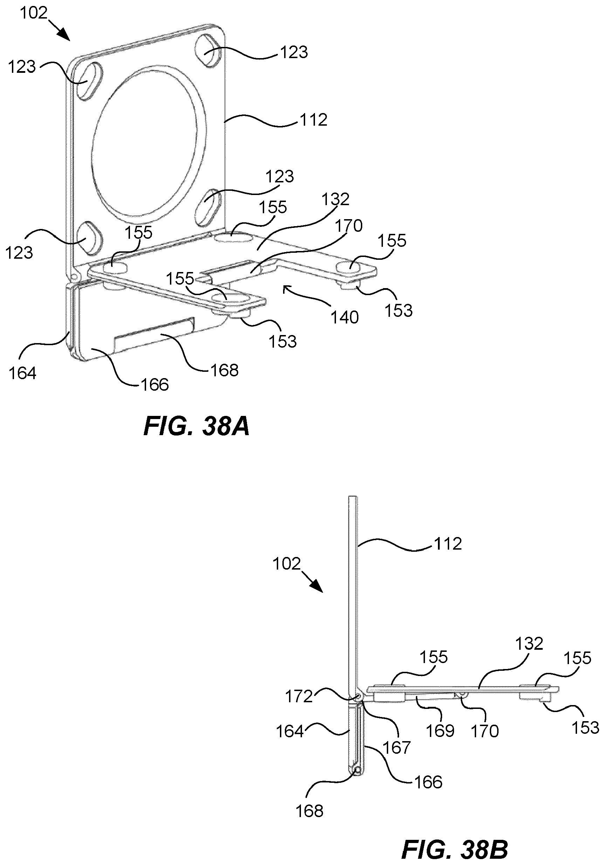

FIGS. 38A and 38B are, respectively, a rear perspective view and a side view of the mount 102 introduced in FIG. 35, while the mount is in a vent louver attachment position. In this vent louver attachment position, the first neck portion 164 is coplanar with the main body 112, the second neck portion 166 is parallel with and flush against the first neck portion 164, and the third neck portion 169 is generally perpendicular to second neck portion 166 (as well as the first neck portion 164 and the second neck portion 166). Additionally, the base 132 is generally perpendicular to the main body 112 (as well as to the first neck portion 164 and the second neck portion 166), with the third neck portion 169 being flush against a portion of the base 132 to reveal the recess 140. The recess 140 enables the hooks to 153 to be placed on either side of (and thereby straddle) a vertical component of the vent, which vertical component is perpendicular to the horizontal louver to which the hooks 153 attach.

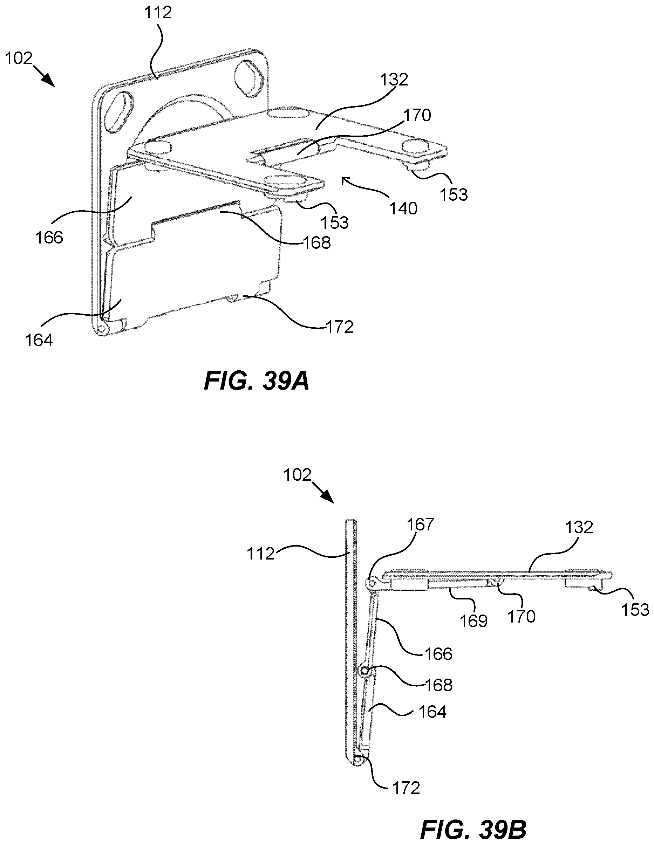

FIGS. 39A and 39B are, respectively, a rear perspective view and a side view of the mount 102 introduced in FIG. 35, while the mount 102 is in an alternative vent louver attachment position.

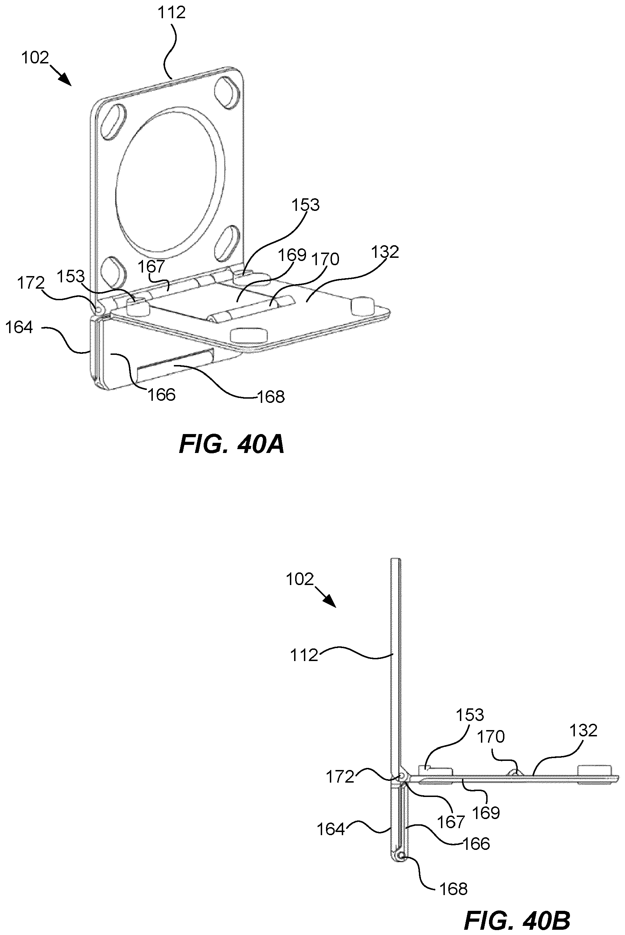

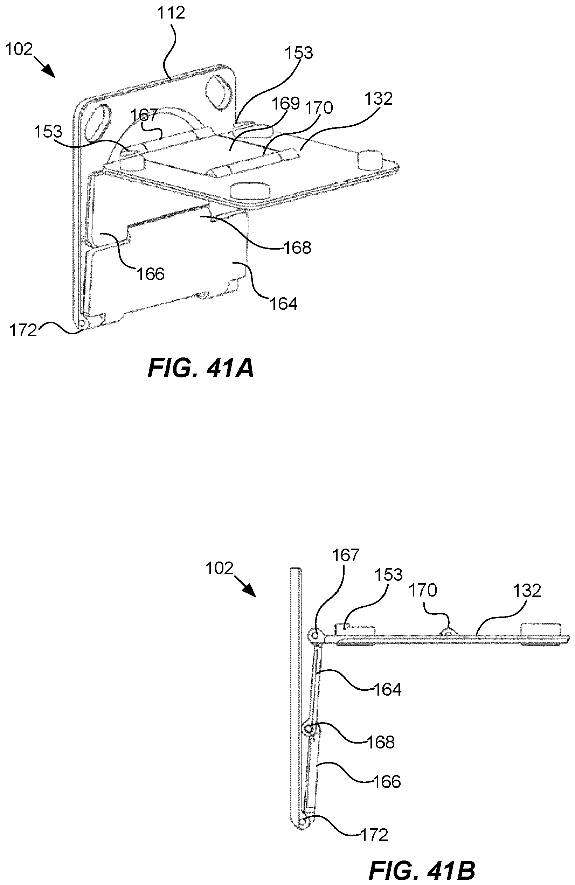

FIGS. 40A and 40B are, respectively, a rear perspective view and a side view of the mount 102 introduced in FIG. 35, while the mount is in a CD slot attachment position. In this CD slot attachment position, the first neck portion 164 is coplanar with the main body 112, the second neck portion 166 is flush against and parallel to the first neck portion 164 (as well as parallel to the main body 112). The third neck portion 169 is generally perpendicular to the second neck portion 166 (as well as generally perpendicular to the first neck portion 164 and the main body 112), and the third neck portion 169 is coplanar with (and resting within the recess 140 of) the base 132. FIGS. 41A and 41B are, respectively, a rear perspective view and a side view of the mount 102 introduced in FIG. 35, while the mount 102 is in an alternative CD slot attachment position.

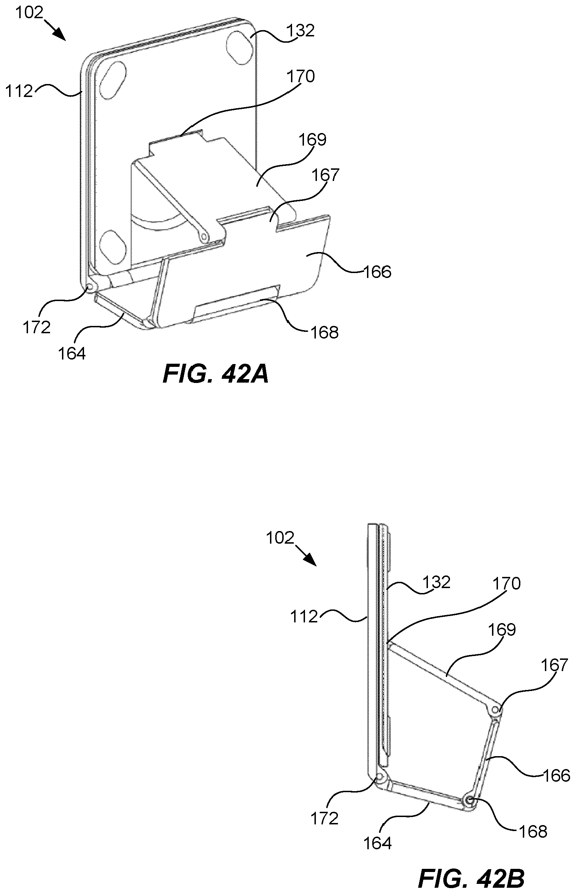

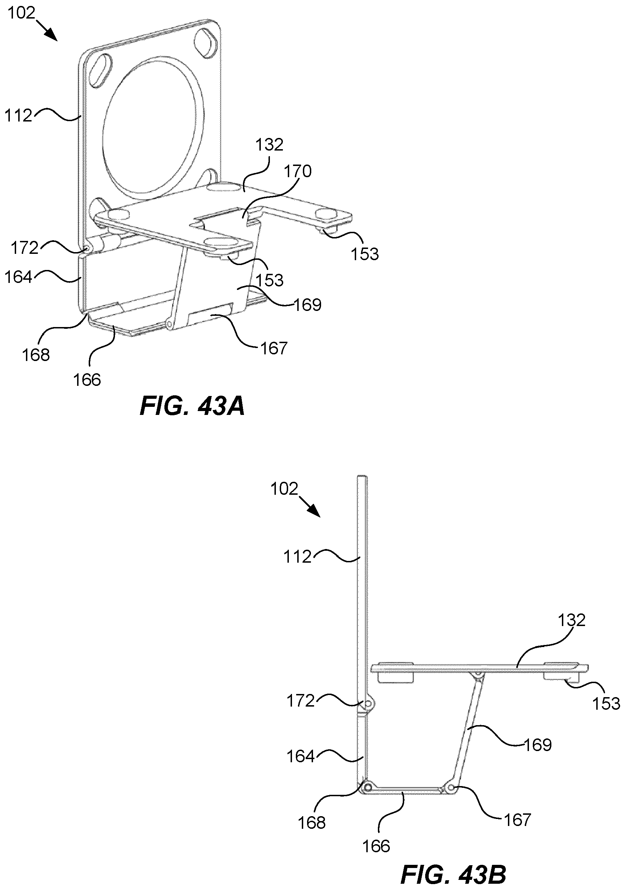

FIGS. 42A and 42B are, respectively, a rear perspective view and a side view of the mount 102 introduced in FIG. 35, while the mount 102 is in a finger loop grip position. In this position, the main body 112 and the base 132 are flush against one another and parallel to one another, and the first neck portion 164, the second neck portion 166, and the third neck portion 169 form a loop within which a user can insert one or more fingers. FIGS. 43A and 43B are, respectively, a rear perspective view and a side view of the mount 102 introduced in FIG. 35, while the mount 102 is in an alternative finger loop attachment position. The loops shown in FIGS. 42A-42B, and 43A-43B can alternatively be wrapped around a pole, or a fence, rather than a person's finger(s).

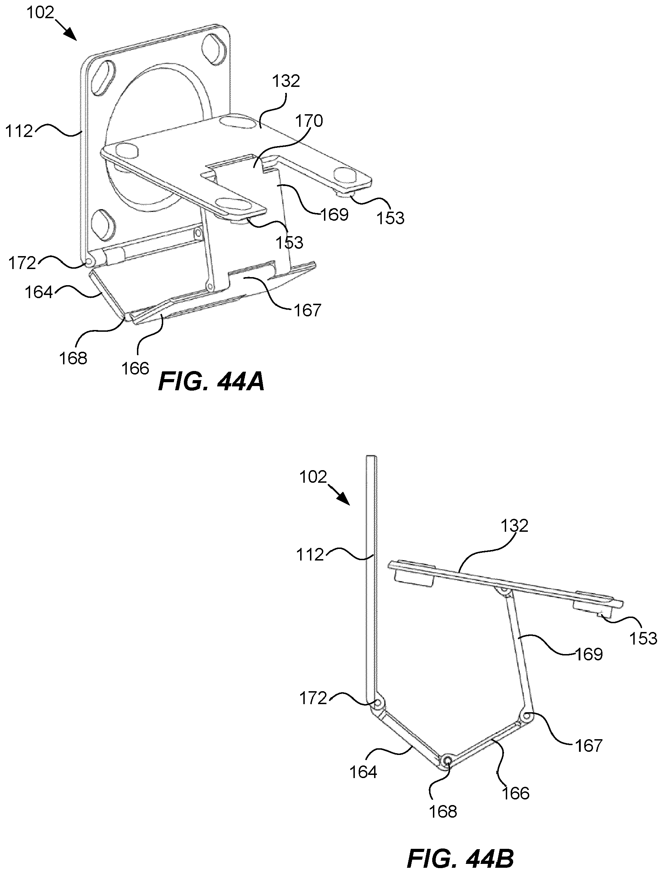

FIGS. 44A and 44B are, respectively, a rear perspective view and a side view of the mount introduced in FIG. 35 in a large diameter pole attachment position, which can be used in a manner similar to the position shown in FIGS. 7A-7E and 32A-32B.

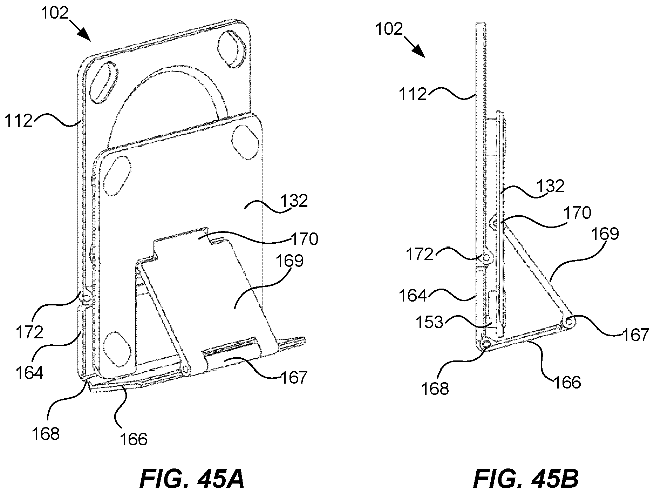

FIGS. 45A and 45B are, respectively, a rear perspective view and a side view of the mount introduced in FIG. 35 in a side grip position, which can be used in a manner similar to the position shown in FIGS. 6A-6G.

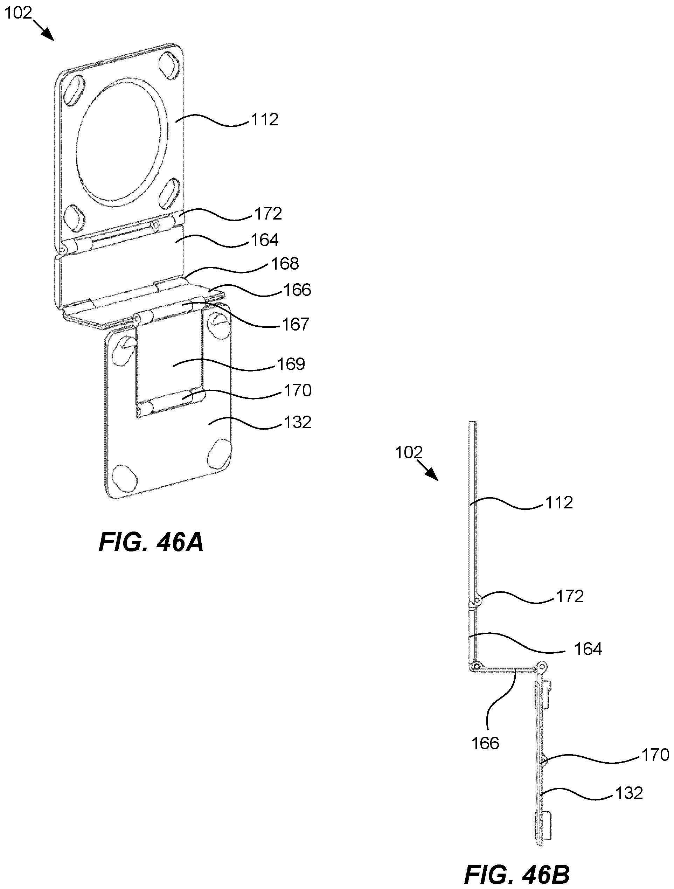

FIGS. 46A and 46B are, respectively, a rear perspective view and a side view of the mount introduced in FIG. 35 in a upright airplane tray attachment position, which can be used in a manner similar to the position shown in FIGS. 9A-9G.

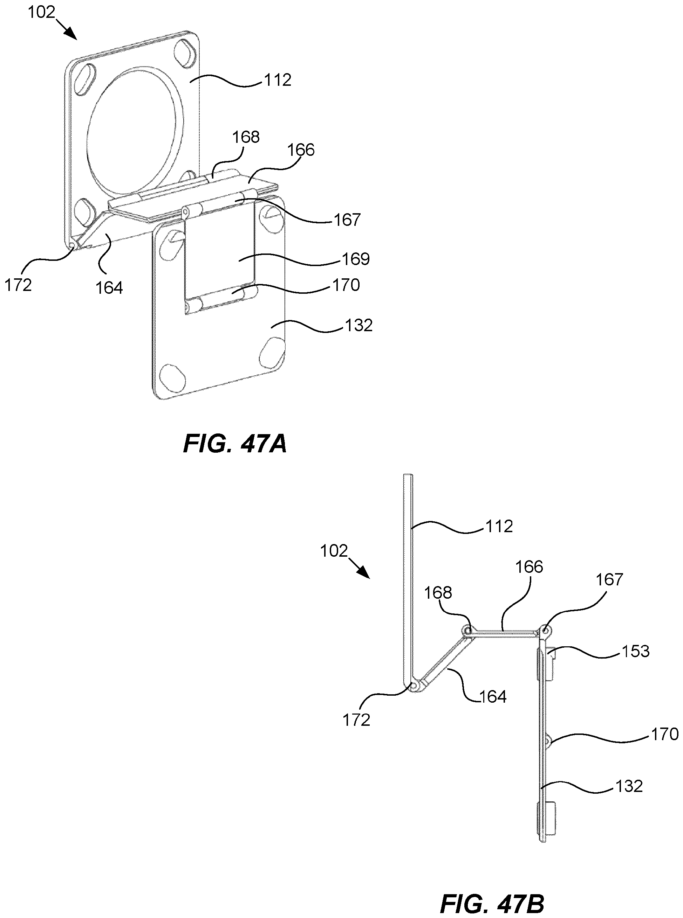

FIGS. 47A and 47B are, respectively, a rear perspective view and a side view of the mount introduced in FIG. 24 in an alternative upright airplane tray attachment position, which can be used in a manner similar to the position shown in FIGS. 11A-11G.

While not specifically shown and described, the mount 102 introduced in FIG. 35 can be positioned in all of the other various positions described above with reference to the discussion of the other embodiments of the mount 102, e.g., discussed with reference to FIGS. 1A through 11G, but not limited thereto. It is also within the scope of the embodiments described herein for one or more of the hinge type joints, such as the main body-to-neck hinge 172 to be replaced with a ball joint (similar to ball joint 173 discussed above) in order to enable the main body 112 (and a smartphone or other type of portable electronic device 202 attached thereto) to be rotated with three degrees of freedom, thereby increasing the different viewing angles and image capture angles that a smartphone or other type of portable electronic device 202 can be held at using the mount 102 introduced in FIG. 35. Further, it is noted that the mount 102 introduced in FIG. 35 can be implemented as a wireless charging version of the multi-use mount, in a similar manner as was described above with reference to FIGS. 19A-19J, by integrating a wireless charger 186 into the main body of the mount.

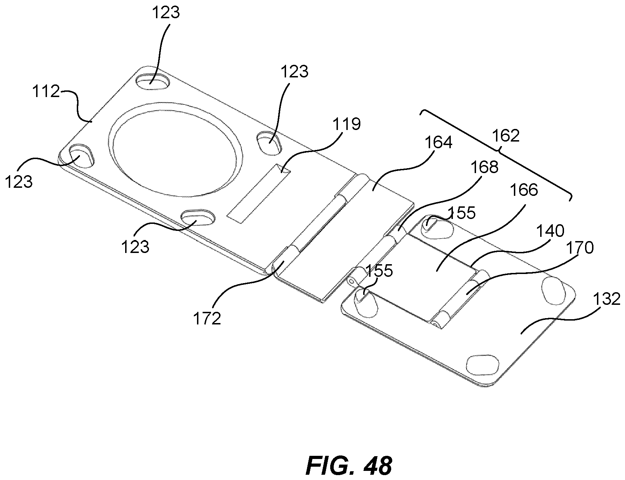

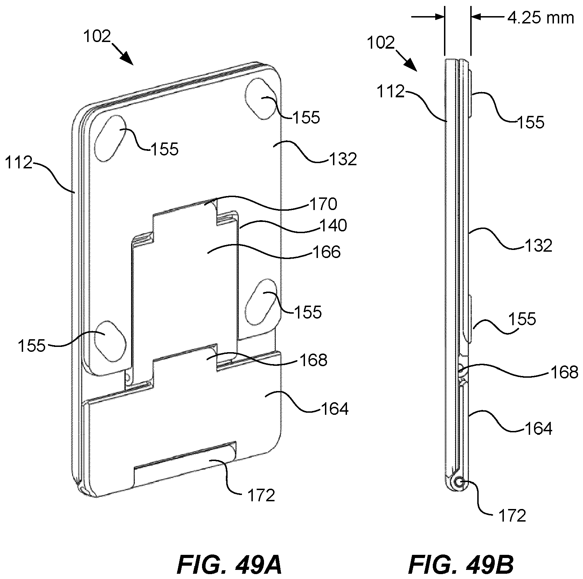

FIG. 48 is a front perspective view of the multi-use mount 102, according to still another embodiment of the present technology, when the multi-use mount is in a completely unfolded and substantially flat position. In this embodiment, the neck 162 includes two neck portions and one intra-neck hinge, the base 132 includes only one portion (rather than first and second base portions), and the neck-to-base hinge 170 is positioned near the middle of the base 132 at an innermost end of the recess 140 in the base 132 (rather than at one of the outermost ends of the rectangular base 132 opposite to where the recess 140 in the base is located). More specifically, the neck 162 includes a first neck portion 164 and a second neck portion 166 that are pivotally articulatable about an intra-neck hinge 168. Further, while in the completely unfolded position, the second neck portion 166 is positioned within a recess 140 within the base 132. The main body 112 is shown as including a cavity 119 within which a portion of the base-to-neck hinge 170 rests when the mount is in the closed position. In this embodiment, the length of the main body 112 is equal to the collective length of the first neck portion 164 and the base 132, such that when the mount 102 is in the closed position, as shown in FIGS. 49A and 49B discussed below, the first neck portion 164, the second neck portion 166, and the base 132 are all coplanar with one another and flush against and of equal length as the main body 112.

FIGS. 49A and 49B are, respectively, a rear perspective view and a side view of the mount 102 introduced in FIG. 48, while the mount 102 is in the completely folded position, which can also be referred to as the closed position. While the mount 102 in this embodiment is in the closed position, the first neck portion 164, the second neck portion 166, and the base 132 are all coplanar with one another, which reduces the thickness of the mount 102 in the closed position by more than 50% compared to the embodiments of the mount described with reference to FIGS. 1A through 34B. More specifically, the thickness of the mount 102 introduced in FIG. 48 is less than 6 mm, e.g., about 4.25 mm, as shown in FIG. 36B, as was also the case with the embodiment described above with reference to FIGS. 35 through 47B. The reduction in the thickness of the mount 102 introduced in FIG. 48 in the closed position, compared to the previously described embodiments of the mount (which was about 8.05 mm, as shown in FIG. 2G), is again due in part to the elimination of the trough 150 having a depth substantially the same as a thickness of the portions of the neck 162 that rest within the trough 150 when the mount 102 is in the closed (aka completely folded) position. By eliminating the trough 150, the thickness of the base 132 is able to be significantly reduced.

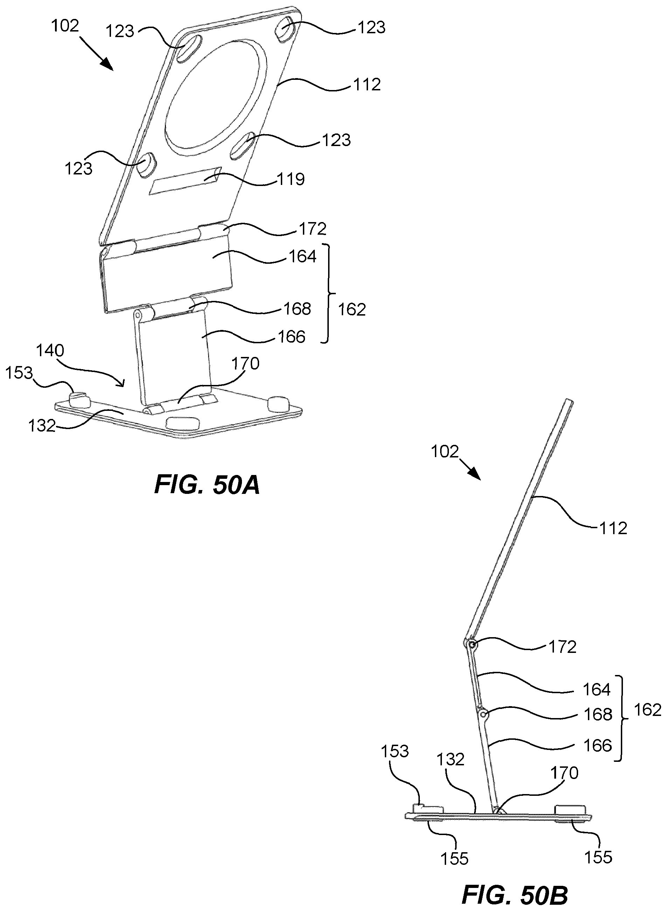

FIGS. 50A and 50B are, respectively, a rear perspective view and a side view of the mount 102 introduced in FIG. 48, while the mount is in a standing easel position. As can be appreciated from FIGS. 40A and 40B, in this embodiment the neck 162 extends upward from a central portion of the base 132, adjacent to the innermost end of the recess 140 (as was also the case in the embodiment introduced in FIG. 35), rather than from an outer peripheral end of the base 132, as was the case in many previously described embodiments. This is because, as noted above, the neck-to-base hinge 170 is positioned near the middle of the base 132, adjacent to the innermost end of the recess 140, rather than at one of the outermost ends of the base 132 opposite to where the recess 140 in the base is located.

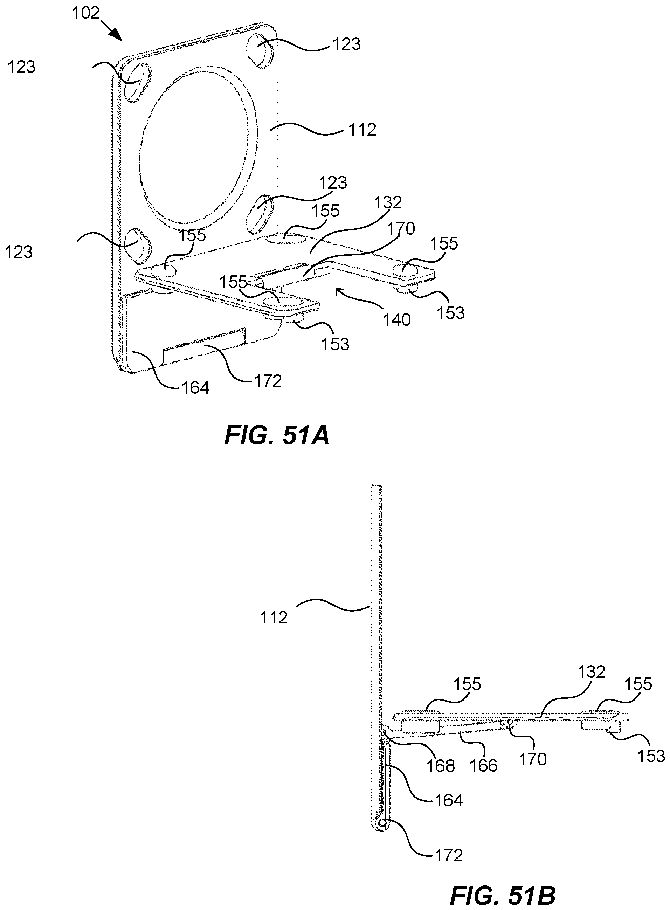

FIGS. 51A and 51B are, respectively, a rear perspective view and a side view of the mount 102 introduced in FIG. 48, while the mount is in a vent louver attachment position. In this vent louver attachment position, the first neck portion 164 is parallel with and flush against a portion of the main body 112, and the second neck portion 166 supports the base 132 such that the base 132 extends generally perpendicular relative to the main body 112 and the first neck portion 164. The recess 140 in the base 132 enables the hooks to 153 to be placed on either side of (and thereby straddle) a vertical component of the vent, which vertical component is perpendicular to the horizontal louver to which the hooks 153 attach.

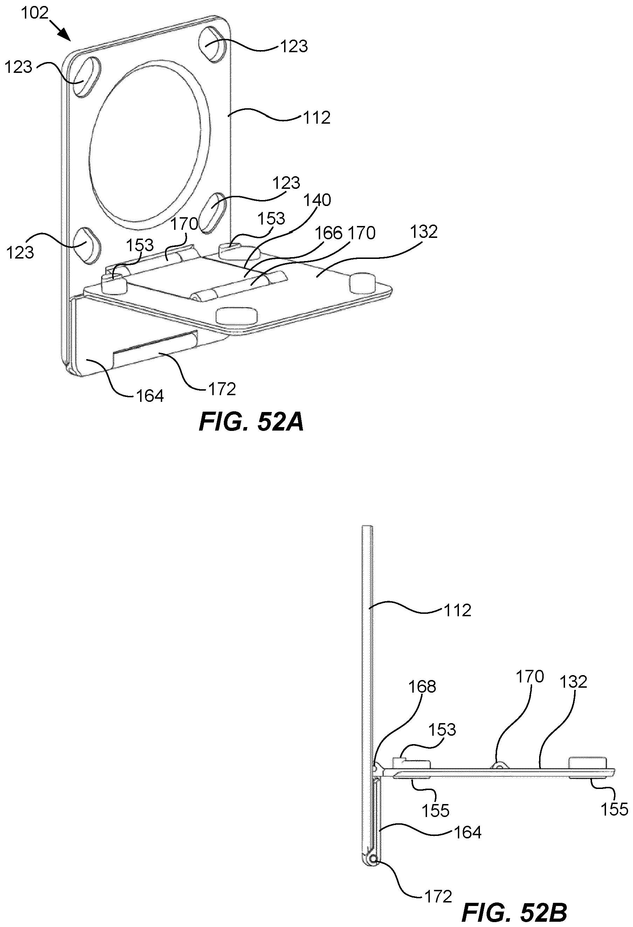

FIGS. 52A and 52B are, respectively, a rear perspective view and a side view of the mount 102 introduced in FIG. 48, while the mount is in a CD slot attachment position. In this CD slot attachment position, the first neck portion 164 is parallel with and flush against a portion of the main body 112. The second neck portion 166 is coplanar with the base 132 and positioned within the recess 140 in the base 132, and the second neck portion 166 and the base 132 are generally perpendicular relative to the main body 112 and relative to the first neck portion 164.

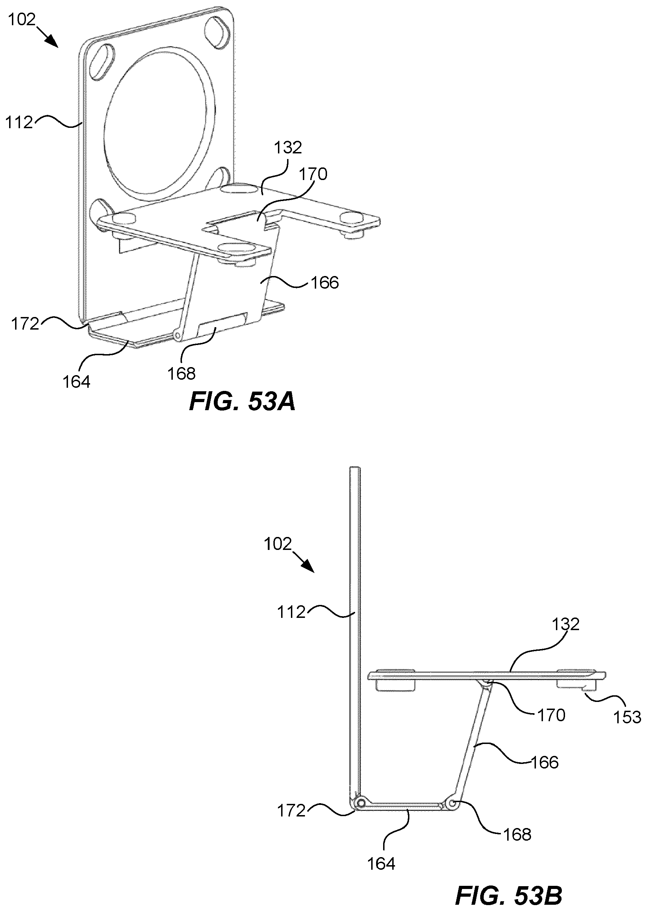

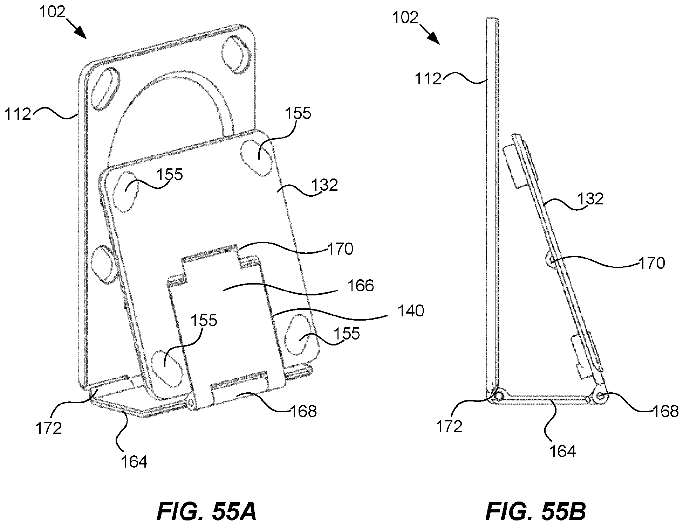

FIGS. 53A and 53B are, respectively, a rear perspective view and a side view of the mount 102 introduced in FIG. 48, while the mount 102 is in a finger loop grip position. In this position, the main body 112, the first neck portion 164, the second neck portion 166, and the base 132 form a loop within which a user can insert one or more fingers. The loop shown in FIGS. 55A-53B can alternatively be wrapped around a pole, or a fence, rather than a person's finger(s).

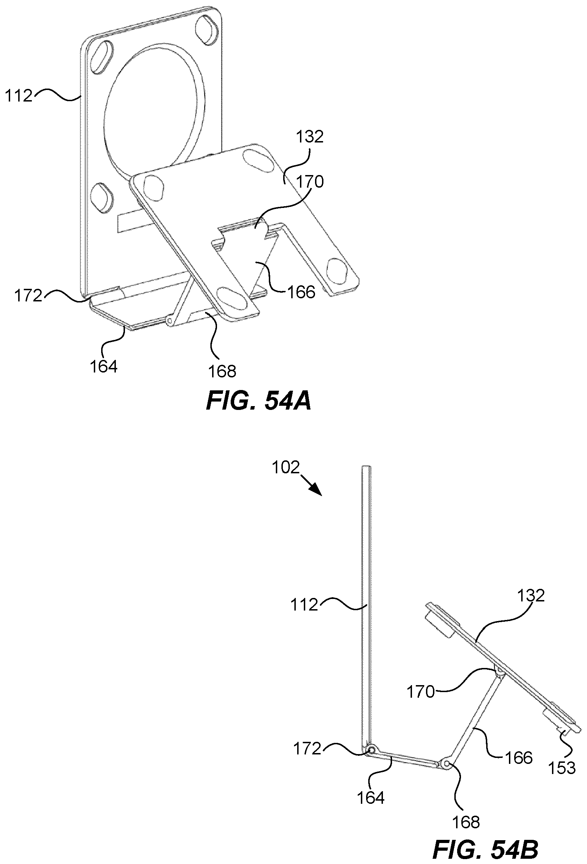

FIGS. 54A and 54B are, respectively, a rear perspective view and a side view of the mount introduced in FIG. 48 in a large diameter pole attachment position, which can be used in a manner similar to the position shown in FIGS. 7A-7E, 32A-32B and 44A-44B.

FIGS. 55A and 55B are, respectively, a rear perspective view and a side view of the mount introduced in FIG. 48 in a side grip position, which can be used in a manner similar to the position shown in FIGS. 6A-6G, and in FIGS. 45A-45B.

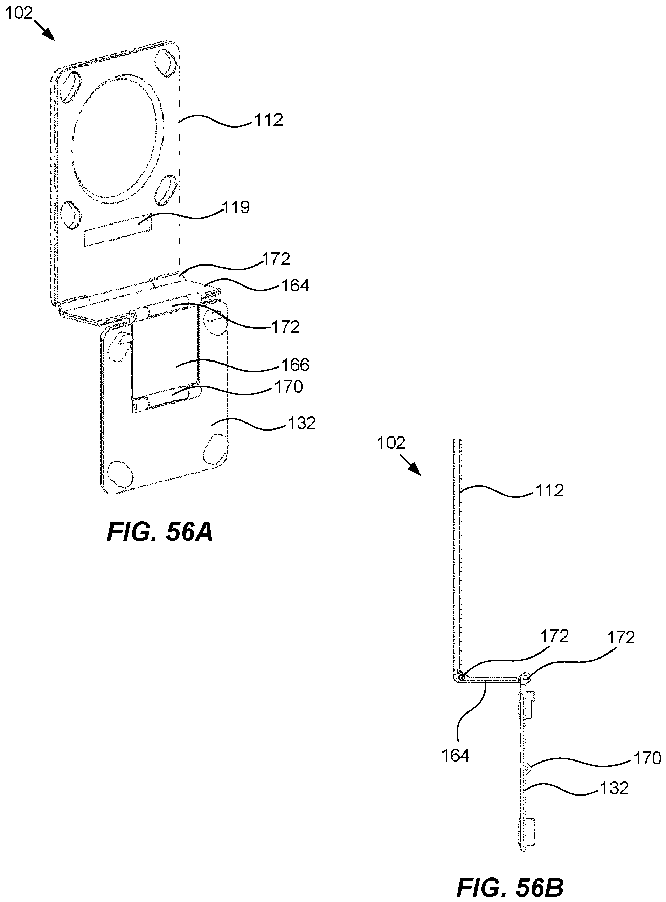

FIGS. 56A and 56B are, respectively, a rear perspective view and a side view of the mount introduced in FIG. 48 in a upright airplane tray attachment position, which can be used in a manner similar to the position shown in FIGS. 9A-9G, and in FIGS. 46A-46B.

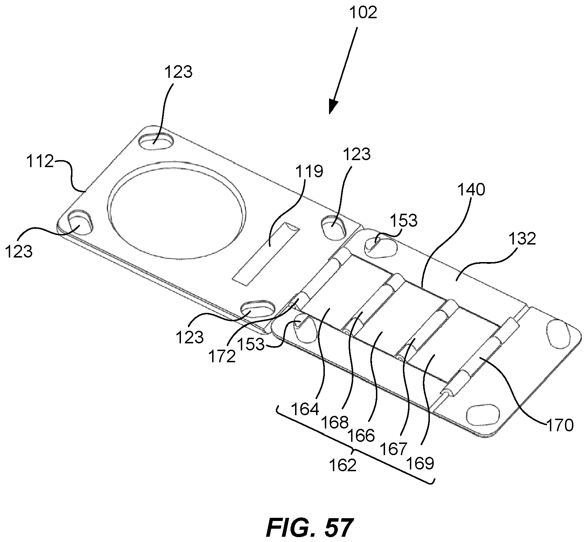

FIG. 57 is a front perspective view of the multi-use mount 102, according to still another embodiment of the present technology, when the multi-use mount 102 is in a completely unfolded and substantially flat position. In this embodiment, the neck 162 includes three neck portions and two intra-neck hinges, the base 132 includes only one portion, and the neck-to-base hinge 170 is positioned at the innermost end of the recess 140 in the base 132 (rather than at an end of the base opposite to where the recess 140 in the base is located). More specifically, the neck 162 includes a first neck portion 164, a second neck portion 166, and a third neck portion 169. The first neck portion 164 and the second neck portion 166 are pivotally articulatable about a first intra-neck hinge 168. The second neck portion 166 and the third neck portion 169 are pivotally articulatable about a second intra-neck hinge 167. Further, while in the completely unfolded position, the entirety of the neck 162 (including the first neck portion 164, the second neck portion 166, and the third neck portion 169) is positioned within the recess 140 within the base 132. In this particular embodiment, the first neck portion 164, the second neck portion 166, and the third neck portion 169 are identical to one another, which simplifies the manufacture of this particular embodiment, because there is no need to manufacture two or three different types of neck portions. The main body 112 is shown as including a cavity 119 within which a portion of the base-to-neck hinge 170 rests when the mount is in the closed position.

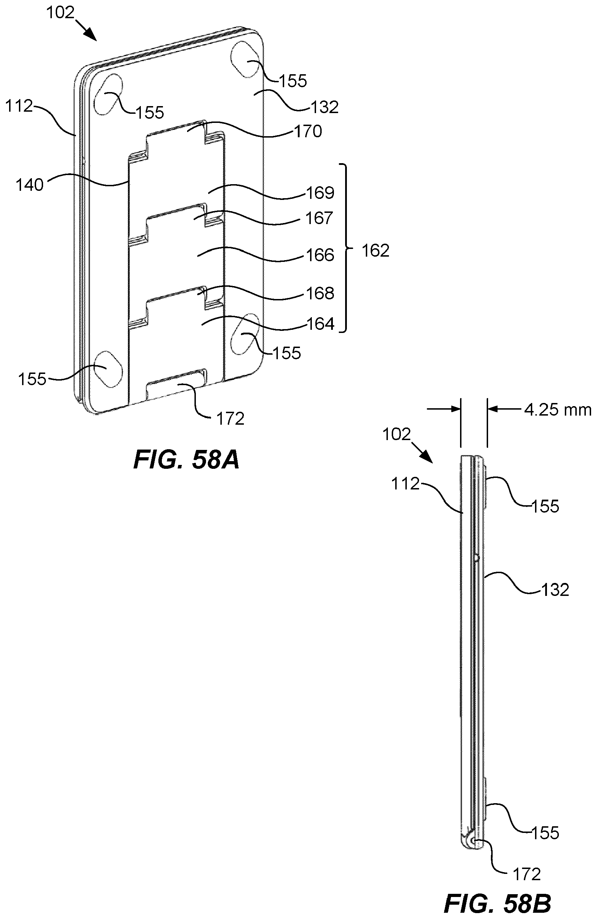

FIGS. 58A and 58B are, respectively, a rear perspective view and a side view of the mount 102 introduced in FIG. 57, while the mount 102 is in the completely folded position, which can also be referred to as the closed position. While in the completely folded position (aka the closed position), the entirety of the neck 162 (including the first neck portion 164, the second neck portion 166, and the third neck portion 169) positioned within the recess 140 within the base 132, the base 132 is flush against a portion of the main body 112, and the neck 162 is flush against a further portion of the main body.

While the mount 102 in this embodiment is in the closed position, the first neck portion 164, the second neck portion 166, the third neck portion 169, and the base 132 are all coplanar with one another, which reduces the thickness of the mount 102 in the closed position by more than 50% compared to the embodiments of the mount described with reference to FIGS. 1A through 34B. More specifically, the thickness of the mount 102 introduced in FIG. 48 is less than 6 mm, e.g., about 4.25 mm, as shown in FIG. 36B, as was also the case with the embodiment described above with reference to FIGS. 35 through 55B. The reduction in the thickness of the mount 102 introduced in FIG. 57 in the closed position, compared to the previously described embodiments of the mount (which was about 8.05 mm, as shown in FIG. 2G), is again due in part to the elimination of the trough 150 having a depth substantially the same as a thickness of the portions of the neck 162 that rest within the trough 150 when the mount 102 is in the closed (aka completely folded) position. By eliminating the trough 150, the thickness of the base 132 is able to be significantly reduced.

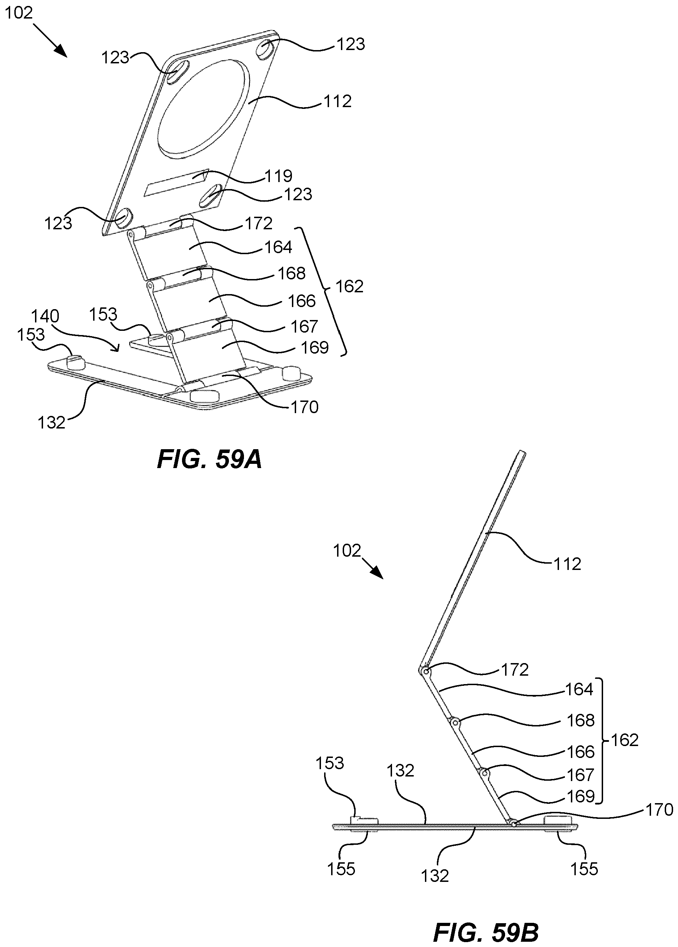

FIGS. 59A and 59B are, respectively, a rear perspective view and a side view of the mount introduced in FIG. 57, while the mount is in a standing easel position. As can be appreciated from FIGS. 59A and 59B, in this embodiment the neck 162 extends upward from the innermost end of the recess 140, rather than from an end of the base 132 opposite to where the recess 140 in the base is located, as was the case in many previously described embodiments. This is because, as noted above, the neck-to-base hinge 170 is positioned near the middle of the base 132, adjacent to the innermost end of the recess 140, rather than at one of the outermost ends of the base 132 opposite to where the recess 140 in the base is located.

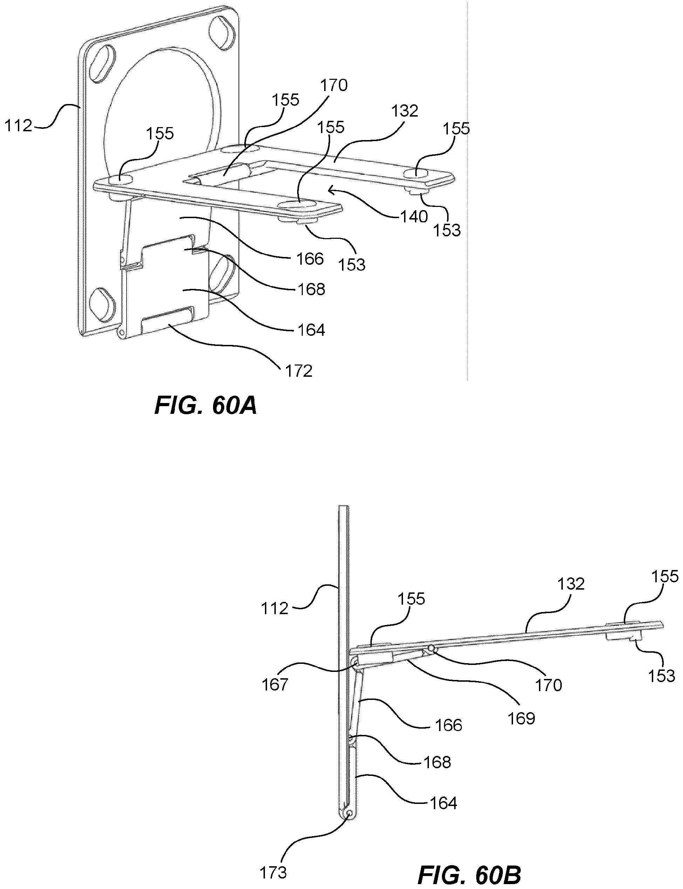

FIGS. 60A and 60B are, respectively, a rear perspective view and a side view of the mount 102 introduced in FIG. 57, while the mount is in a vent louver attachment position. In this vent louver attachment position, the first neck portion 164, is parallel with and flush against a portion of the main body 112, the second neck portion 166 is slightly offset from being parallel with the main body, and the third neck portion 169 supports the base 132 such that the base 132 extends generally perpendicular relative to the main body 112 and the first and second neck portions 164 and 166. The recess 140 in the base 132 enables the hooks to 153 to be placed on either side of (and thereby straddle) a vertical component of the vent, which vertical component is perpendicular to the horizontal louver to which the hooks 153 attach.

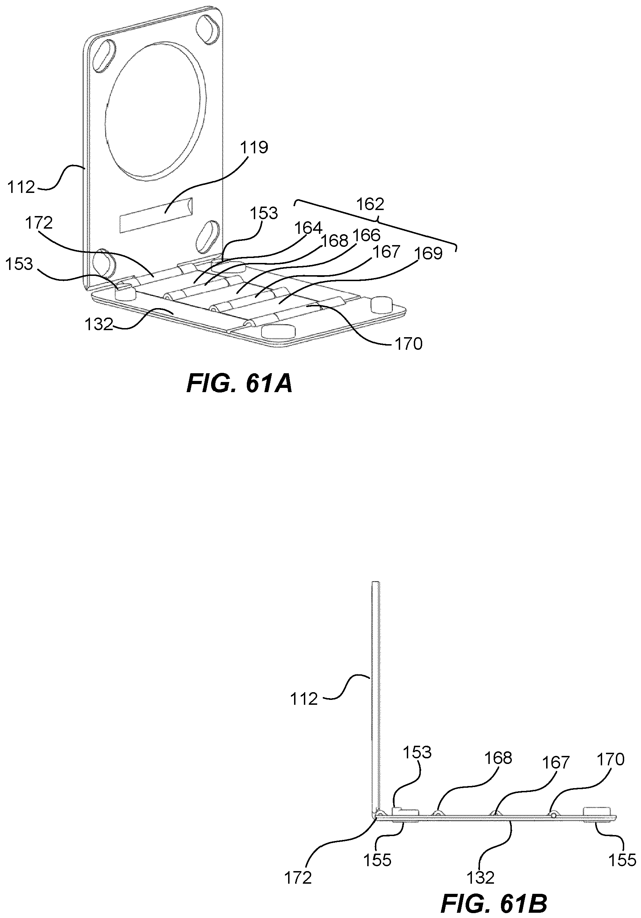

FIGS. 61A and 61B are, respectively, a rear perspective view and a side view of the mount introduced in FIG. 57, while the mount is in a CD slot attachment position, during which the entirety of the neck 162 (including the first neck portion 164, the second neck portion 166, and the third neck portion 169) is positioned within the recess 140 within the base 132 and is coplanar with the base 132, and the based 132 and the neck 162 are generally perpendicular to the main body 112. When the mount 102 is in the CD slot attachment position shown in FIGS. 61A and 61B, the base 132 and the neck 162 (including the first, second and second neck portions 164, 166 and 169) both extend generally perpendicularly from an edge of the main body 112 so that a majority of the base 132 and a majority of the neck 162 can be inserted into a CD slot of a stereo installed in a dashboard of a vehicle. When the mount 102 is in the CD slot attachment position shown in FIGS. 61A and 61B, a portable electronic device can be selectively attached to the main body 112 of the multi-use mount 102, either before or after the mount 102 is inserted into a CD slot of a stereo installed in a dashboard of a vehicle. In FIGS. 61A and 61B, the main body 112 is shown as extending upward relative to the base 132 and the neck 162. However, it is noted that the entire mount 102 in the configuration of FIGS. 61A and 61B can be rotated 180 degrees so that the main body 112 instead extends downward relative to the base 132 and the neck 162, and the mount could still be used to attach a smartphone to a CD slot.

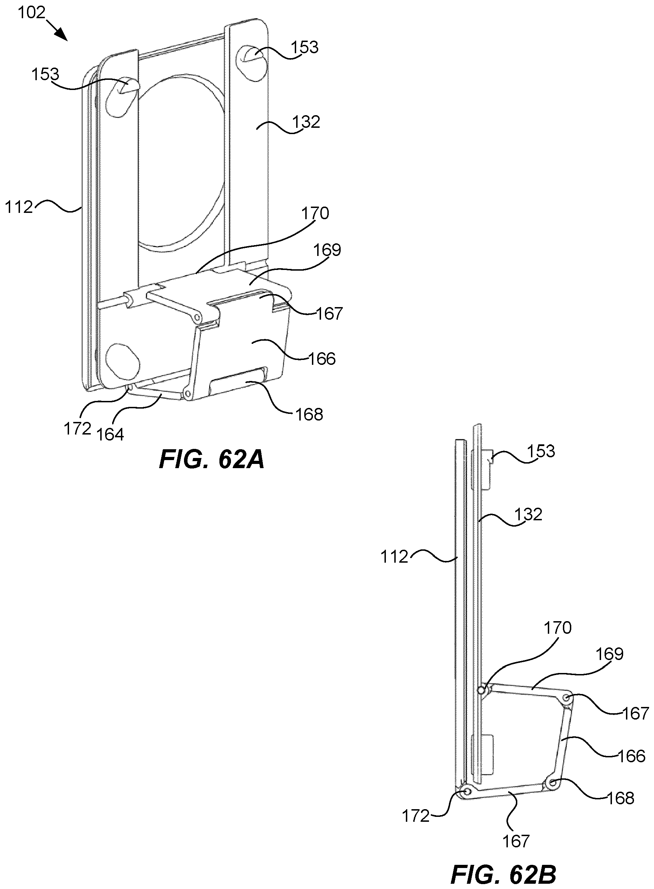

FIGS. 62A and 62B are, respectively, a rear perspective view and a side view of the mount introduced in FIG. 57, while the mount 102 is in a finger loop grip position. In this position, the main body 112 and the base 132 are flush against one another and parallel to one another, and the first neck portion 164, the second neck portion 166, and the third neck portion 169 form a loop within which a user can insert one or more fingers. The loop shown in FIGS. 62A-62B, can alternatively be wrapped around a pole, or a fence, rather than a person's finger(s).

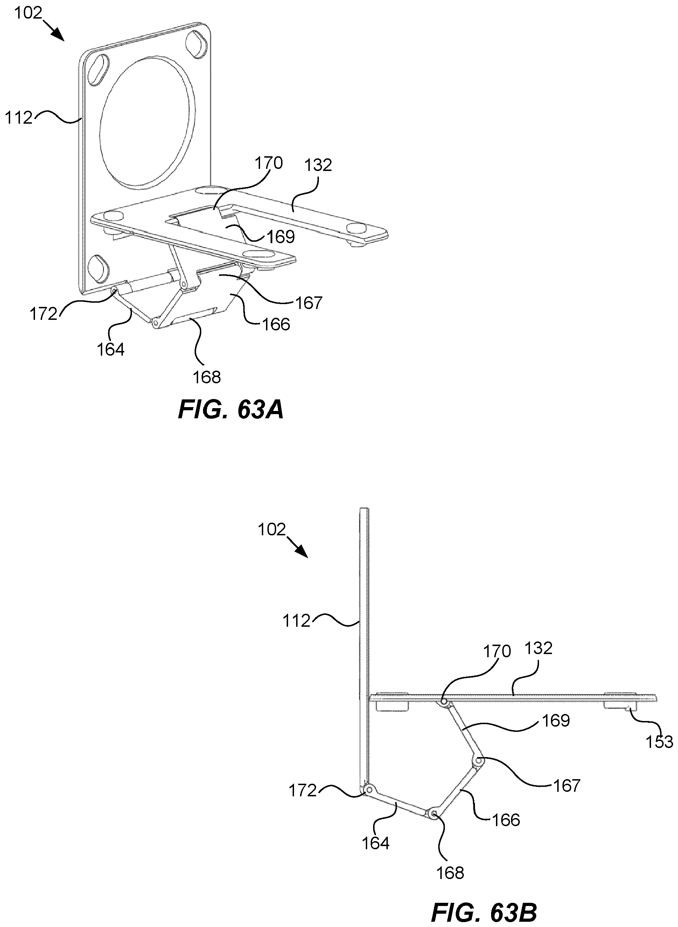

FIGS. 63A and 63B are, respectively, a rear perspective view and a side view of the mount introduced in FIG. 57 in a large diameter pole attachment position. In this position, the main body 112 and the base 132 are generally perpendicular to one another, and the first neck portion 164, the second neck portion 166, and the third neck portion 169, together with a portion of the base, form a loop that can be wrapped around a large diameter pole.

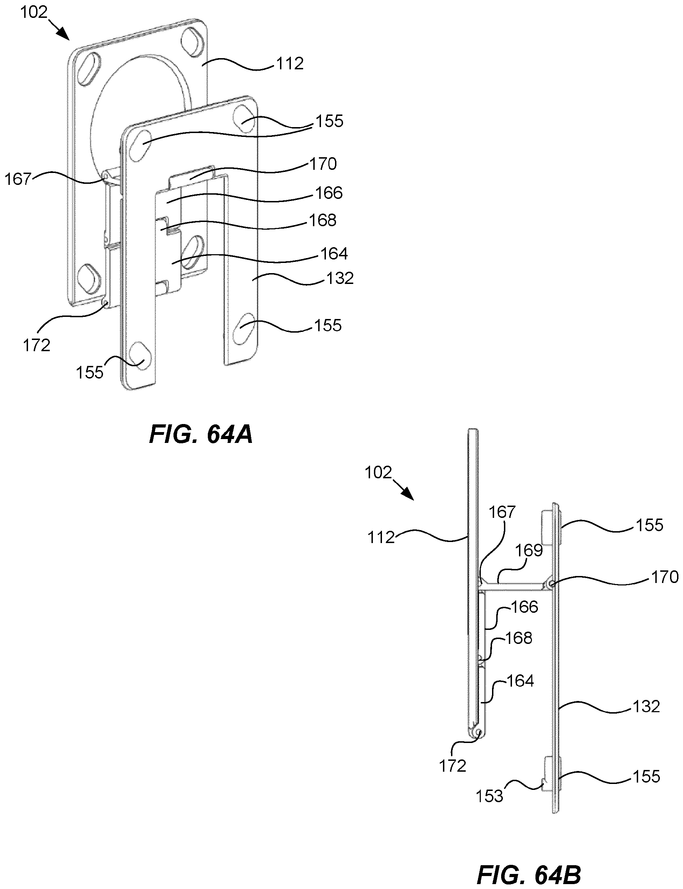

FIGS. 64A and 64B are, respectively, a rear perspective view and a side view of the mount introduced in FIG. 57 in a upright airplane tray attachment position, which is also an airplane pocket attachment position. In this position, the first neck portion 164 and the second neck portion 166 are flat against and parallel to the main body 112. The third neck portion 169 is generally perpendicular to the main body 112, and generally perpendicular to the first and second neck portions 164 and 166. Additionally, the third neck portion is generally perpendicular to the base 132, and the base 132 is generally parallel to the main body 112. In this position, the base 132 can be slipped behind a folded up tray that is located on the backside of an airplane seat, and the third neck portion 169 supports the mount 102 above an edge of the folded up airplane tray. Alternatively, in this position, the base 132 can be slipped into a magazine or pamphlet pocket that is on the backside of an airplane seat, and the third neck portion 169 supports the mount 102 above an upper edge of magazine or pamphlet pocket.

While not specifically shown in FIGS. 26A through 66B, as was the case with the other embodiments described herein, the main body 112 of each embodiment of the mount 102 can include a magnetic ring 116 (or some other shaped magnet or array of magnets) that enables the main body 112 of the mount 102 to be magnetically coupled to a smartphone that includes a built in MagSafe magnet, has a MagSafe adaptor, has some other magnet (e.g., a magnetic ring or plate) attached to a backside of the smartphone, or to a smartphone being held by a phone case that has a MagSafe magnet (or some other shaped magnet or array of magnets) built into the phone case or attached to the phone case, or adhered to a backside of a smartphone.

While not specifically shown and described, the mount 102 introduced in FIG. 48 and the mount introduced in FIG. 57 can be positioned in most of the other various positions described above with reference to the discussion of the other embodiments of the mount 102, e.g., discussed with reference to FIGS. 1A through 11G, but not limited thereto. It is also within the scope of the embodiments described herein for one or more of the hinge type joints, such as the main body-to-neck hinge 172 to be replaced with a ball joint (similar to ball joint 173 discussed above) in order to enable the main body 112 (and a smartphone or other type of portable electronic device 202 attached thereto) to be rotated with three degrees of freedom, thereby increasing the different viewing angles and image capture angles that a smartphone or other type of portable electronic device 202 can be held at using the mount 102 introduced in FIG. 48 or introduced in FIG. 57. Further, it is noted that the mount 102 introduced in FIG. 48 and the mount 102 introduced in FIG. 57 can be implemented as a wireless charging version of the multi-use mount, in a similar manner as was described above with reference to FIGS. 19A-19J, by integrating a wireless charger 186 into the main body 112 of the mount. Any embodiment of the mount 102 that does not include an integrated wireless charger 186, can be used the wireless charging adaptor 206 described above with reference to FIGS. 20A-J. In each of the above described embodiments of the mount 102, the magnets 155 on the base 132 enable the mount 102 to be used to magnetically mount a smartphone (that is magnetically attached to the mount 102) to a ferromagnetic metal surface, e.g., of a refrigerator, or of a metal plate adhered to a surface or object, but not limited thereto.

As can be appreciated from the above description, in accordance with certain embodiments, the various embodiments of the mount 102 provide for at least ten different uses or configurations (aka positions), and thus, can also be referred to as a ten-in-one mount or a 10-in-1 mount. The at least ten different configurations (aka positions) include, but are not limited to:
- a standing easel mount (e.g., as shown in FIGS. 3A-3K, 19J, 20J, 26A-26B, 37A-37B, 50A-50B, and 59A-59B),
- a high easel leaning mount (e.g., as shown in 10A-10G), where the mount can be used to hold a smartphone in a portrait orientation at an angle on a tabletop or other horizontal surface,
- a vent mount (e.g., as shown in FIGS. 4A-4G, 22A-22B, 27A-27B, 28A-28B, 38A-38B, 39A-39B, 51A-51B, and 60A-60B),
- a CD slot mount (e.g., as shown in FIGS. 5A-5I, 23A-23B, 29A-29B, 30A-30B, 40A-40B, 52A-52B, and 61A-61B),
- a small pole attachment mount (e.g., as shown in FIGS. 6A-6G, 31A-31B, 53A-53B, and 62A-62B),
- a large pole attachment mount (e.g., as shown in FIGS. 7A-7G, 32A-32B. 44A-44B, 54A-54B, and 63A-63B),
- a finger loop grip (e.g., as shown in FIGS. 8A-8G, 31A-31B, 33A-33B, 42A-42B, 43A-43B, 53A-53B, and 62A-62B),
- an upright folding tray mount (e.g., as shown in FIGS. 9A-9G, 34A-34B, 46A-46B, 47A-47B, 56A-56B, and 64A-64B),
- a first type of airplane pocket mount (e.g., as shown in FIGS. 10A-10G),
- a second type of airplane pocket mount (e.g., as shown in FIGS. 11A-11G, 34A-34B, and 64A-64B),
- a side grip holder (e.g., as shown in FIGS. 6A-6G, 45A-45B, and 55A-55B),
- a selfie stick (e.g., as shown in FIGS. 1A-1D, 21, 24, 35, 48, and 57),
- a mount that can be held between a pair of adjacent digits (aka fingers) of a person's hand, or between a thumb and finger (e.g., as shown in FIGS. 5A-5I, 23A-23B, 29A-29B, and 30A-30B), and
- a magnetic mount to a ferromagnetic metal surface (e.g., as shown in FIGS. 2H-2J, 19A-19D, 25A-25B, 36A-36B, 49A-49B, 58A-58B).

The mount 102 may also be used with other types of portable electronic devices, besides smartphones, such as, but not limited to, relatively small music and/or video players and relatively small music and/or video recorders. Examples of such relatively small video recorders include action video cameras, web cameras, 360 degree cameras, and the like. These are just a few examples of the other types of portable electronic devices that the mount 102 can be used with, which examples are not intended to be all encompassing.

In accordance with certain embodiments, any one of the bases 132 described herein, or a portion thereof (such as the first base portion 134 or the second base portion 136), can include a threaded orifice or opening (aka a screw hole) configured to receive a tripod screw that projects from an upper portion of a tripod. Such a screw hole in the base 132 of the mount 102, or a portion thereof, enables the mount 102 to be attached to a tripod that has a tripod screw, and thereby enables a smartphone (or other type of portable electronic device) to which the mount 102 is attached to be mounted to the tripod.

The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. For example, the neck 162 can include more than three neck portions that are connected by more than one intra-neck hinge. For example, it would also be possible for the neck 162 to include more the three portions, and more than two intra-neck hinges. For another example, the base 132 can include more than two base portions that are connected by more than one intra-base hinge. More specifically, the base can include first, second and third base portions and two intra-base hinges, which would enable the mount 102 to have even more possible different positions. It would also be possible for the base 132 to include more the three portions, and more than two intra-base hinges. For still another example, the main body 112 can include two or more main body portions that are connected by one or more intra-main body hinge(s). Further, as noted above, one or more of the hinges described herein can be replaced with another type of joint, such as a ball joint, to increase the range of motion of the components relative to one another.

The aspects of the disclosure herein were chosen and described in order to best explain the principles of the disclosure and the practical application, and to enable others of ordinary skill in the art to understand the disclosure with various modifications as are suited to the particular use contemplated.

The disclosure has been described in conjunction with various embodiments. However, other variations and modifications to the disclosed embodiments can be understood and effected from a study of the drawings, the disclosure, and the appended claims, and such variations and modifications are to be interpreted as being encompassed by the appended claims. In the claims, the word "comprising" does not exclude other elements or steps, and the indefinite article "a" or "an" does not exclude a plurality.

For purposes of this document, reference in the specification to "an embodiment," "one embodiment," "some embodiments," or "another embodiment" may be used to describe different embodiments or the same embodiment.

For purposes of this document, reference in the specification to the terms "about" and "generally" when used herein to refer to measurements or angles, mean plus or minus 10 percent of a specified value.

For purposes of this document, a connection may be a direct connection or an indirect connection (e.g., via one or more other parts). In some cases, when an element is referred to as being connected or coupled to another element, the element may be directly connected to the other element or indirectly connected to the other element via intervening elements. When an element is referred to as being directly connected to another element, then there are no intervening elements between the element and the other element.

For purposes of this document, without additional context, use of numerical terms such as a "first" object, a "second" object, and a "third" object may not imply an ordering of objects, but may instead be used for identification purposes to identify different objects.

The foregoing detailed description has been presented for purposes of illustration and description. It is not intended to be exhaustive or to limit the subject matter claimed herein to the precise form(s) disclosed. Many modifications and variations are possible in light of the above teachings. The described embodiments were chosen in order to best explain the principles of the disclosed technology and its practical application to thereby enable others skilled in the art to best utilize the technology in various embodiments and with various modifications as are suited to the particular use contemplated. It is intended that the scope be defined by the claims appended hereto.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### Parts List

- 102: multi-use mount (aka mount)
- 112: main body
- 113: socket
- 114: front plate
- 115: socket section
- 117: socket section
- 116: magnetic ring
- 118: rear plate
- 119: cavity
- 120: ring shaped groove
- 123: cavity
- 132: base
- 134: first base portion
- 136: second base portion
- 138: intra-base hinge
- 140: recess
- 144: opening
- 146: opening
- 150: trough
- 151: first trough portion
- 152: second trough portion
- 153: hook
- 155: magnet
- 162: neck
- 164: first neck portion
- 165: stud
- 166: second neck portion
- 167: second intra-neck hinge
- 168: intra-neck hinge
- 169: third neck portion
- 170: base-to-neck hinge (aka neck-to-base hinge)
- 172: main body-to-neck hinge (aka neck-to-main body hinge)
- 173: main body-to-neck ball joint (aka neck-to-main body ball joint)
- 175: spherical ball
- 182: pentagonal loop
- 184: square loop
- 186: wireless charger
- 188: female connector plug
- 192: protrusion
- 193: opening
- 196: connector cable
- 198: male end
- 202: portable electronic device (e.g., smartphone)
- 206: wireless charging adaptor
- 218: female connector plug
- 216: magnetic ring
- 220: charging system
- 226: ferromagnetic metal ring

## Claims

1. A multi-use mount (102) adapted to hold a portable electronic device (202) in a plurality of different positions, the multi-use mount (102) comprising:
a main body (112) configured to be selectively attached to the portable electronic device (202) to thereby attach the multi-use mount (102) to the portable electronic device (202);
a neck (162) pivotably connected to the main body (112); and
a base (132) pivotably connected to the neck (162), the base (132) including one or more magnets (155) configured to enable the multi-use mount (102), and the portable electronic device (202) attached thereto, to be selectively magnetically attached to a ferromagnetic metal surface or a magnetic surface;
wherein the multi-use mount (102) is configured to be positioned in the plurality of different positions by pivoting at least a portion of at least one of the main body (112), the neck (162), or the base (132), relative to at least a further portion of at least one of the main body (102), the neck (162), or the base (132);
wherein the plurality of different positions include at least a closed position and a standing easel position;
wherein when the multi-use mount (102) is in the closed position at least a portion of the base (132) is flush against at least a portion of the main body (102);
wherein when the multi-use mount (102) is in the standing easel position the main body (112) is supported by the neck (162) above the base (132).

2. The multi-use mount (102) of claim 1, wherein:
the plurality of different positions also include and a vent louver attachment position; and
when the multi-use mount (102) is in the vent louver attachment position at least a portion of the base (132) extends generally perpendicularly relative to the main body (112) and is configured to be attached to a horizontal louver of a vent of a vehicle.

3. The multi-use mount (102) of claim 2, further comprising:
first and second hooks (153) protruding from the base (132); and
a recess (140) in the base (132) between where the first hook (153) protrudes and the second hook (153) protrudes;
wherein the first and the second hooks (153) are configured to selectively hook onto a horizontal louver of a vent of a vehicle to thereby mount the multi-use mount (102), and the portable electronic device (202) attached thereto, to the horizontal louver of the vent of the vehicle when the multi-use mount (102) is in the vent louver attachment position; and
wherein the recess (140) is configured to enable the first and second hooks (153) to be placed on either side of, and thereby straddle, a vertical component of the vent of the vehicle, when the first and second hooks (153) are hooked onto the horizontal louver of the vent of the vehicle.

4. The multi-use mount (102) of claim 3, further comprising:
first and second cavities (119) in the main body (112) that are configured to accept the first and second hooks (153) when the multi-use mount (102) is in the closed position.

5. The multi-use mount (102) of any one of claims 1 to 3, wherein:
the base (132) is pivotably connected to the neck (162) by a base-to-neck hinge (170) located at an innermost end of a recess (140) in the base (132).

6. The multi-use mount (102) of claims 1 to 3, wherein
the base (132) is pivotably connected to the neck (162) by a base-to-neck hinge (170) located at an outer peripheral end of the base (132).

7. The multi-use mount (102) of any one of claims 1 through 6, wherein:
the main body (112) includes a magnetic portion (116) configured to selectively magnetically attach the main body (112) to a magnetic portion of the portable electronic device (202), or to a magnetic portion of a case for the portable electronic device (202).

8. The multi-use mount (102) of any one of claims 1 through 7, wherein when the multi-use mount (102) is in the closed position a peripheral footprint of the main body (112) has same length and width dimensions as a peripheral footprint of the base (132).

9. The multi-use mount (102) of any one of claims 1 through 8, wherein:
the base (132) includes a trough (150) that is configured to accept at least a portion of the neck (162) when the multi-use mount (102) is in the closed position; and
at least a majority of the neck (162) is sandwiched between the main body (112) and the base (132) when the multi-use mount (102) is in the closed position.

10. The multi-use mount (102) of any one of claims 1 through 9, wherein:
the neck (162) includes a first neck portion (164) pivotably connected to a second neck portion (166); and
the base (132) includes a first base portion (134) pivotally connected to a second base portion (136).

11. The multi-use mount (102) of any one of claims 1 through 10, wherein a thickness of the multi-use mount (102) is less than 10 millimeters when the multi-use mount (102) is in the closed position.

12. The multi-use mount (102) of any one of claims 1 through 11, wherein the neck (162) is pivotably connected to the main body (112) by a ball joint (173) that enables to main body (112) to be rotated relative to the neck (162) with three degrees of freedom.

13. The multi-use mount (102) of any one of claims 1 through 12, wherein the plurality of different positions further include at least a compact-disc (CD) slot attachment position, a selfie stick position, a pole attachment position, a finger loop grip position, and an airplane tray or pocket attachment position.

14. The multi-use mount (102) of claim 1, wherein the main body (112) includes a wireless charger (186) that is configured to charge a portable electronic device (202) that is at least one of held by or attached to the multi-use mount (102).

15. A system (220), comprising:
the multi-use mount (102) according to any one of claims 1 through 13;
a wireless charging adaptor (206) configured to be selectively attached to the multi-use mount (102) such that the wireless charging adaptor (206) is sandwiched between the main body (112) of the multi-use mount (102) and a portable electronic device (202) that is to be held by the multi-use mount (102) and charged by the wireless charging adaptor (206);
wherein the multi-use mount (102) is capable of being configured in at least a closed position and a standing easel position, when the wireless charging adaptor (206) is attached to the multi-use mount (102), as well as when the wireless charging adaptor (206) is detached from the multi-use mount (102).
